# EUROPEAN PATENT APPLICATION

(11) **EP 4 608 039 A1**
(43) Date of publication of application: **27.08.2025**
(21) Application number: 23879119.8
(22) Date of filing: 17.10.2023
(51) Int. Cl.: H04W 72/23

(54) **COMMUNICATION METHOD AND RELATED APPARATUS**

(30) Priority: 18.10.2022 CN 202211272269
(71) Applicant: Beijing Unisoc Communications Technology Co., Ltd, Beijing 100083 (CN)
(72) Inventor: ZHOU, Huan, Beijing 100083 (CN)
(74) Representative: Mewburn Ellis LLP
(86) International application number: PCT/CN2023/125051
(87) International publication number: WO 2024/083131

(57) **Abstract**

Embodiments of the present disclosure provide a communication method and a related apparatus. The method includes the following. Time-domain resource indication information is received, where the time-domain resource indication information indicates a time-domain resource location for channel transmission. A time-domain resource for channel transmission in at least one time-domain resource is determined according to the time-domain resource location for channel transmission, where the at least one time-domain resource includes at least one first time-domain resource, a frequency-domain resource corresponding to the first time-domain resource includes a downlink (DL) frequency-domain resource and an uplink (UL) frequency-domain resource, and the UL frequency-domain resource corresponding to the first time-domain resource does not overlap in a frequency domain with the DL frequency-domain resource corresponding to the first time-domain resource. At least one channel transmission is performed based on the time-domain resource for channel transmission in the at least one time-domain resource. Through the present disclosure, in the case where a frequency-domain resource corresponding to a time-domain resource includes a UL frequency-domain resource and a DL frequency-domain resource that do not overlap with each other in the frequency domain, repetition can be effectively performed.

## Description

### CROSS-REFERENCE TO RELATED APPLICATION(S)

This application claims priority to and the benefit of Chinese patent application No. 202211272269.6, filed October 18, 2022 and entitled "COMMUNICATION METHOD AND RELATED APPARATUS", the entire disclosure of which is hereby incorporated by reference.

### TECHNICAL FIELD

This disclosure relates to the field of communication technology, in particular to a communication method and a related apparatus.

### BACKGROUND

In a time division duplexing (TDD) system, a terminal device and a network device perform uplink (UL) communication in a UL slot and perform downlink (DL) communication in a DL slot. If the terminal device needs to perform DL communication in the UL slot, the terminal device needs to wait for the DL slot to perform DL communication, which will easily lead to transmission delay, thereby failing to meet the needs of low-latency services or high-speed services.

At present, in order to solve the above problem, sub-band full duplex (SBFD) is introduced in the TDD system, that is, a frequency-domain resource corresponding to the same slot is divided into a UL frequency-domain resource and a DL frequency-domain resource. For example, a certain UL slot is taken as an example, the UL slot corresponds to a UL frequency-domain resource and a DL frequency-domain resource, and the UL frequency-domain resource does not overlap in a frequency domain with the DL frequency-domain resource. As such, when the terminal device needs to perform UL communication in the UL slot, the terminal device can perform UL communication in the UL frequency-domain resource corresponding to the UL slot, and when the terminal device needs to perform DL communication in the UL slot, the terminal device can perform DL communication on the DL frequency-domain resource corresponding to the UL slot without waiting. For another example, a certain DL slot is taken as an example. If a frequency-domain resource corresponding to the DL slot is not divided into a UL frequency-domain resource and a DL frequency-domain resource, the terminal device can only perform DL communication but not perform UL communication in the DL slot.

However, after the introduction of the SBFD, frequency-domain resources corresponding to some slots may be divided into a UL frequency-domain resource and a DL frequency-domain resource, while frequency-domain resources corresponding to some other slots may not be divided into a UL frequency-domain resource and a DL frequency-domain resource. Therefore, how to perform repetition is a problem to be solved.

### SUMMARY

Embodiments of the present disclosure provide a communication method and a related apparatus. Through the present disclosure, in the case where a frequency-domain resource corresponding to a time-domain resource includes a UL frequency-domain resource and a DL frequency-domain resource that do not overlap with each other in a frequency domain, repetition can be effectively performed.

In a first aspect, embodiments of the present disclosure provide a communication method. The method includes the following. Time-domain resource indication information is received, where the time-domain resource indication information indicates a time-domain resource location for channel transmission. A time-domain resource for channel transmission in at least one time-domain resource is determined according to the time-domain resource location for channel transmission, where the at least one time-domain resource includes at least one first time-domain resource, a frequency-domain resource corresponding to the first time-domain resource includes a downlink (DL) frequency-domain resource and an uplink (UL) frequency-domain resource, and the UL frequency-domain resource corresponding to the first time-domain resource does not overlap in a frequency domain with the DL frequency-domain resource corresponding to the first time-domain resource. At least one channel transmission is performed based on the time-domain resource for channel transmission in the at least one time-domain resource.

According to the first aspect, in a possible implementation, the time-domain resource indication information indicates the time-domain resource location for channel transmission as follows. The time-domain resource indication information indicates a location of a time-domain resource for channel transmission in the first time-domain resource and/or a location of a time-domain resource for channel transmission in a second time-domain resource. A frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

According to the first aspect, in a possible implementation, the time-domain resource indication information contains first time-domain resource location indication and a first time length. Alternatively, the time-domain resource indication information contains second time-domain resource location indication and a second time length. Alternatively, the time-domain resource indication information contains the first time-domain resource location indication, the first time length, the second time-domain resource location indication, and the second time length. The first time-domain resource location indication indicates a start time-domain resource of the time-domain resource for channel transmission in the first time-domain resource. The second time-domain resource location indication indicates a start time-domain resource of the time-domain resource for channel transmission in the second time-domain resource. The first time length is the length of the time-domain resource for channel transmission in the first time-domain resource. The second time length is the length of the time-domain resource for channel transmission in the second time-domain resource.

According to the first aspect, in a possible implementation, the time-domain resource for channel transmission in the at least one time-domain resource is determined according to the time-domain resource location for channel transmission as follows. The time-domain resource for channel transmission in the at least one first time-domain resource is determined according to the start time-domain resource of the time-domain resource for channel transmission in the first time-domain resource and the first time length.

According to the first aspect, in a possible implementation, in the case where the time-domain resource indication information contains the second time-domain resource location indication and the second time length, the method further includes the following. The start time-domain resource of the time-domain resource for channel transmission in the first time-domain resource is determined according to the second time-domain resource location indication and a first time location offset. Additionally/alternatively, the first time length is determined according to the second time length and a first time length offset.

According to the first aspect, in a possible implementation, the method further includes the following. First time location offset indication information is received, where the first time location offset indication information indicates the first time location offset. Alternatively, first time length offset indication information is received, where the first time length offset indication information indicates the first time length offset.

According to the first aspect, in a possible implementation, the at least one time-domain resource further includes at least one second time-domain resource.

According to the first aspect, in a possible implementation, the time-domain resource for channel transmission in the at least one time-domain resource is determined according to the time-domain resource location for channel transmission as follows. A time-domain resource for channel transmission in the at least one second time-domain resource is determined according to the start time-domain resource of the time-domain resource for channel transmission in the second time-domain resource and the second time length. The second time length is the length of the time-domain resource for channel transmission in the second time-domain resource.

According to the first aspect, in a possible implementation, in the case where the time-domain resource indication information contains first time-domain resource location indication and a first time length, the method further includes the following. The start time-domain resource of the time-domain resource for channel transmission in the second time-domain resource is determined according to the first time-domain resource location indication and a second time location offset. Additionally/alternatively, the second time length is determined according to the first time length and a second time length offset.

According to the first aspect, in a possible implementation, the method further includes the following. Second time location offset indication information is received, where the second time location offset indication information indicates the second time location offset. Alternatively, second time length offset indication information is received, where the second time length offset indication information indicates the second time length offset.

In a second aspect, embodiments of the present disclosure provide a communication method. The method includes the following. Frequency-domain resource indication information is received, where the frequency-domain resource indication information indicates a frequency-domain resource location for channel transmission. A frequency-domain resource for channel transmission in frequency-domain resources respectively corresponding to at least one time-domain resource is determined according to the frequency-domain resource location for channel transmission, where the at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource. At least one channel transmission is performed based on the frequency-domain resource for channel transmission in the frequency-domain resources respectively corresponding to the at least one time-domain resource.

According to the second aspect, in a possible implementation, the frequency-domain resource indication information indicates the frequency-domain resource location for channel transmission as follows. The frequency-domain resource indication information indicates a location of a frequency-domain resource for channel transmission in the frequency-domain resource corresponding to the first time-domain resource and/or a location of a frequency-domain resource for channel transmission in a frequency-domain resource corresponding to a second time-domain resource. The frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

According to the second aspect, in a possible implementation, the frequency-domain resource indication information contains first frequency-domain resource location indication and a first frequency-domain resource bandwidth. Alternatively, the frequency-domain resource indication information contains second frequency-domain resource location indication and a second frequency-domain resource bandwidth. Alternatively, the frequency-domain resource indication information contains the first frequency-domain resource location indication, the first frequency-domain resource bandwidth, the second frequency-domain resource location indication, and the second frequency-domain resource bandwidth. The first frequency-domain resource location indication indicates a start frequency-domain resource of the frequency-domain resource for channel transmission in the frequency-domain resource corresponding to the first time-domain resource. The second frequency-domain resource location indication indicates a start frequency-domain resource of the frequency-domain resource for channel transmission in the frequency-domain resource corresponding to the second time-domain resource. The first frequency-domain resource bandwidth is a bandwidth of the frequency-domain resource for channel transmission in the frequency-domain resource corresponding to the first time-domain resource. The second frequency-domain resource bandwidth is a bandwidth of the frequency-domain resource for channel transmission in the frequency-domain resource corresponding to the second time-domain resource.

According to the second aspect, in a possible implementation, the frequency-domain resource for channel transmission in the frequency-domain resources respectively corresponding to the at least one time-domain resource is determined according to the frequency-domain resource location for channel transmission as follows. The frequency-domain resource for channel transmission in the frequency-domain resource corresponding to the at least one first time-domain resource is determined according to the start frequency-domain resource of the frequency-domain resource for channel transmission in the frequency-domain resource corresponding to the first time-domain resource and the first frequency-domain resource bandwidth.

According to the second aspect, in a possible implementation, in the case where the frequency-domain resource indication information contains the second frequency-domain resource location indication and the second frequency-domain resource bandwidth, the method further includes the following. The start frequency-domain resource of the frequency-domain resource for channel transmission in the frequency-domain resource corresponding to the first time-domain resource is determined according to the second frequency-domain resource location indication and a first frequency-domain location offset. Additionally/alternatively, the first frequency-domain resource bandwidth is determined according to the second frequency-domain resource bandwidth and a first frequency-domain bandwidth offset.

According to the second aspect, in a possible implementation, the method further includes the following. First frequency-domain location offset indication information is received, where the first frequency-domain location offset indication information indicates the first frequency-domain location offset. Alternatively, first frequency-domain bandwidth offset indication information is received, where the first frequency-domain bandwidth offset indication information indicates the first frequency-domain bandwidth offset.

According to the second aspect, in a possible implementation, the at least one time-domain resource further includes at least one second time-domain resource.

According to the second aspect, in a possible implementation, the frequency-domain resource for channel transmission in the frequency-domain resources respectively corresponding to the at least one time-domain resource is determined according to the frequency-domain resource location for channel transmission as follows. The frequency-domain resource for channel transmission in the frequency-domain resource corresponding to the at least one second time-domain resource is determined according to the start frequency-domain resource of the frequency-domain resource for channel transmission in the frequency-domain resource corresponding to the second time-domain resource and the second frequency-domain resource bandwidth. The second frequency-domain resource bandwidth is a bandwidth of the frequency-domain resource for channel transmission in the frequency-domain resource corresponding to the second time-domain resource.

According to the second aspect, in a possible implementation, in the case where the frequency-domain resource indication information contains first frequency-domain resource location indication and a first frequency-domain resource bandwidth, the method further includes the following. The start frequency-domain resource of the frequency-domain resource for channel transmission in the frequency-domain resource corresponding to the second time-domain resource is determined according to the first frequency-domain location indication and a second frequency-domain location offset. Additionally/alternatively, the second frequency-domain resource bandwidth is determined according to the first frequency-domain resource bandwidth and a second frequency-domain bandwidth offset.

According to the second aspect, in a possible implementation, the method further includes the following. Second frequency-domain location offset indication information is received, where the second frequency-domain location offset indication information indicates the second frequency-domain location offset. Alternatively, second frequency-domain bandwidth offset indication information is received, where the second frequency-domain bandwidth offset indication information indicates the second frequency-domain bandwidth offset.

In a third aspect, embodiments of the present disclosure provide a communication method. The method includes the following. Frequency hopping (FH) offset information of a frequency-domain resource for channel transmission is received. A frequency-domain resource for channel transmission in frequency-domain resources corresponding to at least two time-domain resources is determined according to the FH offset information, where the at least two time-domain resources include at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource. At least one channel transmission is performed based on the frequency-domain resource for channel transmission in the frequency-domain resources corresponding to the at least two time-domain resources.

According to the third aspect, in a possible implementation, the FH offset information indicates at least one of a first FH offset, a second FH offset, a third FH offset, or a fourth FH offset. The first FH offset is an FH offset of a frequency-domain resource for channel transmission between a first time-domain resource and a first time-domain resource. The second FH offset is an FH offset of a frequency-domain resource for channel transmission between a first time-domain resource and a second time-domain resource. The third FH offset is an FH offset of a frequency-domain resource for channel transmission between a second time-domain resource and a first time-domain resource. The fourth FH offset is an FH offset of a frequency-domain resource for channel transmission between a second time-domain resource and a second time-domain resource. A frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

According to the third aspect, in a possible implementation, in the case where the FH offset indicates the first FH offset, the method further includes the following. At least one of the second FH offset, the third FH offset, or the fourth FH offset is determined according to the first FH offset.

According to the third aspect, in a possible implementation, the at least two time-domain resources include at least one second time-domain resource.

In a fourth aspect, embodiments of the present disclosure provide a communication method. The method includes the following. Time-domain resource indication information is sent, where the time-domain resource indication information indicates a time-domain resource location for channel transmission. At least one channel transmission is performed based on a time-domain resource for channel transmission in at least one time-domain resource. A location of the time-domain resource for channel transmission in the at least one time-domain resource corresponds to the time-domain resource location for channel transmission. The at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

According to the fourth aspect, in a possible implementation, the time-domain resource indication information indicates the time-domain resource location for channel transmission as follows. The time-domain resource indication information indicates a location of a time-domain resource for channel transmission in the first time-domain resource and/or a location of a time-domain resource for channel transmission in a second time-domain resource. A frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

According to the fourth aspect, in a possible implementation, the time-domain resource indication information contains first time-domain resource location indication and a first time length. Alternatively, the time-domain resource indication information contains second time-domain resource location indication and a second time length. Alternatively, the time-domain resource indication information contains the first time-domain resource location indication, the first time length, the second time-domain resource location indication, and the second time length. The first time-domain resource location indication indicates a start time-domain resource of the time-domain resource for channel transmission in the first time-domain resource. The second time-domain resource location indication indicates a start time-domain resource of the time-domain resource for channel transmission in the second time-domain resource. The first time length is the length of the time-domain resource for channel transmission in the first time-domain resource. The second time length is the length of the time-domain resource for channel transmission in the second time-domain resource.

According to the fourth aspect, in a possible implementation, the method further includes the following. First time location offset indication information is sent, where the first time location offset indication information indicates a first time location offset, and the first time location offset is a time interval between the start time-domain resource of the time-domain resource for channel transmission in the second time-domain resource and the start time-domain resource of the time-domain resource for channel transmission in the first time-domain resource. Alternatively, first time length offset indication information is sent, where the first time length offset indication information indicates a first time length offset, and the first time length offset is a difference between the second time length and the first time length.

According to the fourth aspect, in a possible implementation, the at least one time-domain resource further includes at least one second time-domain resource.

According to the fourth aspect, in a possible implementation, the method further includes the following. Second time location offset indication information is sent, where the second time location offset indication information indicates a second time location offset, and the second time location offset is a time interval between the start time-domain resource of the time-domain resource for channel transmission in the first time-domain resource and the start time-domain resource of the time-domain resource for channel transmission in the second time-domain resource. Alternatively, second time length offset indication information is sent, where the second time length offset indication information indicates a second time length offset, and the second time length offset is a difference between the first time length and the second time length.

In a fifth aspect, embodiments of the present disclosure provide a communication method. The method includes the following. Frequency-domain resource indication information is sent, where the frequency-domain resource indication information indicates a frequency-domain resource location for channel transmission. At least one channel transmission is performed based on a frequency-domain resource for channel transmission in frequency-domain resources respectively corresponding to at least one time-domain resource. A location of the frequency-domain resource for channel transmission in the frequency-domain resources respectively corresponding to the at least one time-domain resource corresponds to the frequency-domain resource location for channel transmission. The at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

According to the fifth aspect, in a possible implementation, the frequency-domain resource indication information indicates the frequency-domain resource location for channel transmission as follows. The frequency-domain resource indication information indicates a location of a frequency-domain resource for channel transmission in the frequency-domain resource corresponding to the first time-domain resource and/or a location of a frequency-domain resource for channel transmission in a frequency-domain resource corresponding to a second time-domain resource. The frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

According to the fifth aspect, in a possible implementation, the frequency-domain resource indication information contains first frequency-domain resource location indication and a first frequency-domain resource bandwidth. Alternatively, the frequency-domain resource indication information contains second frequency-domain resource location indication and a second frequency-domain resource bandwidth. Alternatively, the frequency-domain resource indication information contains the first frequency-domain resource location indication, the first frequency-domain resource bandwidth, the second frequency-domain resource location indication, and the second frequency-domain resource bandwidth. The first frequency-domain resource location indication indicates a start frequency-domain resource of the frequency-domain resource for channel transmission in the frequency-domain resource corresponding to the first time-domain resource. The second frequency-domain resource location indication indicates a start frequency-domain resource of the frequency-domain resource for channel transmission in the frequency-domain resource corresponding to the second time-domain resource. The first frequency-domain resource bandwidth is a bandwidth of the frequency-domain resource for channel transmission in the frequency-domain resource corresponding to the first time-domain resource. The second frequency-domain resource bandwidth is a bandwidth of the frequency-domain resource for channel transmission in the frequency-domain resource corresponding to the second time-domain resource.

According to the fifth aspect, in a possible implementation, the method further includes the following. First frequency-domain location offset indication information is sent, where the first frequency-domain location offset indication information indicates a first frequency-domain location offset, and the first frequency-domain location offset is a bandwidth interval between the start frequency-domain resource of the frequency-domain resource for channel transmission in the frequency-domain resource corresponding to the second time-domain resource and the start frequency-domain resource of the frequency-domain resource for channel transmission in the frequency-domain resource corresponding to the first time-domain resource. Alternatively, first frequency-domain bandwidth offset indication information is sent, where the first frequency-domain bandwidth offset indication information indicates a first frequency-domain bandwidth offset, and the first frequency-domain bandwidth offset is a difference between the second frequency-domain resource bandwidth and the first frequency-domain resource bandwidth.

According to the fifth aspect, in a possible implementation, the at least one time-domain resource further includes at least one second time-domain resource.

According to the fifth aspect, in a possible implementation, the method further includes the following. Second frequency-domain location offset indication information is sent, where the second frequency-domain location offset indication information indicates a second frequency-domain location offset, and the second frequency-domain location offset is a bandwidth interval between the start frequency-domain resource of the frequency-domain resource for channel transmission in the frequency-domain resource corresponding to the first time-domain resource and the start frequency-domain resource of the frequency-domain resource for channel transmission in the frequency-domain resource corresponding to the second time-domain resource. Alternatively, second frequency-domain bandwidth offset indication information is sent, where the second frequency-domain bandwidth offset indication information indicates a second frequency-domain bandwidth offset, and the second frequency-domain bandwidth offset is a difference between the second frequency-domain resource bandwidth and the first frequency-domain resource bandwidth.

In a sixth aspect, embodiments of the present disclosure provide a communication method. The method includes the following. FH offset information of a frequency-domain resource for channel transmission is sent. At least one channel transmission is performed based on a frequency-domain resource for channel transmission in frequency-domain resources corresponding to at least two time-domain resources. A location of the frequency-domain resource for channel transmission in the frequency-domain resources corresponding to the at least two time-domain resources corresponds to the FH offset information of the frequency-domain resource for channel transmission. The at least two time-domain resources include at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

According to the sixth aspect, in a possible implementation, the FH offset information indicates at least one of a first FH offset, a second FH offset, a third FH offset, or a fourth FH offset. The first FH offset is an FH offset of a frequency-domain resource for channel transmission between a first time-domain resource and a first time-domain resource. The second FH offset is an FH offset of a frequency-domain resource for channel transmission between a first time-domain resource and a second time-domain resource. The third FH offset is an FH offset of a frequency-domain resource for channel transmission between a second time-domain resource and a first time-domain resource. The fourth FH offset is an FH offset of a frequency-domain resource for channel transmission between a second time-domain resource and a second time-domain resource. A frequency-domain resource corresponding to the second time-domain resource is a UL frequency-domain resource, and a channel is used for a UL transmission; or the frequency-domain resource corresponding to the second time-domain resource is a DL frequency-domain resource, and the channel is used for a DL transmission.

According to the sixth aspect, in a possible implementation, the at least two time-domain resources include at least one second time-domain resource.

In a seventh aspect, embodiments of the present disclosure provide a communication apparatus. The communication apparatus includes a unit configured to perform the method in the first aspect or in any possible implementation of the first aspect, a unit configured to perform the method in the second aspect or in any possible implementation of the second aspect, a unit configured to perform the method in the third aspect or in any possible implementation of the third aspect, a unit configured to perform the method in the fourth aspect or in any possible implementation of the fourth aspect, a unit configured to perform the method in the fifth aspect or in any possible implementation of the fifth aspect, or a unit configured to perform the method in the sixth aspect or in any possible implementation of the sixth aspect.

In an eighth aspect, embodiments of the present disclosure provide a communication apparatus. The communication apparatus includes a processor and a transceiver. The transceiver is configured to receive or sent a signal. The processor is configured to execute computer-executable instructions stored in a memory, to perform the method in the first aspect or in any possible implementation of the first aspect, the method in the second aspect or in any possible implementation of the second aspect, the method in the third aspect or in any possible implementation of the third aspect, the method in the fourth aspect or in any possible implementation of the fourth aspect, the method in the fifth aspect or in any possible implementation of the fifth aspect, or the method in the sixth aspect or in any possible implementation of the sixth aspect.

In a ninth aspect, embodiments of the present disclosure provide a chip. The chip includes a logic circuit and an interface. The logic circuit and the interface are coupled to each other. The interface is configured to input and/or output code instructions. The logic circuit is configured to execute the code instructions, to cause the chip to perform the method in the first aspect or in any possible implementation of the first aspect, the method in the second aspect or in any possible implementation of the second aspect, the method in the third aspect or in any possible implementation of the third aspect, the method in the fourth aspect or in any possible implementation of the fourth aspect, the method in the fifth aspect or in any possible implementation of the fifth aspect, or the method in the sixth aspect or in any possible implementation of the sixth aspect.

In a tenth aspect, the present disclosure provides a module device. The module device includes a communication module, a power module, a storage module, and a chip module. The power module is configured to power the module device. The storage module is configured to store data and instructions. The communication module is configured to perform internal communication within the module device or perform communication between the module device and an external device. The chip module is configured to perform the method in the first aspect or in any possible implementation of the first aspect, the method in the second aspect or in any possible implementation of the second aspect, the method in the third aspect or in any possible implementation of the third aspect, the method in the fourth aspect or in any possible implementation of the fourth aspect, the method in the fifth aspect or in any possible implementation of the fifth aspect, or the method in the sixth aspect or in any possible implementation of the sixth aspect.

In an eleventh aspect, embodiments of the present disclosure provide a communication system. The communication system includes a first communication apparatus and a second communication apparatus. The first communication apparatus is configured to perform the method in the first aspect or in any possible implementation of the first aspect, and the second communication apparatus is configured to perform the method in the fourth aspect or in any possible implementation of the fourth aspect. Alternatively, the first communication apparatus is configured to perform the method in the second aspect or in any possible implementation of the second aspect, and the second communication apparatus is configured to perform the method in the fifth aspect or in any possible implementation of the fifth aspect. Alternatively, the first communication apparatus is configured to perform the method in the third aspect or in any possible implementation of the third aspect, and the second communication apparatus is configured to perform the method in the sixth aspect or in any possible implementation of the sixth aspect.

In a twelfth aspect, embodiments of the present disclosure disclose a computer program product. The computer program product includes program instructions which, when executed by a processor, cause the processor to perform the method in the first aspect or in any possible implementation of the first aspect, the method in the second aspect or in any possible implementation of the second aspect, the method in the third aspect or in any possible implementation of the third aspect, the method in the fourth aspect or in any possible implementation of the fourth aspect, the method in the fifth aspect or in any possible implementation of the fifth aspect, or the method in the sixth aspect or in any possible implementation of the sixth aspect.

In a thirteenth aspect, embodiments of the present disclosure provide a computer-readable storage medium. The computer-readable storage medium is configured to store a computer program which, when executed on a processor, causes the processor to perform the method in the first aspect or in any possible implementation of the first aspect, the method in the second aspect or in any possible implementation of the second aspect, the method in the third aspect or in any possible implementation of the third aspect, the method in the fourth aspect or in any possible implementation of the fourth aspect, the method in the fifth aspect or in any possible implementation of the fifth aspect, or the method in the sixth aspect or in any possible implementation of the sixth aspect.

### BRIEF DESCRIPTION OF THE DRAWINGS

FIG. 1 is a schematic diagram of a time-domain resource for PUSCH repetition provided in embodiments of the present disclosure.
FIG. 2a is a schematic diagram illustrating division of a frequency-domain resource corresponding to a slot provided in embodiments of the present disclosure.
FIG. 2b is a comparison diagram provided in embodiments of the present disclosure.
FIG. 2c is a schematic diagram illustrating division of a frequency-domain resource corresponding to a symbol provided in embodiments of the present disclosure.
FIG. 3 is a schematic diagram illustrating a comparison between non-frequency hopping (FH) and FH provided in embodiments of the present disclosure.
FIG. 4a is a schematic flow chart of a communication method provided in embodiments of the present disclosure.
FIG. 4b is a schematic flow chart of another communication method provided in embodiments of the present disclosure.
FIG. 4c is a schematic flow chart of yet another communication method provided in embodiments of the present disclosure.
FIG. 5a is a schematic diagram illustrating determination of a time-domain resource location based on two start and length indicator values (SLIVs) provided in embodiments of the present disclosure.
FIG. 5b is a schematic diagram of slots provided in embodiments of the present disclosure.
FIG. 6a is a schematic diagram illustrating indication of a time-domain resource location for channel transmission in a sub-band full duplex (SBFD) slot through one SLIV provided in embodiments of the present disclosure.
FIG. 6b is another schematic diagram of slots provided in embodiments of the present disclosure.
FIG. 6c is yet another schematic diagram of slots provided in embodiments of the present disclosure.
FIG. 7a is yet another schematic diagram of slots provided in embodiments of the present disclosure.
FIG. 7b is yet another schematic diagram of slots provided in embodiments of the present disclosure.
FIG. 8a is another schematic diagram illustrating indication of a time-domain resource location for channel transmission in an SBFD slot through one SLIV provided in embodiments of the present disclosure.
FIG. 8b is yet another schematic diagram of slots provided in embodiments of the present disclosure.
FIG. 8c is yet another schematic diagram of slots provided in embodiments of the present disclosure.
FIG. 8d is yet another schematic diagram of slots provided in embodiments of the present disclosure.
FIG. 9 is a schematic diagram illustrating determination of a frequency-domain resource in an SBFD slot and a frequency-domain resource in a non-SBFD slot according to two SLIVs provided in embodiments of the present disclosure.
FIG. 10 is a schematic diagram illustrating determination of a frequency-domain resource location according to an SLIV and an offset provided in embodiments of the present disclosure.
FIG. 11a is a schematic diagram illustrating determination of a frequency-domain resource for DL channel repetition according to an SLIV and a resource block (RB) resource in a slot provided in embodiments of the present disclosure.
FIG. 11b is another schematic diagram illustrating determination of a frequency-domain resource for DL channel repetition according to an SLIV and an RB resource in a slot provided in embodiments of the present disclosure.
FIG. 11c is another schematic diagram illustrating determination of a frequency-domain resource for DL channel repetition according to an SLIV and an RB resource in a slot provided in embodiments of the present disclosure.
FIG. 11d is a schematic diagram illustrating determination of a frequency-domain resource for UL channel repetition according to an SLIV and an RB resource in a slot provided in embodiments of the present disclosure.
FIG. 12 is another schematic diagram illustrating determination of a frequency-domain resource for UL channel repetition according to an SLIV and an RB resource in a slot provided in embodiments of the present disclosure.
FIG. 13 is a schematic diagram illustrating frequency hopping (FH) transmission according to four offsets provided in embodiments of the present disclosure.
FIG. 14 is a schematic diagram illustrating FH transmission according to two offsets provided in embodiments of the present disclosure.
FIG. 15 is another schematic diagram illustrating FH transmission according to two offsets provided in embodiments of the present disclosure.
FIG. 16 is a schematic structural diagram of a communication apparatus 160 provided in embodiments of the present disclosure.
FIG. 17 is a schematic structural diagram of a communication apparatus 170 provided in embodiments of the present disclosure.
FIG. 18 is a schematic structural diagram of a module device provided in embodiments of the present disclosure.

### DETAILED DESCRIPTION

The terms used in implementations of the present disclosure are merely intended for describing the implementations, rather than limiting implementations of the present disclosure. For example, the singular form "a/an", "one", "said", "above", "the", and "this" used in the specification and the appended claims of the present disclosure are also intended to include multiple forms, unless specified otherwise in the context. It can also be understood that the term "and/or" used in the present disclosure refers to and includes any or all possible combinations of one or more of the items listed. The terms "first", "second", etc., in the specification, the claims, and the accompanying drawings of embodiments of the present disclosure are used to distinguish different objects rather than describe a particular order or sequence.

Some technical terms involved in the present disclosure will be explained below to facilitate understanding by those skilled in the art.

In embodiments of the present disclosure, a first communication apparatus may be referred to as a user equipment (UE), a terminal device, a terminal, an access terminal, a subscriber unit, a subscriber station, a mobile station (MS), a remote station, a remote terminal, a mobile device, a user terminal, a wireless communication apparatus, a user agent, a user device, etc. The first communication apparatus may be an MS, a subscriber unit, an unmanned aerial vehicle (UAV), an internet of things (IoT) device, a station (ST) in a wireless local area network (WLAN), a cellular phone, a smartphone, a cordless phone, a wireless data card, a tablet computer, a session initiation protocol (SIP) phone, a wireless local loop (WLL) station, a personal digital assistant (PDA) device, a laptop computer, a machine-type communication (MTC) terminal, a handheld device having a wireless communication function, a computing device, another processing device connected to a wireless modem, an in-vehicle device, or a wearable device (which may also be referred to as a wearable intelligent device). The first communication apparatus may also be a first communication apparatus in a next generation communications system, for example, a first communication apparatus in 5G, a first communication apparatus in a future evolved public land mobile network (PLMN), or a first communication apparatus in a new radio (NR) system, etc. The first communication apparatus may also be a chip, and in the case where the first communication apparatus is a chip, the first communication apparatus may be placed in a terminal device.

In embodiments of the present disclosure, the first communication apparatus may communicate with a second communication apparatus, and the second communication apparatus may be understood as a device that provides communication coverage in a specific geographical area and can communicate with one or more first communication apparatuses in the coverage area. In some embodiments, the second communication apparatus may also be used to communicate with one or more devices that have some functions of the terminal. Exemplarily, the second communication apparatus may communicate with a macro base station (BS) or a micro BS. Exemplarily, the second communication apparatus may be a base transceiver station (BTS), an evolutional Node B (eNB), a next-generation Node B (gNB), other satellite BSs, other satellite relay nodes, etc. In addition, the second communication apparatus may also be an access point (AP), a transport point (TRP), a central unit (CU), or other network entities, and may include some or all functions of the network entity mentioned above.

### 1. Repetition

Repetition can be used for enhancing signal coverage. In embodiments of the present disclosure, repetition can be understood as channel transmission on the same channel in multiple consecutive time units. The first communication apparatus and the second communication apparatus communicate with each other based on the granularity of the time unit. For example, the time unit may be a frame, a subframe, a slot (also referred to as "time slot"), a mini-slot, a symbol, etc. For example, in an NR system, the time unit is a slot.

The NR system is taken as an example. Exemplarily, channels supporting repetition include a physical uplink shared channel (PUSCH), a physical uplink control channel (PUCCH), and a physical downlink shared channel (PDSCH). For example, PUSCH repetition can include two types, i.e., PUSCH repetition Type A and PUSCH repetition Type B.

### 1.1 Time-domain resource

The NR system using time division duplexing (TDD) communication is taken as an example. In the case where no uplink (UL)/downlink (DL) division is performed in a frequency domain, PUSCH repetition with PUSCH repetition Type A, PUCCH repetition, and PDSCH repetition have the same time-domain resource location in each slot, that is, a start location of an orthogonal frequency division multiplexing (OFDM) symbol occupied in each slot is the same, and the number (quantity) of OFDM symbols occupied is also the same.

For example, a time-domain resource location for PUSCH repetition with PUSCH repetition Type A and a time-domain resource location for PDSCH repetition may be indicated by a time-domain resource assignment (TDRA) field in downlink control information (DCI), or may be configured by TDRA information in higher-layer signaling, where the TDRA information is used for notifying a UE of the time-domain resource location for PDSCH and the time-domain resource location for PUSCH that are to be used. A time-domain resource location for PUCCH repetition can be obtained according to a time-domain resource location in the higher-layer signaling.

For another example, PUSCH repetition with PUSCH repetition Type B can be implemented by scheduling the DCI or the higher-layer signaling. PUSCH repetition can be performed based on mini-slots. Exemplarily, multiple mini-slot repetitions may be performed in one slot or in multiple slots.

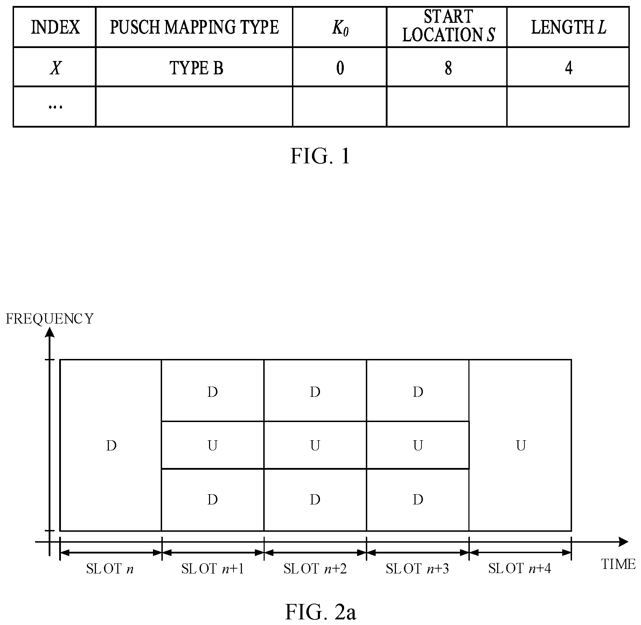

To facilitate understanding, exemplarily, reference can be made to FIG. 1. FIG. 1 is a schematic diagram of a time-domain resource for PUSCH repetition provided in embodiments of the present disclosure.

Exemplarily, when the value of the TDRA field in the DCI received by the UE is *X*-1, the UE can determine a time-domain resource location by using index *X* (e.g., index *X* illustrated in FIG. 1) in a time-domain resource allocation table. The time-domain resource allocation table indicates a start and length indicator value (SLIV) and a slot offset *K*₀ between a PUSCH and a PDCCH scheduling the PUSCH. The SLIV includes a start location S of an OFDM symbol and a length L of the OFDM symbol.

As illustrated in FIG. 1, exemplarily, a PUSCH mapping type is type *B. K*₀ is 0, indicating that the PUSCH and the PDCCH are scheduled in the same slot. *S* is 8, indicating that a start location of the PUSCH repetition is the 8-*th* OFDM symbol in the slot. *L* is 4, indicating that four OFDM symbols are occupied for PUSCH repetition.

It can be understood that the numbers of channel repetitions for channels, such as the PUSCH, the PUCCH, and the PDSCH, can be configured through the higher-layer signaling. Exemplarily, if the number of channel repetitions for the PUSCH configured through the higher-layer signaling is 3 and the UE receives DCI in slot n, where the DCI indicates time-domain resource information as illustrated in FIG. 1, the UE can perform PDSCH repetition in slot n, slot *n*+1, and slot *n*+2, respectively, with the start location of the 8-*th* OFDM symbol and the length of 4 OFDM symbols, i.e., from the 8-*th* OFDM symbol to the 12-*th* OFDM symbol.

### 1.2 Frequency-domain resource

The NR system is taken as an example. The PUSCH repetition, the PUCCH repetition, and the PDSCH repetition occupy the same frequency-domain resource location in a frequency-domain resource corresponding to each slot, that is, a start location of a resource block (RB) occupied in each slot is the same, and the number of RBs occupied in each slot is also the same. Exemplarily, the RB may be a physical resource block (PRB), a virtual resource block (VRB), a common resource block (CRB), etc.

Exemplarily, a frequency-domain resource assignment (FDRA) field in the DCI can indicate frequency-domain resource allocation for the PDSCH repetition and the PUSCH repetition. The frequency-domain resource allocation for the PDSCH repetition and the PUSCH repetition can include two types, i.e., type 0 and type 1. In type 0, a discontinuous allocation can be supported, the frequency-domain resource is divided into multiple resource block groups (RBG), and an RBG for transmission is indicated by the DCI, thereby obtaining frequency diversity gains. In type 1, a continuous resource allocation can be supported, and a start location of an RB and the length of the RB are indicated by the DCI. With the above manner, the number of bits required for the FDRA field can be reduced.

### 2. Sub-band full duplex (SBFD)

To reduce the implementation complexity of a network device, a frequency-domain resource corresponding to a time unit in a communication system is unidirectional. The NR system is taken as an example. One slot corresponds either to a UL frequency-domain resource or to a DL frequency-domain resource. Specifically, a slot corresponding to the UL frequency-domain resource can be referred to as "UL slot", which can be used by the UE to send data to the network device. A slot corresponding to the DL frequency-domain resource can be referred to as "DL slot", which can be used by the network device to send data to the UE.

Although the above manner can reduce the implementation complexity of the network device, with the diversification of services, especially service requirements for vertical industries, different services have different requirements for UL/DL transmission, and a single UL/DL slot allocation ratio is difficult to meet the requirements of different services. Exemplarily, if the UE has a UL requirement in a DL slot, the UE needs to wait for a UL slot subsequent to the DL slot and then complete the UL requirement in the UL slot.

In order to reduce the delay caused by the waiting, the frequency-domain resource can be further divided. After the frequency-domain resource is divided, a frequency-domain resource corresponding to the same time-domain resource includes a UL frequency-domain resource and a DL frequency-domain resource, and the UL frequency-domain resource does not overlap in the frequency domain with the DL frequency-domain resource. It can be understood that the frequency-domain resource may have different names from different description perspectives. Exemplarily, the UL frequency-domain resource may also be referred to as "UL sub-band", "UL bandwidth", "UL RB", etc., and the DL frequency-domain resources may also be referred to as "DL sub-band", "DL bandwidth", "DL RB", etc., which are not limited in the present disclosure.

Therefore, in some embodiments, the manner for resource division may also be referred to as "SBFD", and the SBFD may also mean that different UL/DL ratios are used for different sub-bands of the same carrier.

In embodiments of the present disclosure, the time-domain resource may be a time unit or a basic time unit. In other words, a frequency-domain resource corresponding to the same time unit or the same basic time unit includes a UL frequency-domain resource and a DL frequency-domain resource, and the UL frequency-domain resource does not overlap in the frequency domain with the DL frequency-domain resource. The basic time unit can be understood as the granularity of division of the time unit.

Exemplarily, the time unit as the slot is taken as an example. A basic time unit of the slot can be referred to as "symbol", specifically "OFDM symbol". The NR system is taken as an example. The number of OFDM symbols in one slot is related to the type of cyclic prefix (CP). For example, for a non-extended CP, one slot has 14 OFDM symbols. For another example, for an extended CP, one slot has 12 OFDM symbols. Therefore, in some embodiments, after the frequency-domain resource is divided, a frequency-domain resource corresponding to the same slot can include a UL frequency-domain resource and a DL frequency-domain resource that do not overlap with each other in the frequency domain, or a frequency-domain resource corresponding to the same symbol can include a UL frequency-domain resource and an DL frequency-domain resource that do not overlap with each other in the frequency domain.

To facilitate understanding and description, in embodiments of the present disclosure, the time-domain resource can be divided into a first time-domain resource and a second time-domain resource. A frequency-domain resource corresponding to the first time-domain resource includes a DL frequency-domain resource and a UL frequency-domain resource, and the UL frequency-domain resource corresponding to the first time-domain resource does not overlap in the frequency domain with the DL frequency-domain resource corresponding to the first time-domain resource. A frequency-domain resource corresponding to the second time-domain resource may be a UL frequency-domain resource or a DL frequency-domain resource. In other words, the frequency-domain resource corresponding to the second time-domain resource is a unidirectional frequency-domain resource, the UL frequency-domain resource corresponding to the second time-domain resource is used for UL transmission, and the DL frequency-domain resource corresponding to the second time-domain resource is used for DL transmission.

Exemplarily, the first time-domain resource may also be referred to as "SBFD resource", and the second time-domain resource may also be referred to as "non-SBFD resource".

Exemplarily, the UL frequency-domain resource corresponding to the first time-domain resource is the UL frequency-domain resource in the frequency-domain resource corresponding to the first time-domain resource, and the DL frequency-domain resource corresponding to the first time-domain resource is the DL frequency-domain resource in the frequency-domain resource corresponding to the first time-domain resource. Optionally, the UL frequency-domain resource, for example, may be referred to as "UL sub-band", and the DL frequency-domain resource, for example, may be referred to as "DL sub-band".

In embodiments of the present disclosure, a frequency-domain resource bandwidth corresponding to the first time-domain resource and a frequency-domain resource bandwidth corresponding to the second time-domain resource may be the same or different. Frequency-domain resource bandwidths corresponding to first time-domain resources at different locations in the time domain may be the same or different, and frequency-domain resource bandwidths corresponding to second time-domain resources at different locations in the time domain may be the same or different.

In the same case, the frequency-domain resource bandwidth can all be a system bandwidth, a carrier bandwidth, a bandwidth part (BWP), etc. In different cases, different frequency-domain bandwidths can be adopted for the first time-domain resource and the second time-domain resource. For example, the frequency-domain resource bandwidth corresponding to the first time-domain resource can be the system bandwidth, and the frequency-domain resource bandwidth corresponding to the second time-domain resource can be the carrier bandwidth. Similarly, different frequency-domain bandwidth configurations can be adopted for the frequency-domain resource bandwidths corresponding to the first time-domain resources at different locations in the time domain, and different frequency-domain bandwidth configurations can be adopted for the frequency-domain resource bandwidths corresponding to the second time-domain resources at different locations in the time domain. The frequency-domain resource bandwidths corresponding to the first time-domain resources at different locations in the time domain are taken as an example. A frequency-domain resource bandwidth corresponding to a first time-domain resource at time-domain location A is the system bandwidth, and a frequency-domain resource bandwidth corresponding to a first time-domain resource at time-domain location *B* is the carrier bandwidth or the BWP, etc.

In embodiments of the present disclosure, the first time-domain resource may be a time unit or a part of a time unit. For example, the time unit is a slot, and the slot is in the granularity of an OFDM symbol. The first time-domain resource may be a slot or may be at least one OFDM symbol in a slot.

To facilitate understanding, exemplarily, reference can be made to FIG. 2a. FIG. 2a is a schematic diagram of division of a frequency-domain resource corresponding to a slot provided in embodiments of the present disclosure.

As illustrated in FIG. 2a, a horizontal axis can be understood as time and a vertical axis can be understood as frequency. For example, the horizontal axis corresponds to the time-domain resource, and the vertical axis corresponds to the frequency-domain resource. As illustrated in FIG. 2a, time is divided into different slots, such as slot *n,* slot *n*+1, slot *n*+2, slot *n*+3, and slot *n*+4.

To facilitate description, in embodiments of the present disclosure, the DL frequency-domain resource can be represented by D, and the UL frequency-domain resource can be represented by *U.* Exemplarily, slot *n* and slot *n*+4 illustrated in FIG. 2a can be understood as the second time-domain resource, and slot *n*+1, slot *n*+2, and slot *n*+3 illustrated in FIG. 2a can be understood as the first time-domain resource.

As illustrated in FIG. 2a, all frequency-domain resources corresponding to slot *n* are DL frequency-domain resources, and thus UL transmission is not allowed in slot n. Similarly, all frequency-domain resources corresponding to slot *n*+4 are UL frequency-domain resources, and thus DL transmission is not allowed in slot *n.*

As illustrated in FIG. 2a, slot *n*+1, slot *n*+2, and slot *n*+3 each include both a DL frequency-domain resource and a UL frequency-domain resource. Exemplarily, in slot *n*+1, the UE can receive DL data from the network device on the DL frequency-domain resource and send UL data to the network device in the UL frequency-domain resource.

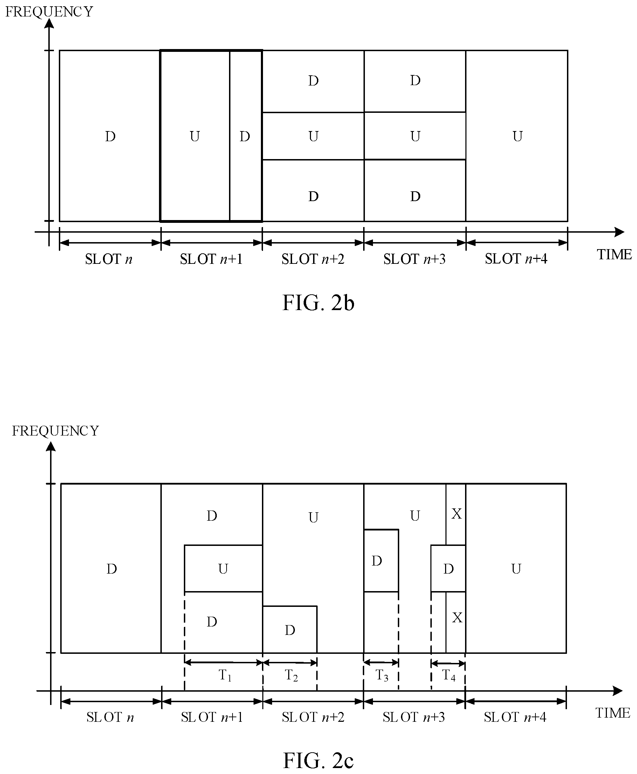

For the understanding of "do no overlap in the frequency domain", exemplarily, reference can be made to FIG. 2b. FIG. 2b is a comparison diagram provided in embodiments of the present disclosure, and "do no overlap in the frequency domain" is described through comparison between slot *n*+1 in FIG. 2a and slot *n*+1 in FIG. 2b. Exemplarily, in FIG. 2a, although slot *n*+1 includes both the UL frequency-domain resource and the DL frequency-domain resource, a vertical coordinate area corresponding to the UL frequency-domain resource and a vertical coordinate area corresponding to the DL frequency-domain resource have no intersection, i.e., "do no overlap in the frequency domain". In FIG. 2b, a vertical coordinate area corresponding to the UL frequency-domain resource overlaps in slot *n*+1 with a vertical coordinate area corresponding to the DL frequency-domain resource. Optionally, slot *n*+1 in FIG. 2b can be understood as the second time-domain resource.

For another example, reference can be made to FIG. 2c. FIG. 2c is a schematic diagram illustrating division of a frequency-domain resource corresponding to a symbol provided in embodiments of the present disclosure.

In the case where the slot is the time unit, the basic time unit may be a symbol, such as an OFDM symbol, and a frequency-domain resource corresponding to each OFDM symbol may be divided differently. Exemplarily, as illustrated in FIG. 2c, time *T*₁ in slot *n*+1, time *T*₂ in slot *n*+2, as well as time *T*₃ and time *T*₄ in slot *n*+3 can all be understood as at least one OFDM symbol. A frequency-domain resource corresponding to each time mentioned above includes both a DL frequency-domain resource and a UL frequency-domain resource that do not overlap with each other in the frequency domain. Therefore, as illustrated in FIG. 2c, time *T*₁, time *T*₂, time *T*₃, and time *T*₄ can all be understood as the first time-domain resource, and other times can be understood as the second time-domain resource.

Optionally, a symbol in the slot may be a flexible symbol, such as *X* in FIG. 2c. The flexible symbol may be used for DL transmission or UL transmission, or may be used as a switching time from the DL transmission to the UL transmission.

Optionally, the first time-domain resource may also be referred to as "SBFD resource", and the second time-domain resource may also be referred to as "non-SBFD resource". For example, slot *n*+1 in FIG. 2c corresponds to both the SBFD resource and the non-SBFD resource. For another example, slot n and slot *n*+4 in FIG. 2c each only corresponds to the non-SBFD resource.

Similarly, for the time unit, the time unit can be divided into an SBFD time unit and a non-SBFD time unit. The SBFD time unit can be understood as a time unit that totally or partially includes the first time-domain resource, and the non-SBFD time unit can be understood as a time unit that does not include the first time-domain resource. For example, the non-SBFD time unit may all be the second time-domain resource. Alternatively, one part of the non-SBFD time unit may be the second time-domain resource, and the other part of the non-SBFD time unit may be other types of time-domain resources.

Exemplarily, the time unit is taken as a slot as an example. The SBFD time unit can also be referred to as "SBFD slot", and the non-SBFD time unit can also be referred to as "non-SBFD slot". For example, slot *n*+1, slot *n*+2, and slot *n*+3 in FIG. 2c can be understood as the SBFD slot, and slot n and slot *n*+4 can be understood as the non-SBFD slot.

It can be understood that, in embodiments of the present disclosure, the frequency-domain resource corresponding to the first time-domain resource may be a continuous frequency-domain resource or a discontinuous frequency-domain resource. In other words, the UL frequency-domain resource corresponding to the first time-domain resource may be a continuous frequency-domain resource or a discontinuous frequency-domain resource. Similarly, the DL frequency-domain resource corresponding to the first time-domain resource may be a continuous frequency-domain resource or a discontinuous frequency-domain resource.

Reference can be made to FIG. 2c again. As illustrated in FIG. 2c, in time *T*₁, the UL frequency-domain resource is continuous, and the DL frequency-domain resource is discontinuous. In time *T*₂, both the UL frequency-domain resource and the DL frequency-domain resource are continuous. In time *T*₃, the UL frequency-domain resource is discontinuous, and the DL frequency-domain resource is continuous.

It can be understandable that, in the SBFD solution, a UL/DL ratio for each slot may be determined by the network device, or a specific situation of the UL/DL ratio may be notified to the UE through higher-layer signaling when the UE enters a connected state.

### 3. Frequency hopping (FH)

The NR system is taken as an example. FH transmission is supported for PUCCH transmission and PUSCH transmission. Exemplarily, the FH transmission may be an intra-slot FH, or may be an inter-slot FH. The intra-slot FH can mean the channel transmission on different frequency-domain resources in the same slot, and the inter-slot FH can mean one channel transmission on different frequency-domain resources in two consecutive slots. One FH transmission can include the first hop and the second hop. Exemplarily, the first hop and the second hop may be located in one slot, or may be located in different slots. A frequency-domain resource occupied for the first hop is different from a frequency-domain resource occupied for the second hop, and an FH offset between the first hop and the second hop can also be referred to as "FH interval".

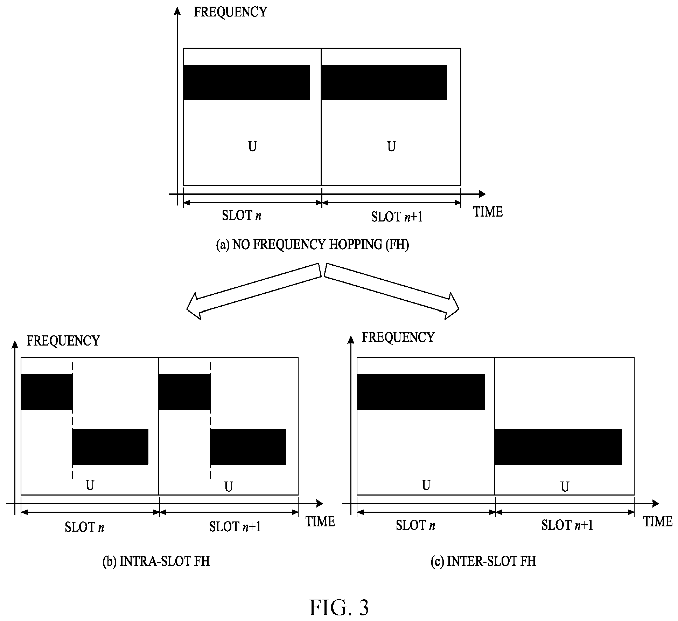

Exemplarily, reference can be made to FIG. 3. FIG. 3 is a schematic diagram illustrating a comparison between non-FH and FH provided in embodiments of the present disclosure. In FIG. 3, data transmission in slot n and slot *n*+1 is taken as an example. Exemplarily, (a) of FIG. 3 illustrates a non-FH transmission, and a frequency-domain resource used in slot *n* is the same as a frequency-domain resource used in slot *n*+1. (b) of FIG. 3 illustrates the intra-slot FH, and the FH is performed in slot n and slot *n*+1 respectively. For example, different frequency-domain resources are used in slot *n.* (c) of FIG. 3 illustrates the inter-slot FH, i.e., the frequency-domain resource used in slot *n* is different from the frequency-domain resource used in slot *n*+1.

When the FH is configured, the network device can indicate specific values of multiple FH offsets through higher-layer signaling, and then can select, according to the first *N* bits of the FDRA field, one from the multiple FH offsets indicated through the higher-layer signaling. Exemplarily, the selection may be made in the following manner.

When the BWP is less than 50PRB, *N* is 1, indicating one of specific values of two FH offsets configured through the higher-layer signaling. When the BWP bandwidth is greater than or equal to 50PRB, *N* is 2, indicating one of specific values of four FH offsets configured through the higher-layer signaling.

At present, repetition is performed on the second time-domain resource. In the case where the time-domain resource includes the first time-domain resource, how to determine a resource for repetition from the time-domain resource is a problem to be solved by those skilled in the art. Based on the above problem, embodiments of the present disclosure provide a communication method and a related apparatus. Through the present disclosure, in the case where the time-domain resource includes the first time-domain resource, the resource for repetition can be effectively determined from the time-domain resource.

In embodiments of the present disclosure, the communication method can be performed by a communication apparatus. The communication apparatus may be the first communication apparatus or the second communication apparatus. For descriptions of the first communication apparatus and the second communication apparatus, reference can be made to the terms mentioned above, which will not be repeated herein. For ease of description, the method provided in the present disclosure will be introduced below with the first communication apparatus as the terminal device and the second communication apparatus as the network device.

With the method provided in embodiments of the present disclosure, in the case where the time-domain resource is the first time-domain resource, a time-domain resource for repetition, a frequency-domain resource for repetition, and an FH resource for repetition can be determined. In embodiments of the present disclosure, a method for determining the time-domain resource, a method for determining the frequency-domain resource, and a method for determining the FH resource may be used separately or in combination with one another.

Exemplarily, when the methods are used separately, the time-domain resource, the frequency-domain resource, or the FH resource can be determined separately, and other resources can be determined by using other schemes, which is not limited in the present disclosure. Exemplarily, when the methods are used in combination, for example, the time-domain resource can be determined according to time-domain resource indication information, and the frequency-domain resource can be determined according to frequency-domain resource indication information, as such, repetition can be performed based on the determined time-frequency resource. For another example, the time-domain resource can be determined according to the time-domain resource indication information, the frequency-domain resource can be determined according to the frequency-domain resource indication information, and the FH resource can be determined according to FH offset information, as such, repetition can be performed based on the determined time-frequency resource and the determined FH resource. It can be understood that, when the methods are used in combination, the time-domain resource indication information, the frequency-domain resource indication information, and the FH offset information may be indicated together or separately, which is not limited in the present disclosure.

To facilitate understanding, a communication method for determining the time-domain resource, a communication method for determining the frequency-domain resource, and a communication method for determining the FH resource will be introduced separately.

### 1. Introduction to determination of a time-domain resource

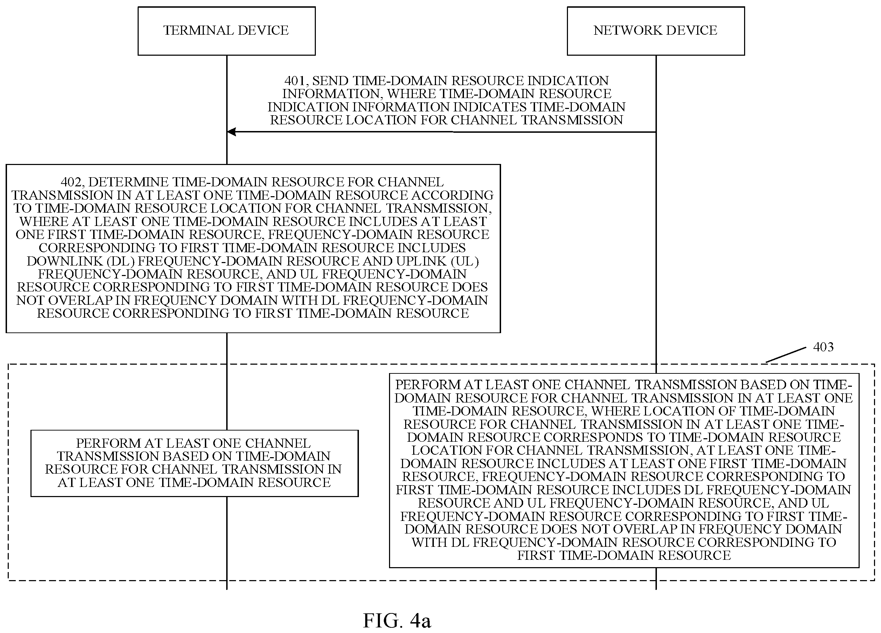

For example, reference can be made to FIG. 4a. FIG. 4a is a schematic flow chart of a communication method provided in embodiments of the present disclosure. As illustrated in FIG. 4a, the method includes the following.

401, a network device sends a terminal device time-domain resource indication information, where the time-domain resource indication information indicates a time-domain resource location for channel transmission. Correspondingly, the terminal device receives the time-domain resource indication information.

For 401, the network device indicates the time-domain resource location for channel transmission to the terminal device through the time-domain resource indication information. Exemplarily, the time-domain resource location for channel transmission can be understood as a location of a time-domain resource occupied for channel transmission. Exemplarily, the location may be a time-domain resource start location and a time-domain resource end location, may be the time-domain resource start location and a time-domain resource length, etc.

Exemplarily, the time-domain resource indication information may be indicated to the terminal device through higher-layer signaling and/or DCI. The higher-layer signaling may be, for example, radio resource control (RRC) signaling, a media access control-control element (MAC-CE), etc.

It can be noted that a channel can originally be understood as a carrier for data transmission. In embodiments of the present disclosure, channel transmission can be understood as data sending and/or data receiving on a channel, instead of channel sending or receiving, which will not be repeated later.

It can be understood that the time can be divided in different manners, to obtain time-domain resources with different names. In embodiments of the present disclosure, exemplarily, the time-domain resource may be a frame, a subframe, a slot, and a symbol. It can be understood that in future communication systems, the time-domain resource may also use a time-domain resource name in the future communication systems, which is not limited in the present disclosure.

402, the terminal device determines a time-domain resource for channel transmission in at least one time-domain resource according to the time-domain resource location for channel transmission, where the at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

In embodiments of the present disclosure, after the time-domain resource indication information is received by the terminal device, the terminal device determines the time-domain resource for channel transmission in the at least one time-domain resource. The at least one time-domain resource includes at least one first time-domain resource. For the introduction to the first time-domain resource, reference can be made to the term mentioned above, in particular to related descriptions of FIG. 2a, FIG. 2b, and FIG. 2c, which will not be repeated herein.

For 402, the at least one time-domain resource can include, in addition to the at least one first time-domain resource, a second time-domain resource and other types of time-domain resources. Therefore, in some embodiments, the time-domain resource indication information indicates the time-domain resource location for channel transmission as follows. The time-domain resource indication information indicates a location of a time-domain resource for channel transmission in the first time-domain resource and/or a location of a time-domain resource for channel transmission in a second time-domain resource. A frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

In embodiments of the present disclosure, the time-domain resource indication information may indicate the location of the time-domain resource for channel transmission in the first time-domain resource, may indicate the location of the time-domain resource for channel transmission in the second time-domain resource, or may indicate both the location of the time-domain resource for channel transmission in the first time-domain resource and the location of the time-domain resource for channel transmission in the second time-domain resource. For the introduction to the second time-domain resource, reference can be made to the term mentioned above, in particular to related descriptions of FIG. 2a, FIG. 2b, and FIG. 2c, which will not be repeated herein.

In embodiments of the present disclosure, the terminal device can directly or indirectly determine a resource for channel transmission in the first time-domain resource according to location information indicated by the time-domain indication information. For example, in the case where the time-domain resource indication information indicates the location of the time-domain resource for channel transmission in the first time-domain resource, the terminal device can directly determine the location of the time-domain resource for channel transmission in the first time-domain resource according to the time-domain indication information. In the case where the time-domain resource indication information only indicates the location of the time-domain resource for channel transmission in the second time-domain resource, the terminal device can also determine the location of the time-domain resource for channel transmission in the first time-domain resource according to the time-domain indication information. For another example, on the basis that the time-domain resource indication information indicates the location of the time-domain resource for channel transmission in the second time-domain resource, the terminal device can further determine the location of the time-domain resource for channel transmission in the first time-domain resource according to other information.

In embodiments of the present disclosure, the location of the time-domain resource for channel transmission in the first time-domain resource may be a start time-domain resource of the time-domain resource for channel transmission in the first time-domain resource and the length of the time-domain resource for channel transmission in the first time-domain resource, may be the start time-domain resource of the time-domain resource for channel transmission in the first time-domain resource and an end time-domain location of the time-domain resource for channel transmission in the first time-domain resource, may be the end time-domain location of the time-domain resource for channel transmission in the first time-domain resource and the length of the time-domain resource for channel transmission in the first time-domain resource, etc. It can be understood that the location of the time-domain resource for channel transmission in the second time-domain resource is similar to that in the first time-domain resource, which will not be repeated herein.

Therefore, in some embodiments, the time-domain resource indication information contains first time-domain resource location indication and a first time length. Alternatively, the time-domain resource indication information contains second time-domain resource location indication and a second time length. Alternatively, the time-domain resource indication information contains the first time-domain resource location indication, the first time length, the second time-domain resource location indication, and the second time length. The first time-domain resource location indication indicates the start time-domain resource of the time-domain resource for channel transmission in the first time-domain resource. The second time-domain resource location indication indicates a start time-domain resource of the time-domain resource for channel transmission in the second time-domain resource. The first time length is the length of the time-domain resource for channel transmission in the first time-domain resource. The second time length is the length of the time-domain resource for channel transmission in the second time-domain resource.

In embodiments of the present disclosure, the first time-domain resource location indication may be absolute, for example, may be a time-domain resource location index. Exemplarily, the communication granularity of a slot is taken as an example. The time-domain resource location index may be an index of a symbol. Specifically, the first time-domain resource location indication may be an index of a start time-domain location or an end time-domain location of the time-domain resource for channel transmission in the first time-domain resource.

In the case where the time-domain resource indication information contains the first time-domain resource location indication and the first time length, exemplarily, a row index pointing to a time-domain resource table can be indicated through the DCI or the higher-layer signaling, so that the first time-domain resource location indication and the first time length are indicated to the terminal device. Similarly, in the case where the time-domain resource indication information contains the second time-domain resource location indication and the second time length, exemplarily, a row index pointing to the time-domain resource table can be indicated through the DCI or the higher-layer signaling, so that the second time-domain resource location indication and the second time length are indicated to the terminal device.

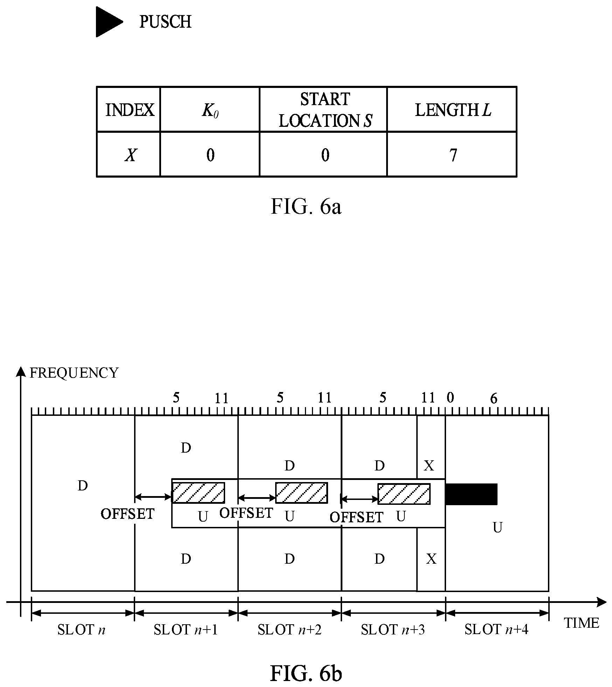

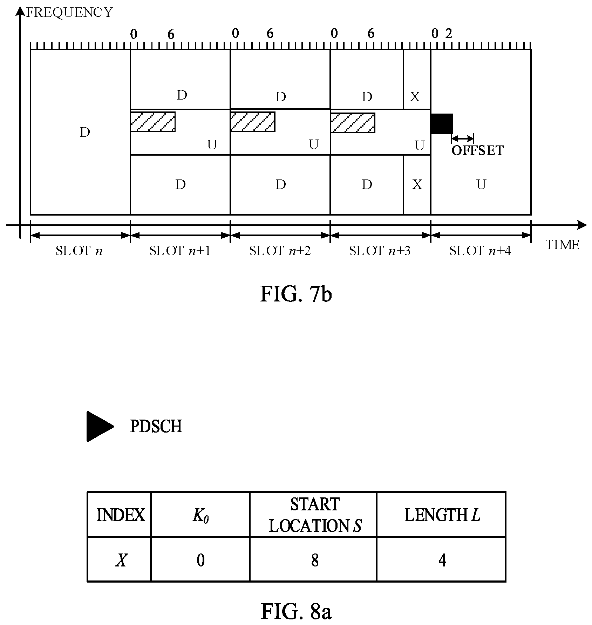

Exemplarily, the first time-domain resource location indication and the first time length indication, or the second time-domain resource location indication and the second time length indication can be indicated by an SLIV Reference can be made to FIG. 1 again, an SLIV illustrated in FIG. 1 can be understood as the first time-domain resource location indication and the first time length indication, or can be understood as the second time-domain resource location indication and the second time length indication. For another example, in FIG. 6a and FIG. 8a below, a start location S can be understood as the time-domain resource location indication, such as the first time-domain resource location indication or the second time-domain resource location indication, and a length L can be understood as the time length, such as the first time length or the second time length.

In the case where the time-domain resource indication information contains the first time-domain resource location indication, the first time length, the second time-domain resource location indication, and the second time length, exemplarily, the first time-domain resource location indication and the first time length indication can be indicated by SLIV2, and the second time-domain resource location indication and the second time length indication can be indicated by SLIV1. Exemplarily, SLIV1 and SLIV2 may be located in the same row or in different rows in the time-domain resource table.

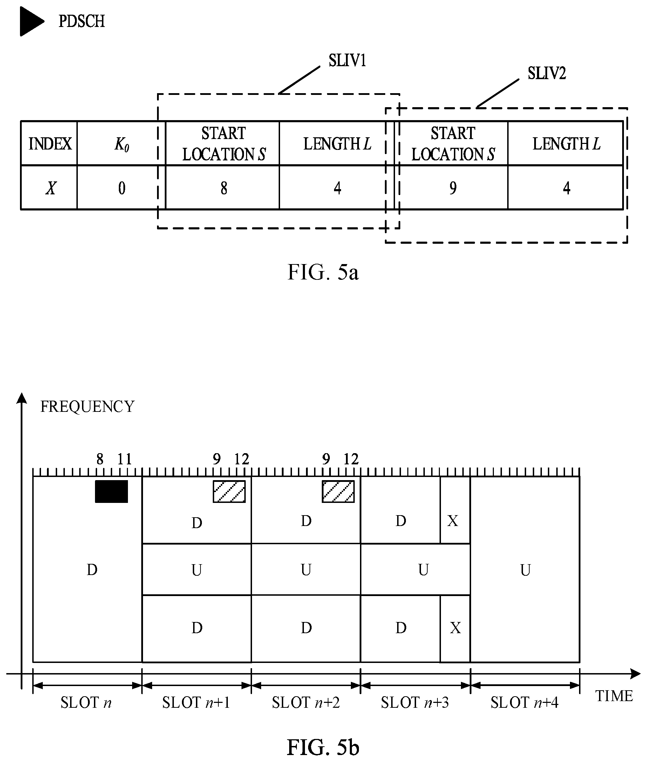

In the case where SLIV1 and SLIV2 are located in the same row, as illustrated in FIG. 5a, one row-index pointing to the time-domain resource table can be indicated through the DCI or the higher-layer signaling, and the row index indicates SLIV1 and SLIV2. In the case where SLIV1 and SLIV2 are located in different rows, two row-indexes pointing to the time-domain resource table can be indicated through the DCI or the higher-layer signaling, and the two row-indexes indicate SLIV1 and SLIV2 respectively. Finally, for the introduction to indication of the location of the time-domain resource for channel transmission in the first time-domain resource and the location of the time-domain resource for channel transmission in the second time-domain resource by SLIV1 and SLIV2 respectively, reference can be made to related descriptions of FIG. 5b below, which will not be repeated herein.

The first time-domain resource location indication may also be relative. For example, the first time-domain resource location indication may be a relative location relationship between the start time-domain location of the time-domain resource for channel transmission in the first time-domain resource and a start time-domain location of the resource for repetition, may be a relative location relationship between the start time-domain location of the time-domain resource for channel transmission in the first time-domain resource and a location of the resource for scheduling or configuring repetition, or may also be a relative location relationship between the start time-domain location of the time-domain resource for channel transmission in the first time-domain resource and a start location of the first time-domain resource. The start location of the first time-domain resource may be a start location of the first time-domain resource in a slot, such as (1) and (2) of Case 1 in Part 4.3 below.

It can be understood that the second time-domain resource location indication is similar to the first time-domain resource location indication. For example, the second time-domain resource location indication is relative. The second time-domain resource location indication may be a relative location relationship between the start time-domain location of the time-domain resource for channel transmission in the second time-domain resource and a start location of the second time-domain resource. The start location of the second time-domain resource may be a start location of the second time-domain resource in a slot, such as (1) and (2) of Case 2 in Part 4.3 below.

In embodiments of the present disclosure, the time-domain resource length (e.g., the first time length and the second time length) may be indicated by the number of time units or may be indicated by an absolute time length, which is not limited in the present disclosure.

In some special cases, exemplarily, in the case where the time-domain resource indication information contains the first time-domain resource location indication, the first time length, the second time-domain resource location indication, and the second time length, if the first time length is the same as the second time length, the time-domain resource indication information can contain one time length, and the time length is used for both the first time-domain resource and the second time-domain resource. Similarly, if a start location of the location of the time-domain resource for channel transmission in the first time-domain resource is the same as a start location of the location of the time-domain resource for channel transmission in the second time-domain resource, the time-domain resource indication information can contain one time-domain resource location indication, and the time-domain resource location indication is used for both the first time-domain resource and the second time-domain resource.

It can also be understood that, in the case where the time-domain resource location indication is relative and an indication unit of the time-domain resource location indication is the same as an unit of the time-domain resource length, and their values are the same, the time-domain resource indication information can contain one value, and the value is used for determining both the location of the time-domain resource for channel transmission in the first time-domain resource and the location of the time-domain resource for channel transmission in the second time-domain resource.

For another example, the time-domain resource indication information may contain the first time-domain resource location indication but not contain the first time length, and the first time length may be a predefined time length. Alternatively, the time-domain resource indication information may contain the first time length but not contain the first time-domain resource location indication, and the start time-domain resource may be predefined. It can be understood that the second time-domain resource location indication and the second time length that are in the time-domain resource indication information are similar to the above, which will not be repeated herein.

403, the terminal device performs at least one channel transmission based on the time-domain resource for channel transmission in the at least one time-domain resource. Correspondingly, the network device performs at least one channel transmission based on the time-domain resource for channel transmission in the at least one time-domain resource. A location of the time-domain resource for channel transmission in the at least one time-domain resource corresponds to the time-domain resource location for channel transmission. The at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

In the solution, the channel may be a channel that supports repetition, such as the PUSCH, the PUCCH, and the PDSCH, or may be a channel for periodic transmission, such as a configured grant PUSCH (CG-PUSCH).

In embodiments of the present disclosure, the number of channel transmissions performed by the terminal device can be configured by the network device through higher-layer signaling. For example, the network device may configure the terminal device to perform 5 channel transmissions (i.e., perform channel transmission for five times) through the higher-layer signaling. It can also be understood that, in embodiments of the present disclosure, when the terminal device performs channel transmission, the actual number of channel transmissions can be less than or equal to the number of channel transmissions configured by the network device. Exemplarily, the network device can configure the terminal device to perform 5 channel transmissions through the higher-layer signaling, and the terminal device may perform 5 channel transmissions, or may perform 1, 2, 3, or 4 channel transmissions according to its own situation.

In embodiments of the present disclosure, the terminal device performing at least one channel transmission can also be referred to as "repetition". For example, in the case where the terminal device only performs one channel transmission, the channel transmission can be referred to as "one repetition" or "repeat once". In the case where the terminal device is required to perform at least two channel transmissions, the first channel transmission can be referred to as "first repetition" or "repeat for the first time", etc.

In embodiments of the present disclosure, it can be understood that after the time-domain resource indication information is received by the terminal device, the terminal device determines the time-domain resource for channel transmission in the at least one time-domain resource according to the time-domain resource location for channel transmission indicated by the time-domain resource indication information. For the network device, the network device just needs to reach an agreement with the terminal device on the time-domain resource for channel transmission in the at least one time-domain resource. Therefore, in embodiments of the present disclosure, when the network device performs at least one channel transmission based on the time-domain resource for channel transmission in the at least one time-domain resource, the location of the time-domain resource for channel transmission in the at least one time-domain resource corresponds to the time-domain resource location for channel transmission.

The location of the time-domain resource for channel transmission in the at least one time-domain resource corresponds to the time-domain resource location for channel transmission, which can mean that the location of the time-domain resource for at least one channel transmission performed by the network device is the same as the location of the time-domain resource for at least one channel transmission determined by the terminal device according to the time-domain resource location for channel transmission. Exemplarily, the time-domain resource for channel transmission in the at least one time-domain resource may be determined by the network device before the network device sends the time-domain resource indication information to the terminal device, or the time-domain resource for channel transmission in the at least one time-domain resource may be determined by the network device after the network device sends the time-domain resource indication information to the terminal device, and then both the terminal device and the network device perform at least one channel transmission based on the time-domain resource for channel transmission in the at least one time-domain resource.

It can be understood that the direction of the channel transmission is not limited in embodiments of the present disclosure, the channel may be a UL channel or a DL channel, and the specific direction can be determined according to a channel used in actual situations. Exemplarily, in the case where the channel is the PUCCH, for the terminal device, the at least one channel transmission is at least one UL channel sending, and for the network device, the at least one channel transmission is at least one DL channel reception.

In embodiments of the present disclosure, exemplarily, all or part of the at least one channel transmission may be performed on the first time-domain resource. For example, one part of the at least one channel transmission is performed on the first time-domain resource, and the other part of the at least one channel transmission is performed on the second time-domain resource or other types of time-domain resources. For another example, all or part of the at least one channel transmission may be performed on the second time-domain resource.

In some embodiments, in the case where a time-domain resource for channel repetition is all in the second time-domain resource, if the time-domain resource indication information indicates the time-domain resource for channel transmission in the first time-domain resource, the terminal device determines a time-domain resource for channel transmission in at least one second time-domain resource according to the time-domain resource indication information, and then performs at least one channel transmission based on the time-domain resource for channel transmission in the at least one second time-domain resource.

Exemplarily, the terminal device may directly apply indication information, in the time-domain resource indication information, about the time-domain resource for channel transmission in the first time-domain resource to the second time-domain resource, or may further determine the location of the time-domain resource for channel transmission in the second time-domain resource according to other information. The other information may be, for example, a predefined or configured offset, other reference information, etc.

In the method provided in embodiments of the present disclosure, the time-domain resource location for channel transmission is indicated by the time-domain resource indication information, and then both the terminal device and the network device perform at least one channel transmission according to the time-domain resource for channel transmission in the at least one time-domain resource that corresponds to the time-domain resource location for channel transmission, where the at least one time-domain resource includes at least one first time-domain resource. As such, the time-domain resource for repetition can be effectively determined from the first time-domain resource.

It can be understood that the time-domain resource indication information may contain the first time-domain resource location indication and the first time length. In some embodiments, in the method illustrated in FIG. 4a, the operations at 402 include the following.

4021, the terminal device determines the time-domain resource for channel transmission in the at least one first time-domain resource according to the start time-domain resource of the time-domain resource for channel transmission in the first time-domain resource and the first time length.

For example, the start time-domain resource of the time-domain resource for channel transmission in the first time-domain resource may be determined by the first time-domain resource location indication in the time-domain resource indication information. A time-domain resource location indicated by the first time-domain resource location indication can be taken as the start time-domain resource for channel transmission in the first time-domain resource, and the first time length can be taken as the length of the time-domain resource for channel transmission in the first time-domain resource.

For another example, the start time-domain resource of the time-domain resource for channel transmission in the first time-domain resource may be determined by the second time-domain resource location indication in the time-domain resource indication information. In some embodiments, in the case where the time-domain resource indication information contains the second time-domain resource location indication and the second time length, the method illustrated in the FIG. 4a further includes the following.

4022, the terminal device determines the start time-domain resource of the time-domain resource for channel transmission in the first time-domain resource according to the second time-domain resource location indication and a first time location offset. Additionally/alternatively, the terminal device determines the first time length according to the second time length and a first time length offset.

In embodiments of the present disclosure, in the case where the time-domain resource indication information indicates a second time-domain resource location, the terminal device can further determine the start time-domain resource of the time-domain resource for channel transmission in the first time-domain resource according to the first time location offset. Similarly, in the case where the time-domain resource indication information indicates the second time length, the terminal device can further determine, according to the first time length offset, the length of the time-domain resource for channel transmission in the first time-domain resource, i.e., the first time length.

It can be understood that in embodiments of the present disclosure, the terminal device may determine the start time-domain resource of the time-domain resource for channel transmission in the first time-domain resource only according to the second time-domain resource location indication and the first time location offset, and the first time length may be equal to the second time length, such as (1) of Case 1 in Part 4.2 below.

Alternatively, the terminal device may determine the first time length only according to the second time length and the first time length offset, and the start time-domain resource of the time-domain resource for channel transmission in the first time-domain resource may be the same as the start time-domain resource of the time-domain resource for channel transmission in the second time-domain resource, such as (2) of Case 1 in Part 4.2 below.

Alternatively, the terminal device may determine the start time-domain resource of the time-domain resource for channel transmission in the first time-domain resource according to the second time-domain resource location indication and the first time location offset, and may determine the first time length according to the second time length and the first time length offset.

In embodiments of the present disclosure, the first time location offset may be indicated by the number of time units or may be indicated by an absolute time length, which is not limited in the present disclosure. Exemplarily, a difference or sum between a start time-domain resource location indicated by the second time-domain resource location indication and the first time location offset can be taken as the start time-domain resource of the time-domain resource for channel transmission in the first time-domain resource. Similarly, the first time length offset may be indicated by the number of time units or may be indicated by an absolute time length, which is not limited in the present disclosure. Exemplarily, a difference or sum between the second time length and the first time length offset can be taken as the first time length.

The first time location offset and the first time length offset may be predefined in a protocol, or may be configured by the network device. In some embodiments, the method illustrated in FIG. 4a further includes the following.

4023, the network device sends the terminal device first time location offset indication information, where the first time location offset indication information indicates the first time location offset, and the first time location offset is a time interval between the start time-domain resource of the time-domain resource for channel transmission in the second time-domain resource and the start time-domain resource of the time-domain resource for channel transmission in the first time-domain resource. Correspondingly, the terminal device receives the first time location offset indication information. Alternatively, the network device sends the terminal device first time length offset indication information, where the first time length offset indication information indicates the first time length offset, and the first time length offset is a difference between the second time length and the first time length. Correspondingly, the terminal device receives the first time length offset indication information.

Exemplarily, the second time location offset indication information and the second time length offset indication information may be indicated to the terminal device through higher-layer signaling and/or DCI. The higher-layer signaling may be, for example, RRC signaling, an MAC-CE, etc.

In embodiments of the present disclosure, the first time location offset indication information may be separate indication information or contained in the time-domain resource indication information. Similarly, the first time length offset indication information may be separate indication information or contained in the time-domain resource indication information. Exemplarily, both the first time location offset indication information and the first time length offset indication information may be indicated in the same indication information.

It can be understood that, as described in the operations at 403, the terminal device may perform at least one channel transmission on the first time-domain resource, or may perform at least one channel transmission on the second time-domain resource. Optionally, the at least one time-domain resource further includes at least one second time-domain resource. Therefore, in some embodiments, in the method illustrated in FIG. 4a, the operations at 402 include the following.

4024, the terminal device determines the time-domain resource for channel transmission in the at least one second time-domain resource according to the start time-domain resource of the time-domain resource for channel transmission in the second time-domain resource and the second time length. The second time length is the length of the time-domain resource for channel transmission in the second time-domain resource.

For example, the start time-domain resource of the time-domain resource for channel transmission in the second time-domain resource may be determined by the second time-domain resource location indication in the time-domain resource indication information. A time-domain resource location indicated by the second time-domain resource location indication can be taken as the start time-domain resource for channel transmission in the second time-domain resource, and the second time length can be taken as the length of the time-domain resource for channel transmission in the second time-domain resource.

For another example, the start time-domain resource of the time-domain resource for channel transmission in the second time-domain resource may be determined by the first time-domain resource location indication in the time-domain resource indication information. In some embodiments, in the case where the time-domain resource indication information contains the first time-domain resource location indication and the first time length, the method illustrated in FIG. 4a also includes the following.

4025, the terminal device determines the start time-domain resource of the time-domain resource for channel transmission in the second time-domain resources according to the first time-domain resource location indication and a second time location offset. Additionally/alternatively, the terminal device determines the second time length according to the first time length and a second time length offset.

In embodiments of the present disclosure, in the case where the time-domain resource indication information indicates a first time-domain resource location, the terminal device can further determine the start time-domain resource of the time-domain resource for channel transmission in the second time-domain resource according to the second time location offset. Similarly, in the case where the time-domain resource indication information indicates the first time length, the terminal device can further determine, according to the second time length offset, the length of the time-domain resource for channel transmission in the second time-domain resource, i.e., the second time length.

It can be understood that in embodiments of the present disclosure, the terminal device may determine the start time-domain resource of the time-domain resource for channel transmission in the second time-domain resource only according to the first time-domain resource location indication and the first time location offset, and the second time length may be equal to the first time length, such as (1) of Case 2 in Part 4.2 below.

Alternatively, the terminal device may determine the second time length only according to the first time length and the second time length offset, and the start time-domain resource of the time-domain resource for channel transmission in the second time-domain resource may be the same as the start time-domain resource of the time-domain resource for channel transmission in the first time-domain resource, such as (2) of Case 2 in Part 4.2 below.

Alternatively, the terminal device may determine the start time-domain resource of the time-domain resource for channel transmission in the second time-domain resources according to the first time-domain resource location indication and the second time location offset, and may determine the second time length according to the first time length and the second time length offset.

In embodiments of the present disclosure, the second time location offset may be indicated by the number of time units or may be indicated by an absolute time length, which is not limited in the present disclosure. Exemplarily, a difference or sum between a start time-domain resource location indicated by the first time-domain resource location indication and the second time location offset can be taken as the start time-domain resource of the time-domain resource for channel transmission in the second time-domain resource. Similarly, the second time length offset may be indicated by the number of time units or may be indicated by an absolute time length, which is not limited in the present disclosure. Exemplarily, a difference or sum between the first time length and the second time length offset can be taken as the first time length.

In embodiments of the present disclosure, the second time location offset and the second time length offset may be predefined in the protocol, or may be configured by the network device. In some embodiments, the method illustrated in FIG. 4a further includes the following.

4026, the network device sends the terminal device second time location offset indication information, where the second time location offset indication information indicates the second time location offset, and the second time location offset is a time interval between the start time-domain resource of the time-domain resource for channel transmission in the first time-domain resource and the start time-domain resource of the time-domain resource for channel transmission in the second time-domain resource. Correspondingly, the terminal device receives the second time location offset indication information. Alternatively, the network device sends the terminal device second time length offset indication information, where the second time length offset indication information indicates the second time length offset, and the second time length offset is a difference between the first time length and the second time length. Correspondingly, the terminal device receives the second time length offset indication information.

In embodiments of the present disclosure, the second time location offset indication information may be separate indication information or contained in the time-domain resource indication information. Similarly, the second time length offset indication information may be separate indication information or contained in the time-domain resource indication information. Exemplarily, both the second time location offset indication information and the second time length offset indication information may be indicated in the same indication information.

Exemplarily, the second time location offset indication information and the second time length offset indication information may be indicated to the terminal device through higher-layer signaling and/or DCI. The higher-layer signaling may be, for example, RRC signaling, an MAC-CE, etc.

### 2. Introduction to determination of a frequency-domain resource

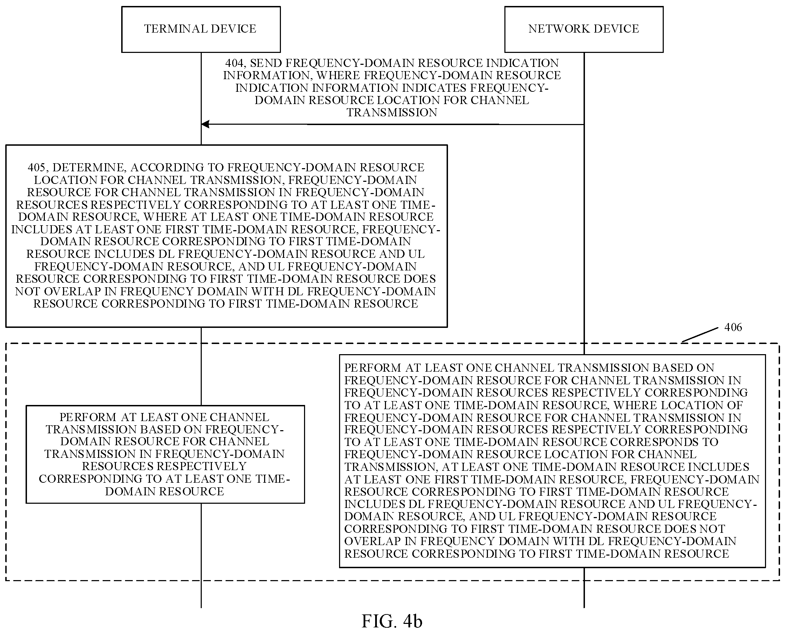

For example, reference can be made to FIG. 4b. FIG. 4b is a schematic flow chart of another communication method provided in embodiments of the present disclosure. As illustrated in FIG. 4b, the method includes the following.

404, the network device sends the terminal device frequency-domain resource indication information, where the frequency-domain resource indication information indicates a frequency-domain resource location for channel transmission. Correspondingly, the terminal device receives the frequency-domain resource indication information.

For 404, the network device indicates the frequency-domain resource location for channel transmission to the terminal device through the frequency-domain resource indication information. Exemplarily, the frequency-domain resource location for channel transmission can be understood as a location of a frequency-domain resource occupied for channel transmission. Exemplarily, the location may be a frequency-domain resource start location and a frequency-domain resource end location, may be the frequency-domain resource start location and a frequency-domain resource bandwidth, etc.

Exemplarily, the time-domain resource indication information may be indicated to the terminal device through higher-layer signaling and/or DCI. The higher-layer signaling may be, for example, RRC signaling, an MAC-CE, etc.

It can be understood that the frequency domain can be divided in different manners, to obtain frequency-domain resources with different names. In embodiments of the present disclosure, exemplarily, the frequency-domain resource may be a carrier, a subcarrier, an RB, a PRB, a VRB, a CRB, etc. It can be understood that in future communication systems, the frequency-domain resource may also use a frequency-domain resource name in the future communication systems, which is not limited in the present disclosure.

405, the terminal device determines, according to the frequency-domain resource location for channel transmission, a frequency-domain resource for channel transmission in frequency-domain resources respectively corresponding to at least one time-domain resource, where the at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

In embodiments of the present disclosure, after the frequency-domain resource indication information is received by the terminal device, the terminal device determines the frequency-domain resource for channel transmission in the frequency-domain resources respectively corresponding to the at least one time-domain resource. The at least one time-domain resource includes the at least one first time-domain resource. For the introduction to the first time-domain resource, reference can be made to the term mentioned above, in particular to related descriptions of FIG. 2a, FIG. 2b, and FIG. 2c, which will not be repeated herein.

For 405, the at least one time-domain resource can include, in addition to the at least one first time-domain resource, a second time-domain resource and other types of time-domain resources. Therefore, in some embodiments, the frequency-domain resource indication information indicates the frequency-domain resource location for channel transmission as follows. The frequency-domain resource indication information indicates a location of a frequency-domain resource for channel transmission in the frequency-domain resource corresponding to the first time-domain resource, and/or a location of a frequency-domain resource for channel transmission in a frequency-domain resource corresponding to a second time-domain resource. The frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

In embodiments of the present disclosure, the frequency-domain resource indication information may indicate the location of the frequency-domain resource for channel transmission in the frequency-domain resource corresponding to the first time-domain resource, may indicate the location of the frequency-domain resource for channel transmission in the frequency-domain resource corresponding to the second time-domain resource, and may indicate both the location of the frequency-domain resource for channel transmission in the frequency-domain resource corresponding to the first time-domain resource and the location of the frequency-domain resource for channel transmission in the frequency-domain resource corresponding to the second time-domain resource. For the introduction to the second time-domain resource, reference can be made to the term mentioned above, in particular to related descriptions of FIG. 2a, FIG. 2b, and FIG. 2c, which will not be repeated herein.

In embodiments of the present disclosure, the terminal device can directly or indirectly determine the frequency-domain resource for channel transmission in the frequency-domain resource corresponding to the first time-domain resource according to location information indicated by the frequency-domain indication information. For example, in the case where the frequency-domain resource indication information indicates the location of the frequency-domain resource for channel transmission in the frequency-domain resource corresponding to the first time-domain resource, the terminal device can directly determine, according to the frequency-domain indication information, the location of the frequency-domain resource for channel transmission in the frequency-domain resource corresponding to the first time-domain resource. In the case where the frequency-domain resource indication information only indicates the location of the frequency-domain resource for channel transmission in the frequency-domain resource corresponding to the second time-domain resource, the terminal device can also determine, according to the frequency-domain resource indication information, the location of the frequency-domain resource for channel transmission in the frequency-domain resource corresponding to the first time-domain resource. For another example, on the basis that the frequency-domain resource indication information indicates the location of the frequency-domain resource for channel transmission in the frequency-domain resource corresponding to the second time-domain resource, the terminal device can further determine the location of the frequency-domain resource for channel transmission in the frequency-domain resource corresponding to the first time-domain resource according to other information.

In embodiments of the present disclosure, the location of the frequency-domain resource for channel transmission in the frequency-domain resource corresponding to the first time-domain resource may be a start frequency-domain resource of the frequency-domain resource for channel transmission in the frequency-domain resource corresponding to the first time-domain resource and a bandwidth of the frequency-domain resource in the frequency-domain resource corresponding to the first time-domain resource, may be the start frequency-domain resource of the frequency-domain resource for channel transmission in the frequency-domain resource corresponding to the first time-domain resource and an end frequency-domain location of the frequency-domain resource for channel transmission in the frequency-domain resource corresponding to the first time-domain resource, may be the end frequency-domain location of the frequency-domain resource for channel transmission in the frequency-domain resource corresponding to the first time-domain resource and the bandwidth of the frequency-domain resource in the frequency-domain resource corresponding to the first time-domain resource, etc. It can be understood that the location of the frequency-domain resource for channel transmission in the frequency-domain resource corresponding to the second time-domain resource is similar to that in the frequency-domain resource corresponding to the first time-domain resource, which will not be repeated herein.

In embodiments of the present disclosure, the frequency-domain resource bandwidth can be understood as the size of an occupied frequency-domain resource. Optionally, the frequency-domain resource bandwidth may also be referred to as "the length of the frequency-domain resource", "the number of RBs", etc. Exemplarily, the unit of the frequency-domain resource bandwidth may be Hertz (Hz) or RB, specifically, may be PRB, VRB, CRB, etc.

Optionally, the location of the frequency-domain resource for channel transmission in the frequency-domain resource corresponding to the first time-domain resource can be a start frequency-domain location for channel transmission in the frequency-domain resource corresponding to the first time-domain resource. In this case, the frequency-domain resource for channel transmission in the frequency-domain resource corresponding to the first time-domain resource can be a predefined frequency-domain resource bandwidth. Exemplarily, the network device indicates multiple RBGs to the terminal device through higher-layer signaling or DCI, at least one RBG is determined from the multiple RBGs according to the start frequency-domain location for channel transmission in the frequency-domain resource corresponding to the first time-domain resource, and then the location of the frequency-domain resource for channel transmission in the frequency-domain resource corresponding to the first time-domain resource can be determined. Specifically, the network device indicates five RBGs, i.e., RBG1, RBG2, RBG3, RBG4, and RBG5, to the terminal device through higher-layer signaling or DCI, the start frequency-domain location indicated by the frequency-domain resource indication information is a start frequency-domain location of RBG3, and then the location of the frequency-domain resource for channel transmission in the frequency-domain resource corresponding to the first time-domain resource can be determined as RBG3.

Therefore, in some embodiments, the frequency-domain resource indication information contains first frequency-domain resource location indication and a first frequency-domain resource bandwidth. Alternatively, the frequency-domain resource indication information contains second frequency-domain resource location indication and a second frequency-domain resource bandwidth. Alternatively, the frequency-domain resource indication information contains the first frequency-domain resource location indication, the first frequency-domain resource bandwidth, the second frequency-domain resource location indication, and the second frequency-domain resource bandwidth. The first frequency-domain resource location indication indicates the start frequency-domain resource of the frequency-domain resource for channel transmission in the frequency-domain resource corresponding to the first time-domain resource. The second frequency-domain resource location indication indicates the start frequency-domain resource of the frequency-domain resource for channel transmission in the frequency-domain resource corresponding to the second time-domain resource. The first frequency-domain resource bandwidth is the bandwidth of the frequency-domain resource for channel transmission in the frequency-domain resource corresponding to the first time-domain resource. The second frequency-domain resource bandwidth is the bandwidth of the frequency-domain resource for channel transmission in the frequency-domain resource corresponding to the second time-domain resource.

In embodiments of the present disclosure, the first frequency-domain resource location indication may be absolute, for example, may be a frequency-domain resource location index. Exemplarily, the frequency-domain resource location index may be an index of an RB. Specifically, the first frequency-domain resource location indication may be an index of a start frequency-domain location of the frequency-domain resource for channel transmission in the first frequency-domain resource.

Exemplarily, the first frequency-domain resource location indication and the first frequency-domain resource bandwidth may be indicated by SLIV1, and the second frequency-domain resource location indication and the second frequency-domain resource bandwidth may be indicated by SLIV2. Exemplarily, SLIV1 and SLIV2 may be located in the same row or in different rows in a frequency-domain resource table. For the introduction to indication of the location of the frequency-domain resource for channel transmission in the frequency-domain resource corresponding to the first time-domain resource and the location of the frequency-domain resource for channel transmission in the frequency-domain resource corresponding to the second time-domain resource by SLIV1 and SLIV2 respectively, reference can be made to related descriptions in 5.1 below, which will not be repeated herein.

The first frequency-domain resource location indication may also be relative. For example, the first frequency-domain resource location indication may be a relative location relationship between the start frequency-domain location of the frequency-domain resource for channel transmission in the frequency-domain resource corresponding to the first frequency-domain resource and a start frequency-domain location of the resource for repetition, may be a relative location relationship between the start time-domain location of the frequency-domain resource for channel transmission in the frequency-domain resource corresponding to the first time-domain resource and an end frequency-domain resource location after scheduling or configuring the start frequency-domain resource for repetition, or may be a relative location relationship between the start frequency-domain location of the frequency-domain resource for channel transmission in the frequency-domain resource corresponding to the first time-domain resource and a start location of the frequency-domain resource corresponding to the first time-domain resource. The start location of the frequency-domain resource corresponding to the first time-domain resource may be a reference frequency-domain location of the frequency-domain resource corresponding to the first time-domain resource, for example, may be the first available frequency-domain resource in the frequency-domain resource corresponding to the first time-domain resource, etc. For details, reference can be made to (1) and (2) of Case 1 in Part 5.3 below.

It can be understood that the second frequency-domain resource location indication is similar to the first frequency-domain resource location indication. For example, the second frequency-domain resource location indication is relative. The second frequency-domain resource location indication may be a relative location relationship between the start frequency-domain location of the frequency-domain resource for channel transmission in the frequency-domain resource corresponding to the second time-domain resource and a reference frequency-domain location of the frequency-domain resource corresponding to the second time-domain resource. The reference frequency-domain location of the frequency-domain resource corresponding to the first time-domain resource may be the first available frequency-domain resource in the frequency-domain resource corresponding to the second time-domain resource, etc., such as (1) and (2) of Case 2 in Part 5.3 below.

In embodiments of the present disclosure, the frequency-domain resource bandwidth (e.g., the first frequency-domain resource bandwidth and the second frequency-domain resource bandwidth) may be indicated by the number of RBs or may be indicated by an absolute bandwidth, which is not limited in the present disclosure.

In some special cases, exemplarily, if the first frequency-domain resource bandwidth is the same as the second frequency-domain resource bandwidth, the frequency-domain resource indication information can contain the first frequency-domain resource location indication, the second frequency-domain resource location indication, and one frequency-domain resource bandwidth, and the frequency-domain resource bandwidth is used for determining both the bandwidth of the frequency-domain resource for channel transmission in the frequency-domain resource corresponding to the first time-domain resource and the bandwidth of the frequency-domain resource for channel transmission in the frequency-domain resource corresponding to the second time-domain resource. Similarly, if a start location of the location of the frequency-domain resource for channel transmission in the frequency-domain resource corresponding to the first time-domain resource is the same as a start location of the location of the frequency-domain resource for channel transmission in the frequency-domain resource corresponding to the second time-domain resource, the frequency-domain resource indication information can contain one frequency-domain resource location indication, and the frequency-domain resource location indication is used for determining both the start location of the frequency-domain resource for channel transmission in the frequency-domain resource corresponding to the first time-domain resource and the start location of the frequency-domain resource for channel transmission in the frequency-domain resource corresponding to the second time-domain resource.

In addition, it can be noted that the first frequency-domain resource location indication involved in the frequency-domain resource indication information can also indicate an end frequency-domain resource of the frequency-domain resource for channel transmission in the frequency-domain resource corresponding to the first time-domain resource. Alternatively, the second frequency-domain resource location indication involved in the frequency-domain resource indication information can indicate an end frequency-domain resource of the frequency-domain resource for channel transmission in the frequency-domain resource corresponding to the second time-domain resource.

Alternatively, the frequency-domain resource indication information contains the first frequency-domain resource location indication. In this case, the first frequency-domain resource location indication indicates the start frequency-domain resource of the frequency-domain resource for channel transmission in the frequency-domain resource corresponding to the first time-domain resource and the end frequency-domain resource of the frequency-domain resource for channel transmission in the frequency-domain resource corresponding to the first time-domain resource. Alternatively, the frequency-domain resource indication information contains the second frequency-domain resource location indication. In this case, the second frequency-domain resource location indication indicates the start frequency-domain resource of the frequency-domain resource for channel transmission in the frequency-domain resource corresponding to the second time-domain resource and the end frequency-domain resource of the frequency-domain resource for channel transmission in the frequency-domain resource corresponding to the second time-domain resource.

406, the terminal device performs at least one channel transmission based on the frequency-domain resource for channel transmission in the frequency-domain resources respectively corresponding to the at least one time-domain resource. Correspondingly, the network device performs at least one channel transmission based on the frequency-domain resource for channel transmission in the frequency-domain resources respectively corresponding to at least one time-domain resource. A location of the frequency-domain resource for channel transmission in the frequency-domain resources respectively corresponding to the at least one time-domain resource corresponds to the frequency-domain resource location for channel transmission. The at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

For 406, for the introduction to the channel and the at least one channel transmission, reference can be made to related descriptions at 403, which will not be repeated herein. In embodiments of the present disclosure, when the network device performs at least one channel transmission based on the time-domain resource for channel transmission in the frequency-domain resources respectively corresponding to at least one time-domain resource, the location of the time-domain resource for channel transmission in the frequency-domain resources respectively corresponding to the at least one time-domain resource corresponds to the frequency-domain resource location for channel transmission.

The location of the time-domain resource for channel transmission in the frequency-domain resources respectively corresponding to the at least one time-domain resource corresponds to the frequency-domain resource location for channel transmission, which can mean that the location of the frequency-domain resource for at least one channel transmission performed by the network device is the same as the location of the frequency-domain resource for at least one channel transmission determined by the terminal device according to the frequency-domain resource location for channel transmission. Exemplarily, the time-domain resource for channel transmission in the frequency-domain resources respectively corresponding to the at least one time-domain resource may be determined by the network device before the network device sends the frequency-domain resource indication information to the terminal device, or the time-domain resource for channel transmission in the frequency-domain resources respectively corresponding to the at least one time-domain resource may be determined by the network device after the network device sends the frequency-domain resource indication information to the terminal device, and then both the terminal device and the network device perform at least one channel transmission based on the time-domain resource for channel transmission in the frequency-domain resources respectively corresponding to the at least one time-domain resource.

In some embodiments, in the case where a frequency-domain resource for channel repetition is all in the frequency-domain resource corresponding to the second time-domain resource, if the frequency-domain resource indication information indicates the frequency-domain resource for channel transmission in the frequency-domain resource corresponding to the first time-domain resource, the terminal device determines, according to the frequency-domain resource indication information, a frequency-domain resource for channel transmission in a frequency-domain resource corresponding to at least one second time-domain resource, and then performs at least one channel transmission based on the frequency-domain resource for channel transmission in the frequency-domain resource corresponding to the at least one second time-domain resource.

Exemplarily, the terminal device can directly apply indication information, in the frequency-domain resource indication information, about the frequency-domain resource for channel transmission in the frequency-domain resource corresponding to the first time-domain resource to the frequency-domain resource corresponding to the second time-domain resource, or may further determine, according to other information, the location of the frequency-domain resource for channel transmission in the frequency-domain resource corresponding to the second time-domain resource. The other information may be, for example, a predefined or configured offset, other reference information, etc.

In the method provided in embodiments of the present disclosure, the frequency-domain resource location of the channel transmission is indicated by the frequency-domain resource indication information, and then both the terminal device and the network device perform at least one channel transmission based on the frequency-domain resource for channel transmission in the frequency-domain resources respectively corresponding to the at least one time-domain resource determined according to the frequency-domain resource location for the channel transmission, where the at least one time-domain resource includes at least one first time-domain resource. As such, the frequency-domain resource for repetition can be effectively determined from the frequency-domain resource corresponding to the first time-domain resource.

In some embodiments, in the method illustrated in FIG. 4b, the operations at 405 include the following.

4051, the terminal device determines, according to the start frequency-domain resource of the frequency-domain resource for channel transmission in the frequency-domain resource corresponding to the first time-domain resource and the first frequency-domain resource bandwidth, the frequency-domain resource for channel transmission in the frequency-domain resource corresponding to the at least one first time-domain resource.

For example, the start frequency-domain resource of the frequency-domain resource for channel transmission in the frequency-domain resource corresponding to the first time-domain resource may be determined by the first frequency-domain resource location indication in the frequency-domain resource indication information. A frequency-domain resource location indicated by the first frequency-domain resource location indication can be taken as the start frequency-domain resource for channel transmission in the frequency-domain resource corresponding to the first time-domain resource, and the first frequency-domain resource bandwidth can be taken as the length of the frequency-domain resource for channel transmission in the frequency-domain resource corresponding to the first time-domain resource, such as Case 2 in Part 5.2 below, that is, an SLIV indicates a location of a frequency-domain resource for channel transmission in a frequency-domain resource corresponding to an SBFD slot.

For another example, the start frequency-domain resource of the frequency-domain resource for channel transmission in the frequency-domain resource corresponding to the first time-domain resource may be determined by the second time-domain resource location indication in the frequency-domain resource indication information, such as Case 1 in Part 5.2 below, that is, an SLIV indicates a location of a frequency-domain resource for channel transmission in a frequency-domain resource corresponding to a non-SBFD slot, and the location of the frequency-domain resource for channel transmission in the frequency-domain resource corresponding to the SBFD slot can be obtained based on the SLIV.

In some embodiments, in the case where the frequency-domain resource indication information contains the second time-domain resource location indication and the second frequency-domain resource bandwidth, the method illustrated in FIG. 4b further includes the following.

4052, the terminal device determines, according to the second frequency-domain resource location indication and a first frequency-domain location offset, the start frequency-domain resource of the frequency-domain resource for channel transmission in the frequency-domain resource corresponding to the first time-domain resource. Additionally/alternatively, the terminal device determines the first frequency-domain resource bandwidth according to the second frequency-domain resource bandwidth and a first frequency-domain bandwidth offset.

In embodiments of the present disclosure, in the case where the frequency-domain resource indication information indicates a frequency-domain resource location corresponding to the second time-domain resource, the terminal device can further determine, according to the first frequency-domain location offset, the start frequency-domain resource of the frequency-domain resource for channel transmission in the frequency-domain resource corresponding to the first time-domain resource. Similarly, in the case where the frequency-domain resource indication information indicates the second frequency-domain resource bandwidth, the terminal device can further determine, according to the first frequency-domain bandwidth offset, the length of the frequency-domain resource for channel transmission in the frequency-domain resource corresponding to the first time-domain resource, i.e., the first frequency-domain resource bandwidth.

It can be understood that in embodiments of the present disclosure, the terminal device may determine the start frequency-domain resource of the frequency-domain resource for channel transmission in the frequency-domain resource corresponding to the first time-domain resource only according to the second time-domain resource location indication and the first frequency-domain location offset, and the first frequency-domain resource bandwidth may be equal to the second frequency-domain resource bandwidth, such as (1) of Case 1 in Part 5.2 below.

Alternatively, the terminal device may determine the first frequency-domain resource bandwidth only according to the second frequency-domain resource bandwidth and the first frequency-domain bandwidth offset, and the start frequency-domain resource of the frequency-domain resource for channel transmission in the frequency-domain resource corresponding to the first time-domain resource may be the same as the start frequency-domain resource of the frequency-domain resource for channel transmission in the frequency-domain resource corresponding to the second time-domain resource, such as (2) of Case 1 in Part 5.2 below.

Alternatively, the terminal device may determine the start frequency-domain resource of the frequency-domain resource for channel transmission in the frequency-domain resource corresponding to the first time-domain resource according to the second time-domain resource location indication and the first frequency-domain location offset, and may determine the first frequency-domain resource bandwidth according to the second frequency-domain resource bandwidth and the first frequency-domain bandwidth offset.

In embodiments of the present disclosure, the first frequency-domain location offset may be indicated by the number of RBs or may be indicated by an absolute bandwidth, which is not limited in the present disclosure. Exemplarily, a difference or sum between a start frequency-domain resource location indicated by the second time-domain resource location indication and the first frequency-domain location offset can be taken as the start frequency-domain resource of the frequency-domain resource for channel transmission in the frequency-domain resource corresponding to the first time-domain resource. Similarly, the first frequency-domain bandwidth offset may be indicated by the number of RBs or may be indicated by an absolute bandwidth, which is not limited in the present disclosure. Exemplarily, a difference or sum between the second frequency-domain resource bandwidth and the first frequency-domain bandwidth offset can be taken as the first frequency-domain resource bandwidth.

Exemplarily, the first frequency-domain location offset and the first frequency-domain bandwidth offset may be predefined in the protocol, or may be configured by the network device. In some embodiments, the method illustrated in FIG. 4b further includes the following.

4053, the network device sends the terminal device first frequency-domain location offset indication information, where the first frequency-domain location offset indication information indicates the first frequency-domain location offset, and the first frequency-domain location offset is a bandwidth interval between the start frequency-domain resource of the frequency-domain resource for channel transmission in the frequency-domain resource corresponding to the second time-domain resource and the start frequency-domain resource of the frequency-domain resource for channel transmission in the frequency-domain resource corresponding to the first time-domain resource. Correspondingly, the terminal device receives the first frequency-domain location offset indication information. Alternatively, the network device sends the terminal device first frequency-domain bandwidth offset indication information, where the first frequency-domain bandwidth offset indication information indicates the first frequency-domain bandwidth offset, and the first frequency-domain bandwidth offset is a difference between the second frequency-domain resource bandwidth and the first frequency-domain resource bandwidth. Correspondingly, the terminal device receives the first frequency-domain bandwidth offset indication information.

Exemplarily, the second time location offset indication information and the second time length offset indication information may be indicated to the terminal device through higher-layer signaling and/or DCI. The higher-layer signaling may be, for example, RRC signaling, an MAC-CE, etc.

In embodiments of the present disclosure, the first frequency-domain location offset indication information may be separate indication information or contained in the frequency-domain resource indication information. Similarly, the first frequency-domain bandwidth offset indication information may be separate indication information or contained in the frequency-domain resource indication information. Exemplarily, both the first frequency-domain location offset indication information and the first frequency-domain bandwidth offset indication information may be indicated in the same indication information.

It can be understood that, as described in the operations at 405, the terminal device may perform at least one channel transmission on the frequency-domain resource corresponding to the first time-domain resource, or may perform at least one channel transmission on the frequency-domain resource corresponding to the second time-domain resource. Optionally, the at least one frequency-domain resource further includes a frequency-domain resource corresponding to at least one second time-domain resource. Therefore, in some embodiments, in the method illustrated in FIG. 4b, the operations at 405 include the following.

4054, the terminal device determines, according to the start frequency-domain resource of the frequency-domain resource for channel transmission in the frequency-domain resource corresponding to the second time-domain resource and the second frequency-domain resource bandwidth, the frequency-domain resource for channel transmission in the frequency-domain resource corresponding to the at least one second time-domain resource. The second frequency-domain resource bandwidth is the bandwidth of the frequency-domain resource for channel transmission in the frequency-domain resource corresponding to the second time-domain resource.

For example, the start frequency-domain resource of the frequency-domain resource for channel transmission in the frequency-domain resource corresponding to the second time-domain resource may be determined by the second frequency-domain resource location indication in the frequency-domain resource indication information. A frequency-domain resource location indicated by the second frequency-domain resource location indication can be taken as the start frequency-domain resource for channel transmission in the frequency-domain resource corresponding to the second time-domain resource, and the second frequency-domain resource bandwidth can be taken as the length of the frequency-domain resource for channel transmission in the frequency-domain resource corresponding to the second time-domain resource, such as Case 1 in Part 5.2 below, that is, an SLIV indicates a location of a frequency-domain resource for channel transmission in a frequency-domain resource corresponding to a non-SBFD slot.

For another example, the start frequency-domain resource of the frequency-domain resource for channel transmission in the frequency-domain resource corresponding to the second time-domain resource may be determined by the first frequency-domain resource location indication in the frequency-domain resource indication information, such as Case 2 in 5.2 below, that is, an SLIV indicates a location of a frequency-domain resource for channel transmission in a frequency-domain resource corresponding to an SBFD slot, and the location of the frequency-domain resource for channel transmission in the frequency-domain resource corresponding to the non-SBFD slot can be obtained based on the SLIV.

In some embodiments, in the case where the frequency-domain resource indication information contains the first frequency-domain resource location indication and the first frequency-domain resource bandwidth, the method illustrated in FIG. 4b further includes the following.

4055, the terminal device determines, according to the first frequency-domain location indication and a second frequency-domain location offset, the start frequency-domain resource of the frequency-domain resource for channel transmission in the frequency-domain resource corresponding to the second time-domain resource. Additionally/alternatively, the terminal device determines the second frequency-domain resource bandwidth according to the first frequency-domain resource bandwidth and a second frequency-domain bandwidth offset.

In embodiments of the present disclosure, in the case where the frequency-domain resource indication information indicates a frequency-domain resource location corresponding to the first time-domain resource, the terminal device can further determine, according to the second time location offset, the start frequency-domain resource of the frequency-domain resource for channel transmission in the frequency-domain resource corresponding to the second time-domain resource. Similarly, in the case where the frequency-domain resource indication information indicates the first frequency-domain resource bandwidth, the terminal device can further determine, according to the second frequency-domain bandwidth offset, the bandwidth of the frequency-domain resource for channel transmission in the frequency-domain resource corresponding to the second time-domain resource.

It can be understood that in embodiments of the present disclosure, the terminal device may determine, only according to the first frequency-domain resource location indication and the first frequency-domain location offset, the start frequency-domain resource of the frequency-domain resource for channel transmission in the frequency-domain resource corresponding to the second time-domain resource, and the second frequency-domain resource bandwidth may be equal to the first frequency-domain resource bandwidth, or may be obtained according to other methods, such as (1) of Case 2 in Part 5.2 below.

Alternatively, the terminal device may determine the second frequency-domain resource bandwidth only according to the first frequency-domain resource bandwidth and the second frequency-domain bandwidth offset, and the start frequency-domain resource of the frequency-domain resource for channel transmission in the frequency-domain resource corresponding to the second time-domain resource may be the same as the start frequency-domain resource of the frequency-domain resource for channel transmission in the frequency-domain resource corresponding to the first time-domain resource, such as (2) of Case 2 in Part 5.2 below.

Alternatively, the terminal device may determine, according to a first resource location indication and the second frequency-domain location offset, the start frequency-domain resource of the frequency-domain resource for channel transmission in the frequency-domain resource corresponding to the second time-domain resource, and may determine the second frequency-domain resource bandwidth according to the first frequency-domain resource bandwidth and the second frequency-domain bandwidth offset.

In embodiments of the present disclosure, the second frequency-domain location offset may be indicated by the number of RBs or may be indicated by an absolute bandwidth, which is not limited in the present disclosure. Exemplarily, a difference or sum between a start frequency-domain resource location indicated by the frequency-domain resource location indication corresponding to the first time-domain resource and the second frequency-domain location offset can be taken as the start frequency-domain resource of the frequency-domain resource for channel transmission in the frequency-domain resource corresponding to the second time-domain resource. Similarly, the second frequency-domain bandwidth offset may be indicated by the number of RBs or may be indicated by an absolute bandwidth, which is not limited in the present disclosure. Exemplarily, a difference or sum between the first frequency-domain resource bandwidth and the second frequency-domain bandwidth offset can be taken as the first frequency-domain resource bandwidth.

In embodiments of the present disclosure, the second frequency-domain location offset and the second frequency-domain bandwidth offset may be predefined in the protocol, or may be configured by the network device. In some embodiments, the method illustrated in FIG. 4b further includes the following.

4056, the network device sends the terminal device second frequency-domain location offset indication information, where the second frequency-domain location offset indication information indicates the second frequency-domain location offset, and the second frequency-domain location offset is a bandwidth interval between the start frequency-domain resource of the frequency-domain resource for channel transmission in the frequency-domain resource corresponding to the first time-domain resource and the start frequency-domain resource of the frequency-domain resource for channel transmission in the frequency-domain resource corresponding to the second time-domain resource. Correspondingly, the terminal device receives the second frequency-domain location offset indication information. Alternatively, the network device sends the terminal device second frequency-domain bandwidth offset indication information, where the second frequency-domain bandwidth offset indication information indicates the second frequency-domain bandwidth offset, and the second frequency-domain bandwidth offset is a difference between the first frequency-domain resource bandwidth and the second frequency-domain resource bandwidth. Correspondingly, the terminal device receives the second frequency-domain bandwidth offset indication information.

In embodiments of the present disclosure, the second frequency-domain location offset indication information may be separate indication information or contained in the frequency-domain resource indication information. Similarly, the second frequency-domain resource bandwidth offset indication information may be separate indication information or contained in the frequency-domain resource indication information. Exemplarily, both the second frequency-domain location offset indication information and the second frequency-domain bandwidth offset indication information may be indicated in the same indication information.

Exemplarily, the second frequency-domain location offset indication information and the second frequency-domain bandwidth offset indication information may be indicated to the terminal device through higher-layer signaling and/or DCI. The higher-layer signaling may be, for example, RRC signaling, an MAC-CE, etc.

### 3. Introduction to determination of a frequency hopping (FH) resource

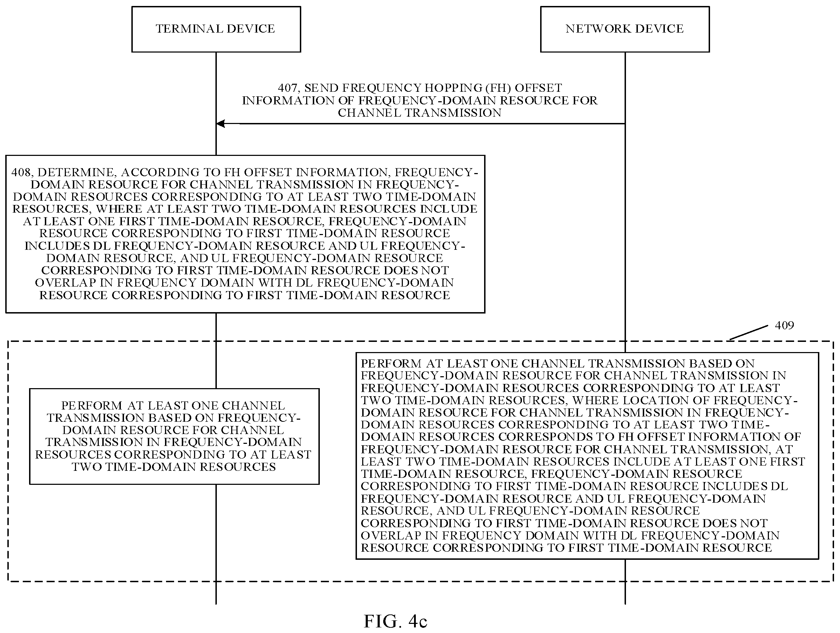

For example, reference can be made to FIG. 4c. FIG. 4c is a schematic flow chart of yet another communication method provided in embodiments of the present disclosure. As illustrated in FIG. 4c, the method includes the following.

407, the network device sends the terminal device FH offset information of the frequency-domain resource for channel transmission. Correspondingly, the terminal device receives the FH offset information of the frequency-domain resource for channel transmission.

For 407, when an FH transmission is configured, the network device indicates the FH offset information during the FH transmission to the terminal device through the FH offset information. For example, the time unit is taken as a slot. The FH offset information may be FH offset information of an intra-slot FH, or may be FH offset information of an inter-slot FH.

Exemplarily, the FH offset information may be indicated to the terminal device through higher-layer signaling and/or DCI, and the higher-layer signaling may be, for example, RRC signaling, an MAC-CE, etc. It can be understood that the FH offset information may be indicated to the terminal device separately, or may be indicated to the terminal device together with time-domain resource location indication information and/or the frequency-domain resource indication information.

In embodiments of the present disclosure, the FH offset can also be referred to as "FH interval", "FH offset amount", etc., or may be understood as an offset in Part 6 below.

In embodiments of the present disclosure, the configured FH transmission can be an FH transmission on the frequency-domain resource determined in the related embodiments of FIG. 4b mentioned above. In other words, in embodiments of the present disclosure, a start location of a frequency-domain resource for FH transmission can be determined according to the related embodiments of FIG. 4b mentioned above.

408, the terminal device determines, according to the FH offset information, a frequency-domain resource for channel transmission in frequency-domain resources corresponding to at least two time-domain resources. The at least two time-domain resources include at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

For 408, the frequency-domain resources corresponding to the at least two time-domain resources can be understood as a frequency-domain resource for the first hop and a frequency-domain resource for the second hop, respectively. The at least two time-domain resources include the at least one first time-domain resource, and for the introduction to the first time-domain resource, reference can be made to the term mentioned above, in particular to related descriptions of FIG. 2a, FIG. 2b, and FIG. 2c, which will not be repeated herein.

409, the terminal device performs at least one channel transmission based on the frequency-domain resource for channel transmission in the frequency-domain resources corresponding to the at least two time-domain resources. Correspondingly, the network device performs at least one channel transmission based on the frequency-domain resource for channel transmission in the frequency-domain resources corresponding to the at least two time-domain resources. A location of the frequency-domain resource for channel transmission in the frequency-domain resources corresponding to the at least two time-domain resources corresponds to the FH offset information of the frequency-domain resource for channel transmission. The at least two time-domain resources include at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in the frequency domain with the DL frequency-domain resource corresponding to the first time-domain resource.

In embodiments of the present disclosure, one channel transmission can be one FH transmission, and one FH transmission can include the first hop and the second hop. Therefore, the at least one channel transmission can also be understood as at least one FH transmission. Exemplarily, the number of FH transmissions can be configured by the network device through higher-layer signaling.

For 409, the location of the frequency-domain resource for channel transmission in the frequency-domain resources corresponding to the at least two time-domain resources corresponds to the FH offset information of the frequency-domain resource for channel transmission. It can be understood that a location of the frequency-domain resource for the at least one channel transmission performed by the network device is the same as the frequency-domain resource for channel transmission in the frequency-domain resources corresponding to the at least two time-domain resources determined by the terminal device according to the FH offset information of the frequency-domain resource for channel transmission. Exemplarily, the frequency-domain resource for channel transmission in the frequency-domain resources corresponding to the at least two time-domain resources may be determined by the network device before the network device sends the FH offset information of the frequency-domain resource for channel transmission to the terminal device, or the frequency-domain resource for channel transmission in the frequency-domain resources corresponding to the at least two time-domain resources may be determined by the network device after the network device sends the FH offset information of the frequency-domain resource for channel transmission to the terminal device, and then both the terminal device and the network device perform at least one channel transmission based on the frequency-domain resource for channel transmission in the frequency-domain resources corresponding to the at least two time-domain resources.

**In** the method provided in embodiments of the present disclosure, the FH offset for channel transmission is indicated by the FH offset information, and then both the terminal device and the network device perform at least one channel transmission according to the frequency-domain resource for channel transmission in the frequency-domain resources corresponding to the at least two time-domain resources that corresponds to the FH offset information, where at least two time-domain resources include at least one first time-domain resource. As such, in the case of FH transmission, a frequency-domain resource for repetition can be effectively determined from the first time-domain resource.

Since the time-domain resource is divided into the first time-domain resource and the second time-domain resource, in embodiments of the present disclosure, the FH transmission may be performed on the frequency-domain resource corresponding to the first time-domain resource, may be performed on the second time-domain resource, or may be performed between the first time-domain resource and the second time-domain resource. In some embodiments, the at least two time-domain resources include at least one second time-domain resource. For the introduction to the second time-domain resource, reference can be made to the term mentioned above, in particular to related descriptions of FIG. 2a, FIG. 2b, and FIG. 2c, which will not be repeated herein.

In some embodiments, in the method illustrated in FIG. 4c, the FH offset information indicates at least one of a first FH offset, a second FH offset, a third FH offset, or a fourth FH offset. The first FH offset is an FH offset of a frequency-domain resource for channel transmission between a first time-domain resource and a first time-domain resource. The second FH offset is an FH offset of a frequency-domain resource for channel transmission between a first time-domain resource and a second time-domain resource. The third FH offset is an FH offset of a frequency-domain resource for channel transmission between a second time-domain resource and a first time-domain resource. The fourth FH offset is an FH offset of a frequency-domain resource for channel transmission between a second time-domain resource and a second time-domain resource. A frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

In embodiments of the present disclosure, the FH offset may be indicated by the number of frequency-domain resource units or may be indicated by the size of a frequency band, which is not limited in the present disclosure. For example, the frequency-domain resource unit may be an RB, a PRB, a VRB, a CRB, etc.

In the embodiments of the present disclosure, the first FH offset can be understood as an FH offset when, in one FH transmission, a time-domain resource corresponding to the first hop is the first time-domain resource and a time-domain resource corresponding to the second hop is also the first time-domain resource, such as Combination (2) in Part 6. The second FH offset can be understood as an FH offset when, in one FH transmission, the time-domain resource corresponding to the first hop is the first time-domain resource, and the time-domain resource corresponding to the second hop is the second time-domain resource, such as Combination (4) in Part 6. The third FH offset can be understood as an FH offset when, in one FH transmission, the time-domain resource corresponding to the first hop is the second time-domain resource, and the time-domain resource corresponding to the second hop is the first time-domain resource, such as Combination (3) in Part 6. The fourth FH offset can be understood as an FH offset when, in one FH transmission, the time-domain resource corresponding to the first hop is the second time-domain resource, and the time-domain resource corresponding to the second hop is also the second time-domain resource, such as Combination (1) in Part 6.

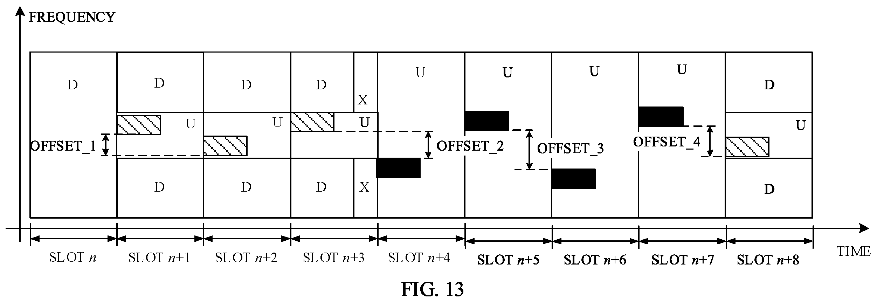

In embodiments of the present disclosure, in the case where the FH offset information indicates the first FH offset, the second FH offset, the third FH offset, and the fourth FH offset, a corresponding FH offset can be used for each FH transmission according to the specific FH situations. Exemplarily, in the case where the time-domain resource corresponding to the first hop is the second time-domain resource and the time-domain resource corresponding to the second hop is the first time-domain resource, the third FH offset is used, and for the details, reference can be made to related descriptions of FIG. 13 below.

In the case where the FH offset information does not indicate FH offsets under all situations, an FH offset under an unindicated situation can be obtained according to an indicated FH offset. Optionally, in the case where the FH offset information indicates the first FH offset, the method illustrated in FIG. 4c further includes the following.

410, at least one of the second FH offset, the third FH offset, or the fourth FH offset is determined according to the first FH offset.

For example, in the case where the FH offset indicates the first FH offset, any one of the second FH offset, the third FH offset, and the fourth FH offset may have the same value as the first FH offset.

For another example, the network device configures multiple FH offset candidate values for each of the four FH situations through higher-layer signaling. When a location of the first FH offset in the multiple FH offset candidate values is indicated by the FH offset information, other FH situations each are configured with five FH offset candidate values. If the network device indicates through the FH offset information that the FH offset of Combination (1) is the second value among the five FH offset candidate values, other FH combinations can also take the second value among the five FH offset candidate values as their FH offset.

It can be understood that in the case where the FH offset information indicates the second FH offset, the method illustrated in FIG. 4c can further include the following. At least one of the first FH offset, the third FH offset, or the fourth FH offset is determined according to the second FH offset.

In the case where the FH offset information indicates the third FH offset, the method illustrated in FIG. 4c can further include the following. At least one of the first FH offset, the second FH offset, or the fourth FH offset is determined according to the third FH offset.

In the case where the FH offset information indicates the fourth FH offset, the method illustrated in FIG. 4c can further include the following. At least one of the first FH offset, the second FH offset, or the third FH offset is determined according to the fourth FH offset.

Similarly, in the case where the FH offset information indicates the first FH offset and the second FH offset, the method illustrated in FIG. 4c can further include the following. At least one of the third FH offset or the fourth FH offset is determined according to the first FH offset and the second FH offset. It can be understood that other situations are similar, which will not be repeated herein.

It can be noted that in embodiments of the present disclosure, the numbers before the operations are made to facilitate the description and understanding of the solution and cannot be understood as a limitation to an execution order of the operations.

To facilitate a clearer understanding of the method provided in embodiments of the present disclosure, for example, the communication method is introduced with the time unit as a slot and the basic time unit as an OFDM symbol. In the following examples, a slot including the first time-domain resource can be referred to as "SBFD slot", for example, all or part of time-domain resources in a slot are the first time-domain resource, and a slot not including the first time-domain resource can be referred to as "non-SBFD slot", for example, a slot only including the second time-domain resource.

Next, the slot is taken as an example, and determination of the time-domain resource, determination of the frequency-domain resource, and determination of the FH resource are introduced respectively.

### 4. Determination of the time-domain resource

### 4.1 Indicating two SLIVs

In embodiments of the present disclosure, a time-domain resource location in the non-SBFD slot and a time-domain resource location in an SBFD slot can be absolutely indicated by two SLIVs, respectively. For example, SLIV1 and SLIV2 can be indicated, SLIV1 indicates the location of the time-domain resource for channel transmission in the second time-domain resource, and SLIV2 indicates the location of the time-domain resource for channel transmission in the first time-domain resource. Alternatively, SLIV1 can be understood as the second time-domain resource location indication and the second time length, and SLIV2 can be understood as the first time-domain resource location indication and the first time length.

In a possible implementation, the time-domain resource table includes two fields, i.e., field A and field B. Field A indicates a time-domain resource location for channel transmission in the non-SBFD slot, and field B indicates a time-domain resource location for channel transmission in the SBFD slot. It can be understood that a location of field A and a location of field B are not limited in embodiments of the present disclosure, and field A may be followed by field B, or field B may be followed by field A.

In another possible implementation, DCI or higher-layer signaling may include field C, where part A of field C indicates the time-domain resource location for channel transmission in the non-SBFD slot, and part B of field C indicates the time-domain resource location for channel transmission in the SBFD slot. It can be understood that a location of part A and a location of part B are not limited in embodiments of the present disclosure, and part A may be followed by part B, or part B may be followed by part A. Exemplarily, field C has eight bits, the first four bits can be understood as part A, and the last four bits can be understood as part B.

To facilitate understanding, exemplarily, reference can be made to FIG. 5a and FIG. 5b. FIG. 5a is a schematic diagram illustrating determination of a time-domain resource location for channel transmission based on two SLIVs provided in embodiments of the present disclosure. FIG. 5b is a schematic diagram of slots provided in embodiments of the present disclosure. FIG. 5b exemplarily illustrates a UL/DL allocation in slot *n,* slot *n*+1, slot *n+2,* slot *n*+3, and slot *n*+4.

Exemplarily, as illustrated in FIG. 5a, the time-domain resource table can include a time-domain resource location field in the non-SBFD slot for indicating SLIV1, and can also include a time-domain resource location field in the SBFD slot for indicating SLIV2. SLIV1 indicates the time-domain resource location for channel transmission in the non-SBFD slot, and SLIV2 indicates the time-domain resource location for channel transmission in the SBFD slot.

For simplicity in the diagram, in embodiments of the present disclosure, the method provided in the present disclosure is described with an example that each slot has 14 OFDM symbols and the 14 OFDM symbols in each slot are numbered from 0 to 13. It can be understood that a case where the number of OFDM symbols in the slot is 12 or other numbers is similar to the above, and the OFDM symbols in each slot can also be numbered in other forms.

The PDSCH is taken as an example. Exemplarily, the TDRA field in the DCI indicates one row with an index of *X* in the time-domain resource table. As illustrated in FIG. 5a, K₀ is 0, in SLIV1, *S* is 8, and *L* is 4, and in SLIV2, *S* is 9, and *L* is 4.

Exemplarily, the number of PDSCH repetitions is 3 times and K₀ is 0, which indicates that the PDSCH repetition is performed in slot *n,* slot *n*+1, and slot *n+2* as illustrated in FIG. 5b. In the slots illustrated in FIG. 5b, slot *n* is a non-SBFD slot, and thus the *8-th* OFDM symbol to the 11(i.e., 8+4-1)-th OFDM symbol in slot *n* are used for PDSCH transmission, as illustrated in the black-filled part in FIG. 5b, and slot *n*+1 and slot *n+2* are SBFD slots, and thus the *9-th* OFDM symbol to the 12(9+4-1)-th OFDM symbol in slot *n*+1 and slot *n+2* are used for PDSCH transmission.

### 4.2 Indicating one SLIV+offset

Case 1, the time-domain resource indication information indicates one SLIV, the SLIV indicates the time-domain resource location for channel transmission in the non-SBFD slot, and the time-domain resource location for channel transmission in the SBFD slot is obtained in any one of the following manners.
(1) A start location of the time-domain resource for channel transmission in the SBFD slot is equal to a sum of a start location of the time-domain resource for channel transmission in the non-SBFD slot and the offset, and the length of the time-domain resource for channel transmission in the SBFD slot is equal to the length of the time-domain resource for channel transmission in the non-SBFD slot. The offset can be understood as the first time location offset.
(2) The start location of the time-domain resource for channel transmission in the SBFD slot is the same as that in the non-SBFD slot, and the length of the time-domain resource for channel transmission in the SBFD slot is equal to a sum of the length of the time-domain resource for channel transmission in the non-SBFD slot and the offset. The offset can be understood as the first time length offset.

To facilitate understanding of (1) of Case 1, exemplarily, reference can be made to FIG. 6a and FIG. 6b. FIG. 6a is a schematic diagram illustrating indication of a time-domain resource location for channel transmission in an SBFD slot through one SLIV provided in embodiments of the present disclosure. FIG. 6b is another schematic diagram of slots provided in embodiments of the present disclosure. FIG. 6b exemplarily illustrates the UL/DL allocation in slot *n,* slot *n*+1, slot *n+2,* slot *n*+3, and slot *n*+4.

The PUSCH is taken as an example. Exemplarily, the TDRA field in the DCI indicates one row with an index *of X in* the time-domain resource table, and one SLIV is included in the row. As illustrated in FIG. 6a, K₀ is 0, S is 0, and *L* is 7. In embodiments of the present disclosure, exemplarily, the offset is 5.

Exemplarily, the number of PUSCH repetitions is 4 times and K₀ is 0, which indicates that the PDSCH repetition is performed in slot *n*+1, slot *n+2,* slot *n*+3, and slot *n*+4 as illustrated in FIG. 6b. In the slots illustrated in FIG. 6b, slot *n*+4 is a non-SBFD slot, and thus the *0-th* OFDM symbol to the 6(0+7-1)-*th* OFDM symbol in slot *n*+4, according to the SLIV as illustrated in FIG. 6a, are used for PUSCH transmission, as illustrated in the black-filled part in FIG. 6b.

As illustrated in FIG. 6b, slot *n*+1, slot *n+2,* and slot *n*+3 are SBFD slots. Therefore, according to the SLIV and the offset illustrated in FIG. 6a, a start location of the time-domain resource for channel transmission in each SBFD slot is obtained as the 5(0+5)-*th* OFDM symbol, i.e., the sum of the start location of the time-domain resource for channel transmission in the non-SBFD slot and the offset, and the length of the time-domain resource for channel transmission in each SBFD slot is 7 OFDM symbols, i.e., the length of the time-domain resource for channel transmission in the non-SBFD slot. Finally, as illustrated in FIG. 6b, the *5-th* OFDM symbol to the 11(5+7-1)-*th* OFDM symbol in slot *n*+1, slot *n+2,* and slot *n*+3 are used for PUSCH transmission.

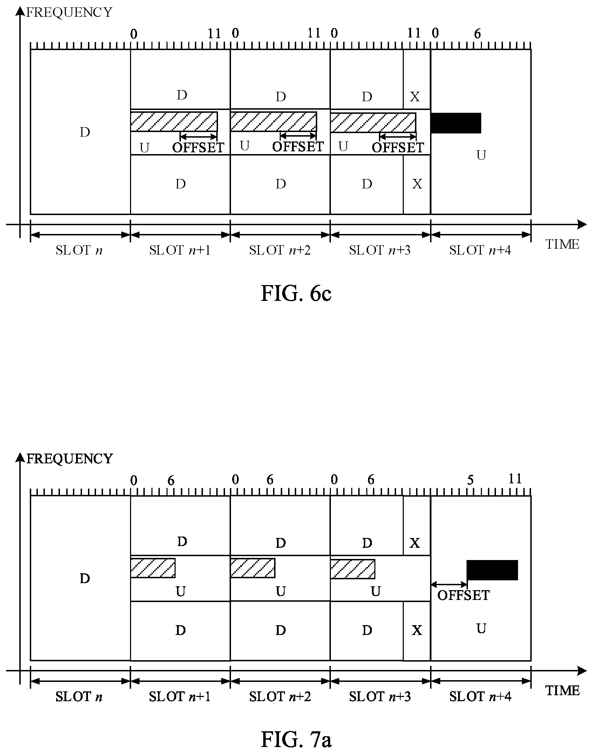

To facilitate understanding of (2) of Case 1, exemplarily, reference can be made to FIG. 6c. FIG. 6c is yet another schematic diagram of slots provided in embodiments of the present disclosure. FIG. 6c exemplarily illustrates the UL/DL allocation in slot *n*, slot *n*+1, slot *n+2,* slot *n*+3, and slot *n*+4.

To facilitate understanding, the SLIV and the K₀ illustrated in FIG. 6a are used again. In embodiments of the present disclosure, the number of PUSCH repetitions is 4 times, and repetition is performed in slot *n*+1, slot *n+2,* slot *n*+3, and slot *n*+4 as illustrated in FIG. 6c. In the slots illustrated in FIG. 6c, slot *n*+4 is a non-SBFD slot, and thus the *0-th* OFDM symbol to the 6(0+7-1)-*th* OFDM symbol in slot *n*+4, according to the SLIV illustrated in FIG. 6a, are used for PUSCH transmission, as illustrated in the black-filled part in FIG. 6c. In embodiments of the present disclosure, exemplarily, the offset is 5.

As illustrated in FIG. 6c, slot *n*+1, slot *n+2,* and slot *n*+3 are SBFD slots. Therefore, according to the SLIV and the offset illustrated in FIG. 6a, the start location of the time-domain resource for channel transmission in each SBFD slot is obtained as the *0-th* OFDM symbol, i.e., is the same as the start location of the time-domain resource for channel transmission in the non-SBFD slot, and the length of the time-domain resource for channel transmission in each SBFD slot is equal to 12(7+5) OFDM symbols, i.e., the sum of the length of the time-domain resource for channel transmission in the non-SBFD slot and the offset. Finally, as illustrated in FIG. 6c, the *0-th* OFDM symbol to the 11(12-1)-*th* OFDM symbol in slot *n*+1, slot *n+2,* and slot *n*+3 are used for PUSCH transmission.

Case 2, the time-domain resource indication information indicates one SLIV, the SLIV indicates the time-domain resource location for channel transmission in the SBFD slot, and the time-domain resource location for channel transmission in the non-SBFD slot is obtained in any one of the following manners.
(1) The start location of the time-domain resource for channel transmission in the non-SBFD slot is equal to the sum of the start location of the time-domain resource for channel transmission in the SBFD slot and the offset, and the length of the time-domain resource for channel transmission in the non-SBFD slot is equal to the length of the time-domain resource for channel transmission in the SBFD slot. The offset can be understood as the second time location offset.
(2) The start location of the time-domain resource for channel transmission in the non-SBFD slot is the same as that in the SBFD slot, and the length of the time-domain resource for channel transmission in the non-SBFD slot is equal to the sum of the length of the time-domain resource for channel transmission in the SBFD slot and the offset. The offset can be understood as the second time length offset.

To facilitate understanding of (1) of Case 2, exemplarily, reference can be made to FIG. 7a. FIG. 7a is yet another schematic diagram of slots provided in embodiments of the present disclosure. FIG. 7a exemplarily illustrates the UL/DL allocation in slot n, slot *n*+1, slot *n+2,* slot *n*+3, and slot *n*+4.

To facilitate understanding, the SLIV and the *K*₀ illustrated in FIG. 6a are used again. In embodiments of the present disclosure, the offset is 5, the number of PUSCH repetitions is 4 times, and repetition is performed in slot *n*+1, slot *n+2,* slot *n*+3, and slot *n*+4 as illustrated in FIG. 7a. In the slots illustrated in FIG. 7a, slot *n*+1, slot *n+2,* and slot *n*+3 are SBFD slots, and thus the *0-th* OFDM symbol to the 6(0+7-1)-*th* OFDM symbol in the three slots, according to the SLIV illustrated in FIG. 6a, are used for PUSCH transmission.

As illustrated in FIG. 7a, slot *n*+4 is a non-SBFD slot. Therefore, according to the SLIV and the offset illustrated in FIG. 6a, the start location of the time-domain resource for channel transmission in the non-SBFD slot is obtained as the 5(0+5)-*th* OFDM symbol, i.e., the sum of the start location of the time-domain resource for channel transmission in the SBFD slot and the offset, and the length of the time-domain resource for channel transmission in the non-SBFD slot is equal to 7 OFDM symbols, i.e., is the same as the length of the time-domain resource for channel transmission in the SBFD slot. Finally, as illustrated in FIG. 7a, the *5-th* OFDM symbol to the 11(5+7-1)-*th* OFDM symbol in slot *n*+4 are used for PUSCH transmission.

To facilitate understanding of (2) of Case 2, exemplarily, reference can be made to FIG. 7b. FIG. 7b is yet another schematic diagram of slots provided in embodiments of the present disclosure. FIG. 7b exemplarily illustrates the UL/DL allocation in slot n, slot *n*+1, slot *n+2,* slot *n*+3, and slot *n*+4.

To facilitate understanding, the SLIV and the K₀ illustrated in FIG. 6a are used again. In embodiments of the present disclosure, the offset is 4, the number of PUSCH repetitions is 4 times, and repetition is performed in slot *n*+1, slot *n+2,* slot *n*+3, and slot *n*+4 as illustrated in FIG. 7b. In the slots illustrated in FIG. 7a, slot *n*+1, slot *n+2,* and slot *n*+3 are SBFD slots, and thus the *0-th* OFDM symbol to the 6(0+7-1)-*th* OFDM symbol in the three slots, according to the SLIV illustrated in FIG. 6a, are used for PUSCH transmission.

As illustrated in FIG. 7a, slot *n*+4 is a non-SBFD slot. Therefore, according to the SLIV and the offset illustrated in FIG. 6a, the start location of the time-domain resource for channel transmission in the non-SBFD slot is the *0-th* OFDM symbol, i.e., is the same as the start location of the time-domain resource for channel transmission in the SBFD slot, and the length of the time-domain resource for channel transmission in the non-SBFD slot is equal to 3(7-4) OFDM symbols, i.e., the sum of the length of the time-domain resource for channel transmission in the SBFD slot and the offset. Finally, as illustrated in FIG. 7b, the *0-th* OFDM symbol to the 2(0+3-1)-*th* OFDM symbol in slot *n*+4 are used for PUSCH transmission.

### 4.3 Indicating one SLIV

Case 1, the time-domain resource indication information indicates one SLIV, the SLIV indicates the time-domain resource location for channel transmission in the non-SBFD slot, and the time-domain resource location for channel transmission in the SBFD slot is obtained in any one of the following manners.
(1) A time-domain resource location for channel transmission in any SBFD slot is based on the first available time-domain resource in the SBFD slot as a reference, and a start location and the length of the time-domain resource in the SBFD slot are obtained according to the SLIV. In other words, the time-domain resource location for channel transmission in each SBFD slot is determined according to its own information.
(2) Time-domain resource locations for channel transmission in all SBFD slots are the same, the first available time-domain resource in the first SBFD slot for repetition is taken as a reference, and a start location and the length of the time-domain resource in the first SBFD are obtained according to the SLIV. In other words, a time-domain resource location for channel transmission in the first SBFD slot is determined according to its own information, and a time-domain resource location for channel transmission in each of other subsequent SBFD slots is the same as the time-domain resource location for channel transmission in the first SBFD slot.

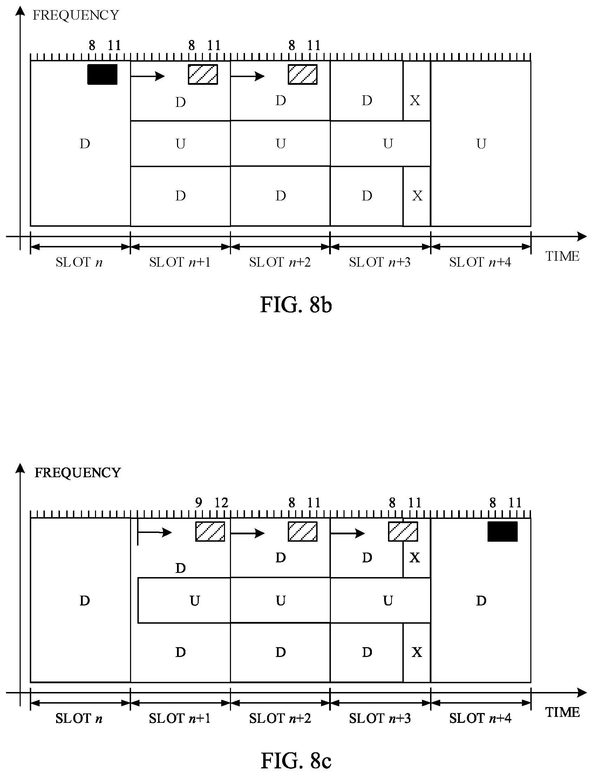

To facilitate understanding of (1) of Case 1, exemplarily, reference can be made to FIG. 8a and FIG. 8b. FIG. 8a is another schematic diagram illustrating indication of a time-domain resource location for channel transmission in an SBFD slot through one SLIV provided in embodiments of the present disclosure. FIG. 8b is yet another schematic diagram of slots provided in embodiments of the present disclosure. FIG. 8b exemplarily illustrates the UL/DL allocation in slot *n,* slot *n*+1, slot *n+2,* slot *n*+3, and slot *n*+4.

The PDSCH is taken as an example. Exemplarily, the TDRA field in the DCI indicates one row with an index of *X* in the time-domain resource table, and one SLIV is included in the row. As illustrated in FIG. 8a, *K*₀ is 0, and in the SLIV, *S* is 8, and *L* is 4.

Exemplarily, the number of PDSCH repetitions is 3 times and *K*₀ is 0, which indicates that the PDSCH repetition is performed in slot *n,* slot *n*+1, and slot *n+2* as illustrated in FIG. 8b. In the slots illustrated in FIG. 8b, slot *n* is a non-SBFD slot, and thus the *8-th* OFDM symbol to the 11(8+4-1)-*th* OFDM symbol in slot *n,* according to the SLIV as illustrated in FIG. 8a, are used for PDSCH transmission, as illustrated in the black-filled part in FIG. 8b.

It can be understood that the PDSCH transmission can be performed in a time-domain location in a DL symbol and a time-domain location in a flexible symbol, and thus the available time-domain resource is the time-domain location in the DL symbol and the time-domain location in the flexible symbol. As illustrated in FIG. 8b, both slot *n*+1 and slot *n+2* are SBFD slots. The first available time-domain resource in slot *n*+1 is the *0-th* OFDM symbol (e.g., a start point of an arrow in slot *n*+1 illustrated in FIG. 8b), and thus a start location of a time-domain resource for channel transmission in slot *n*+1 is the 8(0+8)-*th* OFDM symbol, i.e., a sum of the number of symbol of the first available time-domain resource and S in the SLIV. The length of the time-domain resource for channel transmission in slot *n*+1 is 4, i.e., *L* in the SLIV. Finally, as illustrated in FIG. 8b, the *8-th* OFDM symbol to the 11(8+4-1)-*th* OFDM symbol in slot *n*+1 are used for PDSCH transmission.

Similarly, the UL/DL allocation in slot *n+2* is similar to that in slot *n*+1, and the first available time-domain resource in slot *n+2* is also the *0-th* OFDM symbol (e.g., a start point of an arrow in slot *n+2* illustrated in FIG. 8b). Therefore, as illustrated in FIG. 8b, the *8-th* OFDM symbol to the 11(8+4-1)-*th* OFDM symbol in slot *n+2* are used for PDSCH transmission.

In the example illustrated in FIG. 8b, the UL/DL allocation in each SBFD slot is similar. To further understand the manner, (1) of Case 1 is introduced with an example that the UL/DL allocation in each SBFD slot is different below.

For example, reference can be made to FIG. 8c. FIG. 8c is yet another schematic diagram of slots provided in embodiments of the present disclosure. FIG. 8c exemplarily illustrates the UL/DL allocation in slot *n,* slot *n*+1, slot *n+2,* slot *n*+3 and slot n+4, and the UL/DL allocation in each SBFD slot in FIG. 8c is different.

To facilitate understanding, the SLIV and the *K*₀ illustrated in FIG. 8a are used again. The number of PDSCH repetitions is 4 times, and repetition is performed in slot *n*+1, slot *n+2,* slot *n*+3, and slot *n*+4 as illustrated in FIG. 8c. In the slots illustrated in FIG. 8c, slot *n*+4 is a non-SBFD slot, and thus the *8-th* OFDM symbol to the 11(8+4-1)-*th* OFDM symbol in slot *n*+4, according to the SLIV illustrated in FIG. 8a, are used for PDSCH transmission, as illustrated in the black-filled part in FIG. 8b.

As illustrated in FIG. 8c, slot *n*+1, slot *n+2,* and slot *n+2* are SBFD slots. The first available time-domain resource in slot *n*+1 is the first OFDM symbol (e.g., a start point of an arrow in slot *n*+1 illustrated in FIG. 8c), and thus the start location of the time-domain resource for channel transmission in slot *n*+1 is the 9(1+8)-*th* OFDM symbol, i.e., a sum of the number of symbol of the first available time-domain resource and S in the SLIV. The length of the time-domain resource for channel transmission in slot *n*+1 is 4, i.e., *L* in the SLIV. Finally, as illustrated in FIG. 8c, the *9-th* OFDM symbol to the 12(9+4-1)-*th* OFDM symbol in slot *n*+1 are used for PDSCH transmission.

As illustrated in FIG. 8c, the DL allocation in slot *n+2* is similar to the DL allocation in slot *n*+3, that is, the *0-th* OFDM symbol in each slot is the first available time-domain resource, e.g., a start point of an arrow in slot *n+2* and a start point of an arrow in slot *n*+3 illustrated in FIG. 8c. Therefore, the *8-th* OFDM symbol to the 11(8+4-1)-*th* OFDM symbol in slot *n+2* and slot *n*+3 in FIG. 8c are used for PDSCH transmission.

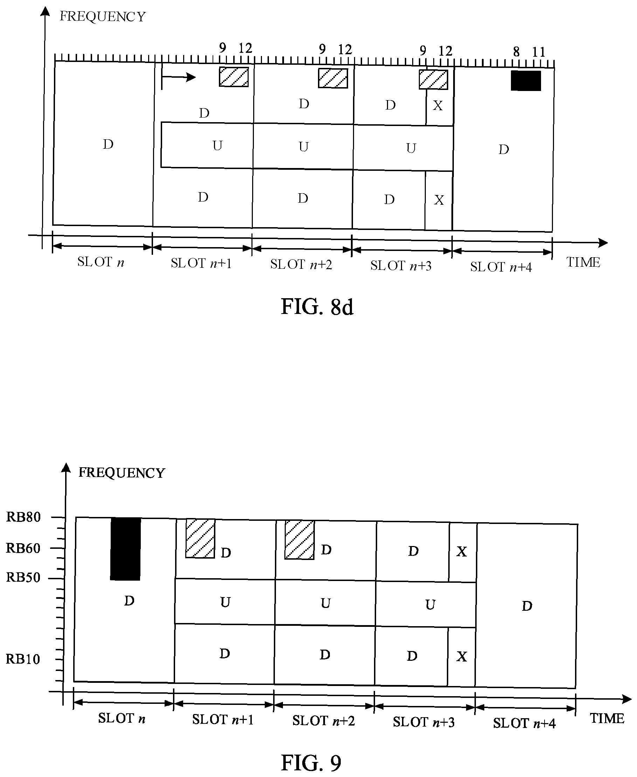

To facilitate understanding of (2) of Case 1, exemplarily, reference can be made to FIG. 8d. FIG. 8d is yet another schematic diagram of slots provided in embodiments of the present disclosure. FIG. 8d exemplarily illustrates the UL/DL allocation in slot n, slot *n*+1, slot *n+2,* slot *n*+3, and slot *n*+4.

To facilitate understanding, the SLIV and the *K*₀ illustrated in FIG. 8a are used again. The number of PDSCH repetitions is 4 times, and repetition is performed in slot *n*+1, slot *n+2,* slot *n*+3, and slot *n*+4 as illustrated in FIG. 8d. In the slots illustrated in FIG. 8d, slot *n*+4 is a non-SBFD slot, and thus the *8-th* OFDM symbol to the 11(8+4-1)-*th* OFDM symbol in slot n+4, according to the SLIV illustrated in FIG. 8a, are used for PDSCH transmission, as illustrated in the black-filled part in FIG. 8b.

As illustrated in FIG. 8c, slot *n*+1, slot *n+2,* and slot *n*+3 are SBFD slots. Slot *n*+1 is the first SBFD slot for repetition, and a time-domain resource for channel transmission in slot *n+2* and a time-domain resource for channel transmission in slot *n+2* are the same as that in slot *n+1.*

Since the first available time-domain resource in slot *n*+1 is the first OFDM symbol (e.g., the start point of the arrow in slot *n*+1 illustrated in FIG. 8c), the start location of the time-domain resource for channel transmission in each of slot *n*+1, slot *n+2,* and slot *n*+3 is the 9(1+8)-*th* OFDM symbol, i.e., the sum of the number of symbol of the first available time-domain resource and *S* in the SLIV, and the length of the time-domain resource is 4, i.e., *L* in the SLIV.

Finally, as illustrated in FIG. 8d, the *9-th* OFDM symbol to the 12(9+4-1)-th OFDM symbol in slot *n*+1, slot *n+2,* and slot *n*+3 are used for PDSCH transmission.

Case 2, the time-domain resource indication information indicates one SLIV, the SLIV indicates the time-domain resource location for channel transmission in the SBFD slot, and the time-domain resource location for channel transmission in the non-SBFD slot is obtained in any one of the following manners.
(1) A time-domain resource location for channel transmission in any non-SBFD slot is based on the first available time-domain resource in the SBFD slot as a reference, and a start location and the length of the time-domain resource in the non-SBFD slot are obtained according to the SLIV. In other words, the time-domain resource location in each non-SBFD slot is determined according to its own information.
(2) The time-domain resource locations for channel transmission in all non-SBFD slots are the same, the first available time-domain resource in the first non-SBFD slot for repetition is taken as a reference, and a start location and the length of the time-domain resource in the first non-SBFD slot are obtained according to the SLIV. In other words, a time-domain resource location for channel transmission in the first non-SBFD slot is determined according to its own information, and a time-domain resource location for channel transmission in each of other subsequent non-SBFD slots is the same as the time-domain resource location for channel transmission in the first non-SBFD slot.

It can be understood that Case 2 is similar to Case 1 in principle. In Case 1, the SLIV indicates the time-domain resource in the non-SBFD slot, and then the time-domain resource in the SBFD slot is obtained according to the SLIV. In Case 2, the SLIV indicates the time-domain resource in the SBFD slot, and then the time-domain resource in the non-SBFD slot is obtained according to the SLIV. Therefore, by analogy, the manners adopted in various embodiments of Case 1 can be used in Case 2. For the sake of simplicity, Case 2 will not be illustrated herein.

### 5. Determination of the frequency-domain resource

### 5.1 Indicating two SLIVs

In embodiments of the present disclosure, a location of a frequency-domain resource for channel transmission in a frequency-domain resource corresponding to the non-SBFD slot and a location of a frequency-domain resource for channel transmission in a frequency-domain resource corresponding to the SBFD slot are indicated by two SLIVs, respectively. For example, SLIV1 and SLIV2 can be indicated, SLIV1 indicates the location of the frequency-domain resource for channel transmission in the frequency-domain resource corresponding to the second time-domain resource, and SLIV2 indicates the location of the frequency-domain resource for channel transmission in the frequency-domain resource corresponding to the first time-domain resource. Alternatively, SLIV1 can be understood as the second frequency-domain resource location indication and the second frequency-domain resource bandwidth, and SLIV2 can be understood as the first frequency-domain resource location indication and the first frequency-domain resource bandwidth.

In a possible implementation, the frequency-domain resource table includes two fields, i.e., field A and field B. Field A indicates the location of the frequency-domain resource for channel transmission in the frequency-domain resource corresponding to the non-SBFD slot, and field B indicates the location of the frequency-domain resource for channel transmission in the frequency-domain resource corresponding to the SBFD slot. It can be understood that a location of field A and a location of field B are not limited in embodiments of the present disclosure, and field A may be followed by field B, or field B may be followed by field A.

In another possible implementation, DCI or higher-layer signaling may include field C, where part A of field C indicates the location of the frequency-domain resource for channel transmission in the frequency-domain resource corresponding to the non-SBFD slot, and part B of field C indicates the location of the frequency-domain resource for channel transmission in the frequency-domain resource corresponding to the SBFD slot. It can be understood that a location of part A and a location of part B are not limited in embodiments of the present disclosure, and part A may be followed by part B, or part B may be followed by part A. Exemplarily, field C has eight bits, the first four bits can be understood as part A, and the last four bits can be understood as part B.

To facilitate understanding, exemplarily, reference can be made to FIG. 9. FIG. 9 is a schematic diagram illustrating determination of a frequency-domain resource in an SBFD slot and a frequency-domain resource in a non-SBFD slot according to two SLIVs provided in embodiments of the present disclosure. FIG. 9 exemplarily illustrates the UL/DL allocation in slot *n,* slot *n*+1, slot *n+2,* slot *n*+3, and slot *n*+4.

The PDSCH is taken as an example. The DCI indicates, through SLIV1, that the time-domain resource for channel transmission in the frequency-domain resource corresponding to the non-SBFD slot is RB50 to RB80, and indicates, through SLIV2, that the frequency-domain resource for channel transmission in the frequency-domain resource corresponding to the SBFD slot is RB60 to RB80.

Exemplarily, in the slots illustrated in FIG. 9, the PDSCH repetition is performed in slot *n,* slot *n*+1, and slot *n+2.* Slot *n* is a non-SBFD slot, and thus RB50 to RB80 corresponding to slot *n* are used for PDSCH transmission. Slot *n*+1 and slot *n+2* are SBFD slots, and thus RB60 to RB80 corresponding to slot *n*+1 and slot *n+2* are used for PDSCH transmission.

### 5.2 Indicating one SLIV+offset

Case 1, the frequency-domain resource indication information indicates one SLIV, the SLIV indicates the location of the frequency-domain resource for channel transmission in the frequency-domain resource corresponding to the non-SBFD slot, and the location of the frequency-domain resource for channel transmission in the frequency-domain resource corresponding to the SBFD slot is obtained in any one of the following manners.
(1) A start location of the frequency-domain resource for channel transmission in the frequency-domain resource corresponding to the SBFD slot is equal to a sum of the start location of the frequency-domain resource for channel transmission in the frequency-domain resource corresponding to the SBFD slot and the offset, and the length of the frequency-domain resource for channel transmission in the frequency-domain resource corresponding to the SBFD slot is equal to the length of the frequency-domain resource for channel transmission in the frequency-domain resource corresponding to the SBFD slot. The offset can be understood as the first frequency-domain location offset.
(2) The start location of the frequency-domain resource for channel transmission in the frequency-domain resource corresponding to the SBFD slot is the same as that of the SBFD slot, and the length of the frequency-domain resource for channel transmission in the frequency-domain resource corresponding to the SBFD slot is equal to a sum of the length of the frequency-domain resource for channel transmission in the frequency-domain resource corresponding to the SBFD slot and the offset. The offset can be understood as the first frequency-domain bandwidth offset.

Case 2, the indication information indicates one SLIV, the SLIV indicates the location of the frequency-domain resource for channel transmission in the frequency-domain resource corresponding to the SBFD slot, and the location of the frequency-domain resource for channel transmission in the frequency-domain resource corresponding to the non-SBFD slot is obtained in any one of the following manners.
(1) A start location of the frequency-domain resource for channel transmission in the frequency-domain resource corresponding to the non-SBFD slot is equal to the sum of the start location of the frequency-domain resource for channel transmission in the frequency-domain resource corresponding to the SBFD slot and the offset, and the length of the frequency-domain resource for channel transmission in the frequency-domain resource corresponding to the non-SBFD slot is equal to the length of the frequency-domain resource for channel transmission in the frequency-domain resource corresponding to the SBFD slot. The offset can be understood as the second frequency-domain location offset.
(2) The start location of the frequency-domain resource for channel transmission in the frequency-domain resource corresponding to the non-SBFD slot is the same as that of the SBFD slot, and the length of the frequency-domain resource for channel transmission in the frequency-domain resource corresponding to the non-SBFD slot is equal to the sum of the length of the frequency-domain resource for channel transmission in the frequency-domain resource corresponding to the SBFD slot and the offset. The offset can be understood as the second frequency-domain bandwidth offset.

It can be understood that Case 1 is similar to Case 2. In Case 1, the SLIV indicates the frequency-domain resource for channel transmission in the frequency-domain resource corresponding to the non-SBFD slot, and then the frequency-domain resource for channel transmission in the frequency-domain resource corresponding to the SBFD slot is obtained according to the SLIV and the offset. In Case 2, the SLIV indicates the frequency-domain resource for channel transmission in the frequency-domain resource corresponding to the SBFD slot, and then the frequency-domain resource for channel transmission in the frequency-domain resource corresponding to the non-SBFD slot is obtained according to the SLIV and the offset. In addition, it can be understood that the determination of the frequency-domain resource is similar to the determination of the time-domain resource. In the time domain, it can be understood as determination of a location of an OFDM symbol in a slot, and in the frequency domain, it can be understood as determination of an RB location of an RB resource corresponding to a slot. Therefore, for determination of the frequency-domain resource location in each case in Part 5.2, reference can be made to the manners described in various embodiments in Part 4.2.

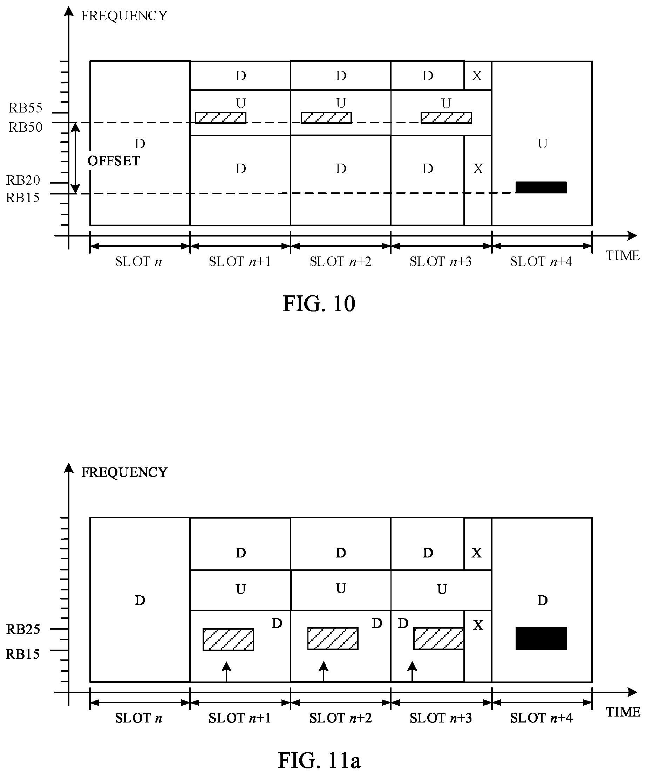

For the sake of simplicity, (1) of Case 1 is introduced below with reference to the diagram. Exemplarily, reference can be made to FIG. 10. FIG. 10 is a schematic diagram illustrating determination of a frequency-domain resource location according to an SLIV and an offset provided in embodiments of the present disclosure.

The PUSCH is taken as an example, exemplarily, higher-layer signaling indicates that PUSCH repetition is performed in slot *n*+1, slot *n+2,* slot *n*+3, and slot *n*+4 as illustrated in FIG. 10. In embodiments of the present disclosure, DCI indicates one SLIV and the offset. Exemplarily, the DCI indicates that the SLIV is RB15 to RB20, and that the offset is 35.

As illustrated in FIG. 10, slot *n*+4 is a non-SBFD slot, and thus the frequency-domain resource in slot *n*+4 is directly determined according to the SLIV, that is, RB15 to RB20 in slot *n*+4 are used for PUSCH transmission.

As illustrated in FIG. 10, slot *n*+1, slot *n+2,* and slot *n*+3 are SBFD slots. Therefore, the start location of the frequency-domain resource in the SBFD slot is the sum of the start location (RB15) of the frequency-domain resource for channel transmission in the frequency-domain resource corresponding to the SBFD slot and the offset (35), and the length of the frequency-domain resource in the SBFD slot is the same as the length of the frequency-domain resource for channel transmission in the frequency-domain resource corresponding to the SBFD slot. Finally, RB50 (15+35) to RB55 (20+35) in slot *n*+1, slot *n+2,* and slot *n*+3 are used for PUSCH transmission.

### 5.3 Indicating one SLIV

Case 1, the frequency-domain resource indication information indicates one SLIV, the SLIV is the location of the frequency-domain resource for channel transmission in the frequency-domain resource corresponding to the non-SBFD slot, and the location of the frequency-domain resource for channel transmission in the frequency-domain resource corresponding to the SBFD slot is obtained in any one of the following manners.
(1) A location of a frequency-domain resource for channel transmission in a frequency-domain resource corresponding to any SBFD slot is based on the first available time-domain resource in the SBFD slot as a reference, and a start location and the length of the frequency-domain resource for channel transmission in the frequency-domain resource corresponding to the SBFD slot are obtained according to the SLIV. In other words, the location of the frequency-domain resource for channel transmission in the frequency-domain resource corresponding to each SBFD slot is determined according to its own information.
(2) Locations of frequency-domain resources for channel transmission in frequency-domain resources corresponding to all SBFD slots are the same, the first available frequency-domain resource in the first SBFD slot for repetition is taken as a reference, and a start location and the length of the frequency-domain resource in the first SBFD are obtained according to the SLIV. In other words, a location of a frequency-domain resource for channel transmission in a frequency-domain resource corresponding to the first SBFD slot is determined according to its own information, and a location of a frequency-domain resource for channel transmission in a frequency-domain resource corresponding to each of other subsequent SBFD slots is the same as the location of the frequency-domain resource in the first SBFD.

To facilitate understanding of (1) of Case 1, exemplarily, reference can be made to FIG. 11a. FIG. 11a is a schematic diagram illustrating determination of a frequency-domain resource for DL channel repetition according to an SLIV and an RB resource in a slot provided in embodiments of the present disclosure.

The PDSCH is taken as an example. Exemplarily, higher-layer signaling indicates that PDSCH repetition is performed in slot *n,* slot *n*+1, slot *n+2,* and slot *n*+3 as illustrated in FIG. 11a. In embodiments of the present disclosure, DCI indicates one SLIV, and exemplarily, the DCI indicates that the SLIV is RB15 to RB25.

In the slots illustrated in FIG. 11a, slot *n*+4 is a non-SBFD slot, and thus the frequency-domain resource in slot *n*+4 is directly determined according to the SLIV, that is, RB15 to RB25 in slot *n*+4 are used for PDSCH transmission.

It can be understood that the PDSCH transmission can be performed in the time-domain location in a DL symbol and the time-domain location in a flexible symbol, and thus the available frequency-domain resource is the frequency-domain location in the DL symbol and the time-domain location in the flexible symbol.

As illustrated in FIG. 11a, slot *n*+1 is an SBFD slot, and the first available frequency-domain resource in slot *n*+1 is RB0, e.g., a start location of an arrow in slot *n*+1 illustrated in FIG. 11a. Therefore, RB15 (0+15) to RB25 (0+25) in slot *n*+1 are used for PDSCH transmission.

As illustrated in FIG. 11a, the first available frequency-domain resource in slot *n+2* and the first available frequency-domain resource in slot *n*+3 are the same as that in slot *n*+1, e.g., a start location of an arrow in slot *n+2* and a start location of an arrow in slot n+3 illustrated in FIG. 11a. Therefore, RB15 (0+15) to RB25 (0+25) in slot *n+2* and slot *n*+3 are used for PDSCH transmission.

In embodiments corresponding to FIG. 11a, slot *n*+1 is taken as an example. The first available frequency-domain resource in slot *n*+1 is RB0. However, as can be seen from FIG. 11a, slot *n*+1 includes two DL sub-bands. In addition to using RB0 as a reference, the first available frequency-domain resource in another sub-band can also be used as a reference. It can be understood that which sub-band resource is specifically to be used can be determined according to information, such as sub-band number, frequency, and other information, indicated by indication information.

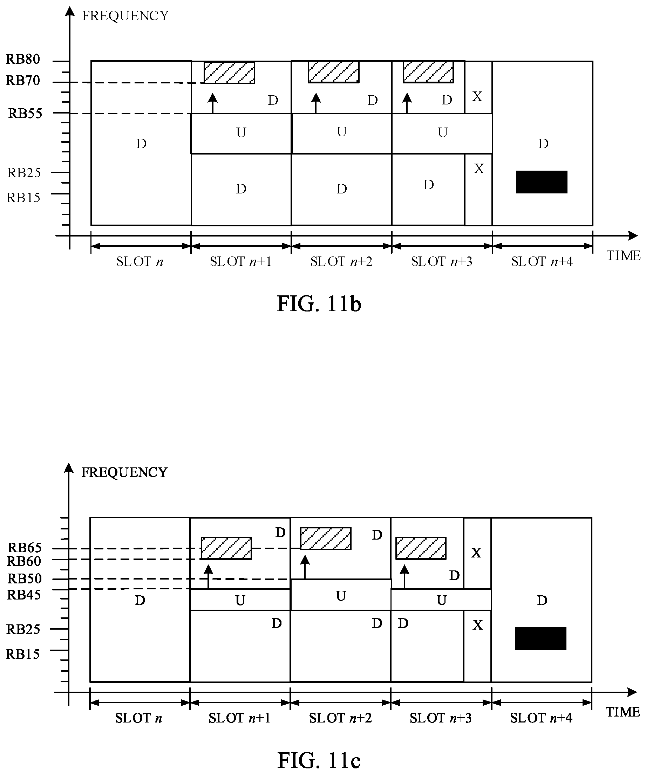

To facilitate understanding, exemplarily, reference can be made to FIG. 11b. FIG. 11b is another schematic diagram illustrating determination of a frequency-domain resource for DL channel repetition according to an SLIV and an RB resource in a slot provided in embodiments of the present disclosure

Similar to FIG. 11a, slot *n*+4 is a non-SBFD slot, and thus the frequency-domain resource in slot *n*+4 is directly determined according to the SLIV, that is, RB15 to RB25 in slot *n*+4 are used for PDSCH transmission.

As illustrated in FIG. 11b, slot *n*+1 is an SBFD slot. In embodiments of the present disclosure, a DL sub-band different from that in FIG. 11a is used. In the DL sub-band, the first available frequency-domain resource is RB55, e.g., a start location of an arrow in slot *n*+1 illustrated in FIG. 11b. Therefore, RB70 (55+15) to RB80 (55+25) in slot *n*+1 are used for PDSCH transmission.

As illustrated in FIG. 11b, slot *n+2* and slot *n*+3 are similar to slot *n*+1, and thus RB70 (55+15) to RB80 (55+25) in slot *n+2* and slot *n*+3 are used for PDSCH transmission.

In the above embodiments, the UL/DL allocation in different SBFD slots is similar. To facilitate understanding, (1) of Case 1 will be introduced below with an example that the UL/DL allocation in different SBFD slots is different.

Exemplarily, reference can be made to FIG. 11c. FIG. 11c is another schematic diagram illustrating determination of a frequency-domain resource for DL channel repetition according to an SLIV and an RB resource in a slot provided in embodiments of the present disclosure.

The PDSCH is taken as an example. Exemplarily, higher-layer signaling indicates that PDSCH repetition is performed in slot *n*+1, slot *n+2,* slot *n*+3, and slot *n*+4 as illustrated in FIG. 11c. In embodiments of the present disclosure, DCI indicates one SLIV, and exemplarily, DCI indicates that the SLIV is RB15 to RB25.

In the slots illustrated in FIG. 11a, slot *n*+4 is a non-SBFD slot, and thus the frequency-domain resource in slot *n*+4 is directly determined according to the SLIV, that is, RB15 to RB25 in slot *n*+4 are used for PDSCH transmission.

As illustrated in FIG. 11a, slot *n*+1, slot *n+2,* and slot *n*+3 are SBFD slots. The first available frequency-domain resource in slot *n*+1 is RB45, e.g., a start location of an arrow of slot *n*+1 illustrated in FIG. 11a. Therefore, RB60 (45+15) to RB70 (45+25) in slot *n*+1 is used for PDSCH transmission.

Similarly, the first available frequency-domain resource in slot *n+2* is RB50, e.g., a start location of an arrow in slot *n+2* illustrated in FIG. 11a. Therefore, RB65 (50+15) to RB75 (50+25) in slot *n+2* are used for PDSCH transmission.

Slot *n*+3 is similar to slot *n*+1, and will not be repeated herein. Finally, frequency-domain resource locations in slot *n*+1, slot *n+2,* and slot *n*+3 are illustrated in FIG. 11c.

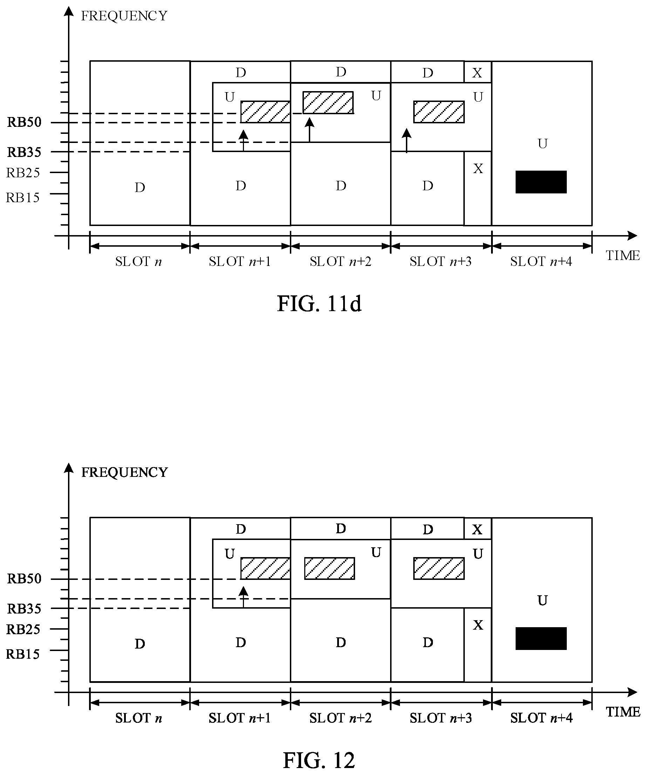

In the above embodiments, the DL channel is taken as an example, and a manner for determining the frequency-domain resource for the UL channel is similar. For example, reference can be made to FIG. 11d. FIG. 11d is a schematic diagram illustrating determination of a frequency-domain resource for UL channel repetition according to an SLIV and an RB resource in a slot provided in embodiments of the present disclosure.

The PUSCH is as an example. Exemplarily, higher-layer signaling indicates that PUSCH repetition is performed in slot *n*+1, slot *n+2,* slot *n*+3, and slot *n*+4 as illustrated in FIG. 11c. In embodiments of the present disclosure, DCI indicates one SLIV, and exemplarily, the DCI indicates that the SLIV is RB15 to RB25.

In the slots illustrated in FIG. 11d, slot *n*+4 is a non-SBFD slot, and thus the frequency-domain resource in slot *n*+4 is directly determined according to the SLIV, that is, RB15 to RB25 in slot *n*+4 are used for PUSCH transmission.

It can be understood that the PUSCH transmission can be performed in a time-domain location in a UL symbol and a time-domain location in a flexible symbol, and thus the available frequency-domain resource is the frequency-domain location in the UL symbol and the time-domain location in the flexible symbol.

As illustrated in FIG. 11d, slot *n*+1, slot *n+2,* and slot *n*+3 are SBFD slots. The first available frequency-domain resource in slot *n*+1 is RB35, e.g., a start location of an arrow in slot *n*+1 illustrated in FIG. 11d. Therefore, RB50 (35+15) to RB60 (35+25) in slot *n*+1 are used for PUSCH transmission.

The first available frequency-domain resource in slot *n+2* is RB40, e.g., a start location of an arrow in slot *n+2* illustrated in FIG. 11d. Therefore, RB55 (40+15) to RB65 (40+25) in slot *n+2* are used for PUSCH transmission. Slot *n*+3 is similar to slot *n*+1 and will not be repeated herein. Finally, frequency-domain resource locations in slot *n*+1, slot *n+2,* and slot *n*+3 are illustrated in FIG. 11d.

To facilitate understanding of (2) of Case 2, exemplarily, reference can be made to FIG. 12. FIG. 12 is another schematic diagram illustrating determination of a frequency-domain resource for UL channel repetition according to an SLIV and an RB resource in a slot provided in embodiments of the present disclosure.

The PUSCH is taken as an example. Exemplarily, higher-layer signaling indicates that PUSCH repetition is performed in slot *n*+1, slot *n+2,* slot *n*+3, and slot *n*+4 as illustrated in FIG. 12. In embodiments of the present disclosure, DCI indicates one SLIV, and exemplarily, the DCI indicates that the SLIV is RB15 to RB25.

As illustrated in FIG. 12, slot *n*+4 is a non-SBFD slot, and thus the frequency-domain resource in slot *n*+4 is directly determined according to the SLIV, that is, RB15 to RB25 in slot *n*+4 are used for PUSCH transmission.

As illustrated in FIG. 12, slot *n*+1 is the first SBFD slot for repetition, and the first available frequency-domain resource in slot *n*+1 is RB35, e.g., a start location of an arrow in slot *n*+1 illustrated in FIG. 12. Therefore, RB50 (35+15) to RB60 (35+25) in slot *n*+1 are used for PUSCH transmission.

Subsequent slot *n+2* and slot *n*+3 are also SBFD slots. In embodiments of the present disclosure, the frequency-domain resource location in slot *n+2* and the frequency-domain resource location in slot *n*+3 are the same as that in the first SBFD slot (i.e., slot *n*+1), that is, as illustrated in FIG. 12, RB50 (35+15) to RB60 (35+25) are used for PUSCH transmission.

Case 2, the indication information indicates one SLIV, the SLIV is the location of the frequency-domain resource for channel transmission in the frequency-domain resource corresponding to the SBFD slot, and the location of the frequency-domain resource for channel transmission in the frequency-domain resource corresponding to the non-SBFD slot is obtained in any one of the following manners.
(1) a location of a frequency-domain resource for channel transmission in a frequency-domain resource corresponding to any non-SBFD slot is based on the first available resource in the SBFD slot as a reference, and a start location and the length of the frequency-domain resource in the non-SBFD are obtained according to the SLIV. In other words, the location of the frequency-domain resource for channel transmission in the frequency-domain resource corresponding to each non-SBFD slot is determined according to its own information.
(2) locations of frequency-domain resources for channel transmission in frequency-domain resources corresponding to all non-SBFD slots are the same, the first available resource in the first non-SBFD slot for repetition is taken as a reference, and a start location and the length of the frequency-domain resource in the first non-SBFD are obtained according to the SLIV. In other words, a location of a frequency-domain resource for channel transmission in a frequency-domain resource corresponding to the first non-SBFD slot is determined according to its own information, and a location of a frequency-domain resource for channel transmission in a frequency-domain resource corresponding to each of other subsequent non-SBFD slots is the same as the location of the frequency-domain resource in the first non-SBFD.

It can be understood that Case 2 is similar to Case 1 in principle. In Case 1, the SLIV indicates the frequency-domain resource in the non-SBFD slot, and then the frequency-domain resource in the SBFD slot is obtained according to the SLIV. In Case 2, the SLIV indicates the frequency-domain resource in the SBFD slot, and then the frequency-domain resource in the non-SBFD slot is obtained according to the SLIV. Therefore, by analogy, the manners adopted in various embodiments of Case 1 can be used in Case 2. For the sake of simplicity, Case 2 will not be repeated herein.

### 6. Frequency hopping (FH)

It can be understood that, in one FH, the first hop may be located in a non-SBFD slot or in an SBFD slot, and similarly, the second hop may be located in a non-SBFD slot or in an SBFD slot. Four combinations can be obtained by arranging and combining the above cases.

Combination (1): the first hop is located in a non-SBFD slot, and the second hop is located in a non-SBFD slot, that is, hopping from the non-SBFD slot to the non-SBFD slot.

Combination (2): the first hop is located in an SBFD slot, and the second hop is located in an SBFD slot, that is, hopping from the SBFD slot to the SBFD slot.

Combination (3): the first hop is located in a non-SBFD slot, and the second hop is located in an SBFD slot, that is, hopping from the non-SBFD slot to the SBFD slot.

Combination (4): the first hop is located in an SBFD slot, and the second hop is located in a non-SBFD slot, that is, hopping from the SBFD slot to the non-SBFD slot.

For the four combinations, in embodiments of the present disclosure, the FH offset can be determined according to a slot type. In embodiments of the present disclosure, the FH offset can also be referred to as "offset".

### 6.1 Four offsets

In a possible implementation, four offsets that may be referred to as "first offset", "second offset", "third offset", and "fourth offset", respectively, may be configured through higher-layer signaling. The four offsets are respectively used for the four combinations.

In another possible implementation, four sets of offsets may be configured through the higher-layer signaling, each set of offsets can include at least two offset values, and then one offset in each set of offsets can be further indicated through indication information. Exemplarily, when four sets of FH offsets are configured through the higher-layer signaling, the indication information may indicate four FH offset indexes in the following manners.

The indication information contains an index of the first offset, an index of the second offset, an index of the third offset, and an index of the fourth offset. The four indexes may be arranged in sequence.

Alternatively, bit locations of the offset indexes are determined according to the actual FH situations. For example, if the first FH is from a non-SBFD slot to a non-SBFD slot, the index of the first offset can be used first, that is, the index of the first location is used for Combination (1), and the others may be deduced accordingly.

In embodiments of the present disclosure, for example, the first offset is used for Combination (1), the second offset is used for Combination (2), the third offset is used for Combination (3), and the fourth offset is used for Combination (4). For another example, the first offset is used for Combination (4), the second offset is used for Combination (3), the third offset is used for Combination (2), and the fourth offset is used for Combination (1). In other words, correspondence between the four offsets and the four combinations is not limited in the present disclosure, and the order can be changed.

It can be understood that, whether the four offsets are configured or the four sets of offsets are configured, offsets respectively corresponding to the four combinations can be determined in the end. In an FH process, a corresponding offset value is used according to the actual FH situation. To facilitate understanding, FH transmission of PUSCH is taken as an example. Exemplarily, reference can be made to FIG. 13. FIG. 13 is a schematic diagram illustrating FH transmission according to four offsets provided in embodiments of the present disclosure.

Exemplarily, the first offset is used for Combination (1), the second offset is used for Combination (2), the third offset is used for Combination (3), and the fourth offset is used for Combination (4). For ease of description, in embodiments of the present disclosure, the first offset is referred to as "offset_1", the second offset is referred to as "offset_2", the third offset is referred to as "offset_3", and the fourth offset is referred to as "offset_4".

As illustrated in FIG. 13, slot *n,* slot *n*+4, slot *n*+5, slot *n*+6, and slot *n*+7 are non-SBFD slots, and slot *n*+1, slot *n+2,* slot *n*+3, and slot *n*+8 are SBFD slots. Slot *n*+1 and slot *n+2* are one inter-slot FH, i.e., hopping from an SBFD slot to an SBFD slot, and thus the FH offset is offset_1.

Similarly, it can be obtained that slot *n*+3 and slot *n*+4 are one inter-slot FH, i.e., hopping from an SBFD slot to a non-SBFD slot, and thus the FH offset is offset_2. Slot *n*+5 and slot *n*+6 are one inter-slot FH, i.e., hopping from a non-SBFD slot to a non-SBFD slot, and thus the FH offset is offset_3. Slot *n*+7 and slot *n*+8 are one inter-slot FH, i.e., hopping from a non-SBFD slot to an SBFD slot, and thus the FH offset is offset_4.

### 6.2. Two offsets

In a possible implementation, two offsets that may be referred to as "first offset" and "second offset", respectively, may be configured through higher-layer signaling.

In another possible implementation, two sets of offsets may be configured through the higher-layer signaling, each set of offsets can include at least two offset values, and then one offset in each set of offsets can be further indicated through indication information. Exemplarily, when two sets of FH offsets are configured through the higher-layer signaling, the indication information may indicate two FH offset indexes in the following manners.

The index of the first offset is located before the index of the second offset.

Alternatively, the index of the first offset is located after the index of the second offset.

Alternatively, a relative location of the index of the first offset and the index of the second offset is determined according to the actual FH conditions. In the case where the first hop in the first FH is located in an SBFD slot, the index of the first offset is located before the index of the second offset, otherwise, the index of the first offset is located after the index of the second offset.

For another example, when two sets of FH offsets are configured through the higher-layer signaling, the indication information can indicate one FH offset index, and the FH offset index is used for the four combinations. In other words, when two sets of offset values are configured through the higher-layer signaling, the indication information indicates one FH offset index, and the FH offset index is applicable to a case where the second hop is located in a non-SBFD slot, and is also applicable to a case where the second hop is located in an SBFD slot.

Exemplarily, the first set of offsets configured through the higher-layer signaling includes two values, and the second set of offsets configured through the higher-layer signaling also includes two values. One FH offset index in the indication information indicates that the first value of the two values is used as an FH offset when the second hop is located in a non-SBFD slot. The first value in the second set of offsets is selected as an FH offset when the second hop is located in an SBFD slot.

In embodiments of the present disclosure, exemplarily, the first offset is used when the second hop in one FH is located in a non-SBFD slot, i.e., Combination (1) and Combination (4), and the second offset is used when the second hop in one FH is located in an SBFD slot, i.e., Combination (2) and Combination (3).

Alternatively, the first offset is used when the first hop in one FH is located in a non-SBFD slot, i.e., Combination (1) and Combination (3), and the second offset is used when the first hop in one FH is located in an SBFD slot, i.e., Combination (2) and Combination (4).

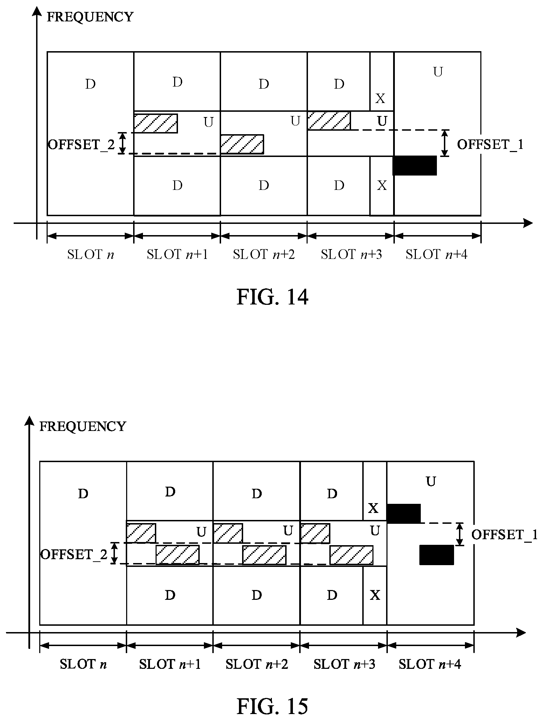

It can be understood that, whether the two offsets are configured or the two sets of offsets are configured, offsets respectively corresponding to the four combinations can be determined in the end. In the FH process, a corresponding offset value is used according to the actual FH situation. To facilitate understanding, FH transmission of PUSCH is taken as an example. Exemplarily, reference can be made to FIG. 14. FIG. 14 is a schematic diagram illustrating FH transmission according to two offsets provided in embodiments of the present disclosure.

Exemplarily, the first offset is used for Combination (1) and Combination (4), and the second offset is used for Combination (2) and Combination (3). For ease of description, in embodiments of the present disclosure, the first offset is referred to as "offset_1", and the second offset is referred to as "offset_2".

As illustrated in FIG. 14, slot n and slot *n*+4 are non-SBFD slots, and slot *n*+1, slot *n+2,* and slot *n*+3 are SBFD slots. Slot *n*+1 and slot *n+2* are one inter-slot FH, corresponding to Combination (2), i.e., hopping from an SBFD slot to an SBFD slot, and thus the FH offset is offset_2.

Similarly, it can be obtained that slot *n*+3 and slot *n*+4 are one inter-slot FH, corresponding to Combination (4), i.e., hopping from an SBFD slot to a non-SBFD slot, and thus the FH offset is offset_1.

For another example, reference can be made to FIG. 15. FIG. 15 is another schematic diagram illustrating FH transmission according to two offsets provided in embodiments of the present disclosure.

This embodiment is similar to the embodiment corresponding to FIG. 14, the first offset is used for Combination (1) and Combination (4), and the second offset is used for Combination (2) and Combination (3). For ease of description, in embodiments of the present disclosure, the first offset is referred to as "offset_1", and the second offset is referred to as "offset_2".

As illustrated in FIG. 15, slot n and slot *n*+4 are non-SBFD slots, and slot *n*+1, slot *n+2,* and slot *n*+3 are SBFD slots. Slot *n*+1, slot *n+2,* slot *n*+3, and slot *n*+4 each include one intra-slot FH.

In slot *n*+1, slot *n+2,* and slot *n*+3, the first hop is located in an SBFD slot, and the second hop is also located in the SBFD slot, corresponding to Combination (2), i.e., hopping from an SBFD slot to an SBFD slot, and thus the FH offset is offset_2.

In slot *n*+4, the first hop is located in a non-SBFD slot, and the second hop is also located in the non-SBFD slot, corresponding to Combination (1), i.e., hopping from a non-SBFD slot to a non-SBFD slot, and thus the FH offset is offset_1.

The method of embodiments of the present disclosure is described in detail above, and an apparatus provided in embodiments of the present disclosure is described below.

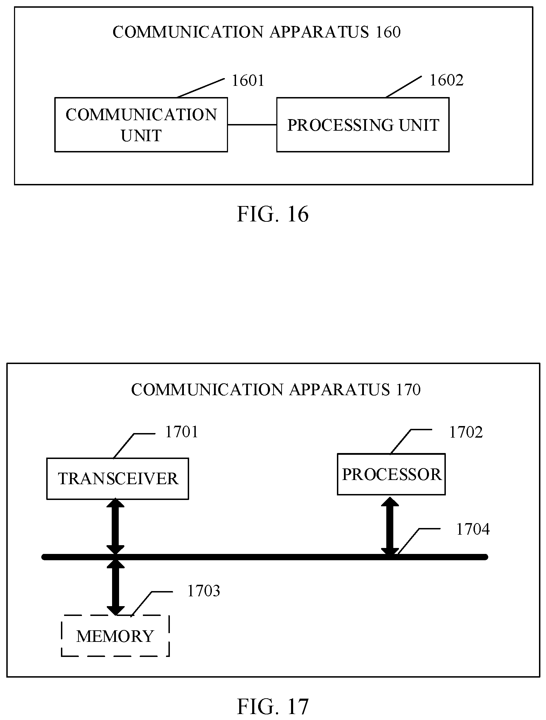

Exemplarily, reference can be made to FIG. 16. FIG. 16 is a schematic structural diagram of a communication apparatus 160 provided in embodiments of the present disclosure. The communication apparatus 160 illustrated in FIG. 16 may be a first communication apparatus or a second communication apparatus. As illustrated in FIG. 16, the communication apparatus 160 includes a communication unit 1601 and a processing unit 1602. The communication unit 1601 can be integrated with a receiving unit and a sending unit. In some embodiments, the communication unit 1601 can also be referred to as "transceiver unit". Alternatively, the communication unit 1601 can also be divided into the receiving unit and the sending unit. The processing unit 1602 is used for data processing.

In the first implementation, the description of each unit is as follows. The communication unit 1601 is configured to receive time-domain resource indication information, where the time-domain resource indication information indicates a time-domain resource location for channel transmission. The processing unit 1602 is configured to determine a time-domain resource for channel transmission in at least one time-domain resource according to the time-domain resource location for channel transmission, where the at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource. The communication unit 1601 is further configured to perform at least one channel transmission based on the time-domain resource for channel transmission in the at least one time-domain resource.

In a possible implementation, the time-domain resource indication information indicates the time-domain resource location for channel transmission as follows. The time-domain resource indication information indicates a location of a time-domain resource for channel transmission in the first time-domain resource and/or a location of a time-domain resource for channel transmission in a second time-domain resource. A frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

In a possible implementation, the time-domain resource indication information contains first time-domain resource location indication and a first time length. Alternatively, the time-domain resource indication information contains second time-domain resource location indication and a second time length. Alternatively, the time-domain resource indication information contains the first time-domain resource location indication, the first time length, the second time-domain resource location indication, and the second time length. The first time-domain resource location indication indicates a start time-domain resource of the time-domain resource for channel transmission in the first time-domain resource. The second time-domain resource location indication indicates a start time-domain resource of the time-domain resource for channel transmission in the second time-domain resource. The first time length is the length of the time-domain resource for channel transmission in the first time-domain resource. The second time length is the length of the time-domain resource for channel transmission in the second time-domain resource.

In a possible implementation, the processing unit 1602 is specifically configured to determine the time-domain resource for channel transmission in the at least one first time-domain resource according to the start time-domain resource of the time-domain resource for channel transmission in the first time-domain resource and the first time length.

In a possible implementation, the processing unit 1602 is further configured to determine the start time-domain resource of the time-domain resource for channel transmission in the first time-domain resource according to the second time-domain resource location indication and a first time location offset. Additionally/alternatively. The processing unit 1602 is further configured to determine the first time length according to the second time length and a first time length offset.

In a possible implementation, the communication unit 1601 is further configured to receive first time location offset indication information, where the first time location offset indication information indicates the first time location offset. Alternatively, the communication unit 1601 is further configured to receive first time length offset indication information, where the first time length offset indication information indicates the first time length offset.

In a possible implementation, the at least one time-domain resource further includes at least one second time-domain resource.

In a possible implementation, the processing unit 1602 is specifically configured to determine a time-domain resource for channel transmission in the at least one second time-domain resource according to the start time-domain resource of the time-domain resource for channel transmission in the second time-domain resource and the second time length. The second time length is a length of the time-domain resource for channel transmission in the second time-domain resource.

In a possible implementation, the processing unit 1602 is further configured to determine the start time-domain resource of the time-domain resource for channel transmission in the second time-domain resource according to the first time-domain resource location indication and a second time location offset. Additionally/alternatively, the processing unit 1602 is further configured to determine the second time length according to the first time length and a second time length offset.

In a possible implementation, the communication unit 1601 is further configured to receive second time location offset indication information, where the second time location offset indication information indicates the second time location offset. Alternatively, the communication unit 1601 is further configured to receive second time length offset indication information, where the second time length offset indication information indicates the second time length offset.

In the second implementation, the description of each unit is as follows. The communication unit 1601 is configured to receive frequency-domain resource indication information, where the frequency-domain resource indication information indicates a frequency-domain resource location for channel transmission. The processing unit 1602 is configured to determine, according to the frequency-domain resource location for channel transmission, a frequency-domain resource for channel transmission in frequency-domain resources respectively corresponding to at least one time-domain resource. The at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource. The communication unit 1601 is further configured to perform at least one channel transmission based on the frequency-domain resource for channel transmission in the frequency-domain resources respectively corresponding to the at least one time-domain resource.

In a possible implementation, the frequency-domain resource indication information indicates the frequency-domain resource location for channel transmission as follows. The frequency-domain resource indication information indicates a location of a frequency-domain resource for channel transmission in the frequency-domain resource corresponding to the first time-domain resource, and/or a location of a frequency-domain resource for channel transmission in a frequency-domain resource corresponding to a second time-domain resource. The frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

In a possible implementation, the frequency-domain resource indication information contains first frequency-domain resource location indication and a first frequency-domain resource bandwidth. Alternatively, the frequency-domain resource indication information contains second frequency-domain resource location indication and a second frequency-domain resource bandwidth. Alternatively, the frequency-domain resource indication information contains the first frequency-domain resource location indication, the first frequency-domain resource bandwidth, the second frequency-domain resource location indication, and the second frequency-domain resource bandwidth. The first frequency-domain resource location indication indicates a start frequency-domain resource of the frequency-domain resource for channel transmission in the frequency-domain resource corresponding to the first time-domain resource. The second frequency-domain resource location indication indicates a start frequency-domain resource of the frequency-domain resource for channel transmission in the frequency-domain resource corresponding to the second time-domain resource. The first frequency-domain resource bandwidth is a bandwidth of the frequency-domain resource for channel transmission in the frequency-domain resource corresponding to the first time-domain resource. The second frequency-domain resource bandwidth is a bandwidth of the frequency-domain resource for channel transmission in the frequency-domain resource corresponding to the second time-domain resource.

In a possible implementation, the processing unit 1602 is specifically configured to determine, according to the start frequency-domain resource of the frequency-domain resource for channel transmission in the frequency-domain resource corresponding to the first time-domain resource and the first frequency-domain resource bandwidth, the frequency-domain resource for channel transmission in the frequency-domain resource corresponding to the at least one first time-domain resource.

In a possible implementation, the processing unit 1602 is further configured to determine, according to the second frequency-domain resource location indication and a first frequency-domain location offset, the start frequency-domain resource of the frequency-domain resource for channel transmission in the frequency-domain resource corresponding to the first time-domain resource. Additionally/alternatively, the processing unit 1602 is further configured to determine the first frequency-domain resource bandwidth according to the second frequency-domain resource bandwidth and a first frequency-domain bandwidth offset.

In a possible implementation, the communication unit 1601 is further configured to receive first frequency-domain location offset indication information, where the first frequency-domain location offset indication information indicates the first frequency-domain location offset. Alternatively, the communication unit 1601 is further configured to receive first frequency-domain bandwidth offset indication information, where the first frequency-domain bandwidth offset indication information indicates the first frequency-domain bandwidth offset.

In a possible implementation, the at least one time-domain resource further includes at least one second time-domain resource.

In a possible implementation, the processing unit 1602 is specifically configured to determine, according to the start frequency-domain resource of the frequency-domain resource for channel transmission in the frequency-domain resource corresponding to the second time-domain resource and the second frequency-domain resource bandwidth, the frequency-domain resource for channel transmission in the frequency-domain resource corresponding to the at least one second time-domain resource. The second frequency-domain resource bandwidth is a bandwidth of the frequency-domain resource for channel transmission in the frequency-domain resource corresponding to the second time-domain resource.

In a possible implementation, the processing unit 1602 is further configured to determine, according to a first frequency-domain location indication and a second frequency-domain location offset, the start frequency-domain resource of the frequency-domain resource for channel transmission in the frequency-domain resource corresponding to the second time-domain resource. Additionally/alternatively, the processing unit 1602 is further configured to determine the second frequency-domain resource bandwidth according to the first frequency-domain resource bandwidth and a second frequency-domain bandwidth offset.

In a possible implementation, the communication unit 1601 is further configured to receive second frequency-domain location offset indication information, where the second frequency-domain location offset indication information indicates the second frequency-domain location offset. Alternatively, the communication unit 1601 is further configured to receive second frequency-domain bandwidth offset indication information, where the second frequency-domain bandwidth offset indication information indicates the second frequency-domain bandwidth offset.

In the third implementation, the description of each unit is as follows. The communication unit 1601 is configured to receive FH offset information of a frequency-domain resource for channel transmission. The processing unit 1602 is configured to determine, according to the FH offset information, a frequency-domain resource for channel transmission in frequency-domain resources corresponding to at least two time-domain resources. The at least two time-domain resources include at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource. The communication unit 1601 is further configured to perform at least one channel transmission based on the frequency-domain resource for channel transmission in the frequency-domain resources corresponding to the at least two time-domain resources.

In a possible implementation, the FH offset information indicates at least one of a first FH offset, a second FH offset, a third FH offset, or a fourth FH offset. The first FH offset is an FH offset of a frequency-domain resource for channel transmission between a first time-domain resource and a first time-domain resource. The second FH offset is an FH offset of a frequency-domain resource for channel transmission between a first time-domain resource and a second time-domain resource. The third FH offset is an FH offset of a frequency-domain resource for channel transmission between a second time-domain resource and a first time-domain resource. The fourth FH offset is an FH offset of a frequency-domain resource for channel transmission between a second time-domain resource and a second time-domain resource. A frequency-domain resource corresponding to the second time-domain resource is a UL frequency-domain resource, and a channel is used for a UL transmission, or the frequency-domain resource corresponding to the second time-domain resource is a DL frequency-domain resource, and the channel is used for a DL transmission.

In a possible implementation, the processing unit 1602 is further configured to determine, according to the first FH offset, at least one of the second FH offset, the third FH offset, or the fourth FH offset.

In a possible implementation, the at least two time-domain resources include at least one second time-domain resource.

In the fourth implementation, the description of each unit is as follows. The communication unit 1601 is configured to send time-domain resource indication information, where the time-domain resource indication information indicates a time-domain resource location for channel transmission. The communication unit 1601 is further configured to perform at least one channel transmission based on a time-domain resource for channel transmission in at least one time-domain resource. A location of the time-domain resource for channel transmission in the at least one time-domain resource corresponds to the time-domain resource location for channel transmission. The at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

Optionally, the processing unit 1602 is configured to determine the time-domain resource for channel transmission in the at least one time-domain resource.

In a possible implementation, the time-domain resource indication information indicates the time-domain resource location for channel transmission as follows. The time-domain resource indication information indicates a location of a time-domain resource for channel transmission in the first time-domain resource and/or a location of a time-domain resource for channel transmission in a second time-domain resource. A frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

In a possible implementation, the time-domain resource indication information contains first time-domain resource location indication and a first time length. Alternatively, the time-domain resource indication information contains second time-domain resource location indication and a second time length. Alternatively, the time-domain resource indication information contains the first time-domain resource location indication, the first time length, the second time-domain resource location indication, and the second time length. The first time-domain resource location indication indicates a start time-domain resource of the time-domain resource for channel transmission in the first time-domain resource. The second time-domain resource location indication indicates a start time-domain resource of the time-domain resource for channel transmission in the second time-domain resource. The first time length is a length of the time-domain resource for channel transmission in the first time-domain resource. The second time length is a length of the time-domain resource for channel transmission in the second time-domain resource.

In a possible implementation, the communication unit 1601 is further configured to send first time location offset indication information, where the first time location offset indication information indicates a first time location offset, and the first time location offset is a time interval between the start time-domain resource of the time-domain resource for channel transmission in the second time-domain resource and the start time-domain resource of the time-domain resource for channel transmission in the first time-domain resource. Alternatively, the communication unit 1601 is further configured to send first time length offset indication information, where the first time length offset indication information indicates a first time length offset, and the first time length offset is a difference between the second time length and the first time length.

In a possible implementation, the at least one time-domain resource further includes at least one second time-domain resource.

In a possible implementation, the communication unit 1601 is further configured to send second time location offset indication information, where the second time location offset indication information indicates a second time location offset, and the second time location offset is a time interval between the start time-domain resource of the time-domain resource for channel transmission in the first time-domain resource and the start time-domain resource of the time-domain resource for channel transmission in the second time-domain resource. Alternatively, the communication unit 1601 is further configured to send second time length offset indication information, where the second time length offset indication information indicates a second time length offset, and the second time length offset is a difference between the first time length and the second time length.

In the fifth implementation, the description of each unit is as follows. The communication unit 1601 is configured to send frequency-domain resource indication information, where the frequency-domain resource indication information indicates a frequency-domain resource location for channel transmission. The processing unit is configured to perform at least one channel transmission based on a frequency-domain resource for channel transmission in frequency-domain resources respectively corresponding to at least one time-domain resource. A location of the frequency-domain resource for channel transmission in the frequency-domain resources respectively corresponding to the at least one time-domain resource corresponds to the frequency-domain resource location for channel transmission. The at least one time-domain resource includes at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

Optionally, the processing unit 1602 is configured to determine the frequency-domain resource for channel transmission in the frequency-domain resources respectively corresponding to the at least one time-domain resource.

In a possible implementation, the frequency-domain resource indication information indicates the frequency-domain resource location for channel transmission as follows. The frequency-domain resource indication information indicates a location of a frequency-domain resource for channel transmission in the frequency-domain resource corresponding to the first time-domain resource, and/or a location of a frequency-domain resource for channel transmission in a frequency-domain resource corresponding to a second time-domain resource. The frequency-domain resource corresponding to the second time-domain resource is a UL frequency-domain resource, and a channel is used for a UL transmission. Alternatively, the frequency-domain resource corresponding to the second time-domain resource is a DL frequency-domain resource, and the channel is used for a DL transmission.

In a possible implementation, the frequency-domain resource indication information contains first frequency-domain resource location indication and a first frequency-domain resource bandwidth. Alternatively, the frequency-domain resource indication information contains second frequency-domain resource location indication and a second frequency-domain resource bandwidth. Alternatively, the frequency-domain resource indication information contains the first frequency-domain resource location indication, the first frequency-domain resource bandwidth, the second frequency-domain resource location indication, and the second frequency-domain resource bandwidth. The first frequency-domain resource location indication indicates a start frequency-domain resource of the frequency-domain resource for channel transmission in the frequency-domain resource corresponding to the first time-domain resource. The second frequency-domain resource location indication indicates a start frequency-domain resource of the frequency-domain resource for channel transmission in the frequency-domain resource corresponding to the second time-domain resource. The first frequency-domain resource bandwidth is a bandwidth of the frequency-domain resource for channel transmission in the frequency-domain resource corresponding to the first time-domain resource. The second frequency-domain resource bandwidth is a bandwidth of the frequency-domain resource for channel transmission in the frequency-domain resource corresponding to the second time-domain resource.

In a possible implementation, the communication unit 1601 is further configured to send first frequency-domain location offset indication information, where the first frequency-domain location offset indication information indicates a first frequency-domain location offset, and the first frequency-domain location offset is a bandwidth interval between the start frequency-domain resource of the frequency-domain resource for channel transmission in the frequency-domain resource corresponding to the second time-domain resource and the start frequency-domain resource of the frequency-domain resource for channel transmission in the frequency-domain resource corresponding to the first time-domain resource. Alternatively, the communication unit 1601 is further configured to send first frequency-domain bandwidth offset indication information, where the first frequency-domain bandwidth offset indication information indicates a first frequency-domain bandwidth offset, and the first frequency-domain bandwidth offset is a difference between the second frequency-domain resource bandwidth and the first frequency-domain resource bandwidth.

In a possible implementation, the at least one time-domain resource further includes at least one second time-domain resource.

In a possible implementation, the communication unit 1601 is further configured to send second frequency-domain location offset indication information, where the second frequency-domain location offset indication information indicates a second frequency-domain location offset, and the second frequency-domain location offset is a bandwidth interval between the start frequency-domain resource of the frequency-domain resource for channel transmission in the frequency-domain resource corresponding to the first time-domain resource and the start frequency-domain resource of the frequency-domain resource for channel transmission in the frequency-domain resource corresponding to the second time-domain resource. Alternatively, the communication unit 1601 is further configured to send second frequency-domain bandwidth offset indication information, where the second frequency-domain bandwidth offset indication information indicates a second frequency-domain bandwidth offset, and the second frequency-domain bandwidth offset is a difference between the second frequency-domain resource bandwidth and the first frequency-domain resource bandwidth.

In the sixth implementation, the description of each unit is as follows. The communication unit 1601 is configured to send FH offset information of a frequency-domain resource for channel transmission. The processing unit 1602 is configured to perform at least one channel transmission based on a frequency-domain resource for channel transmission in frequency-domain resources corresponding to at least two time-domain resources. A location of the frequency-domain resource for channel transmission in the frequency-domain resources corresponding to the at least two time-domain resources corresponds to the FH offset information of the frequency-domain resource for channel transmission. The at least two time-domain resources include at least one first time-domain resource, a frequency-domain resource corresponding to the first time-domain resource includes a DL frequency-domain resource and a UL frequency-domain resource, and the UL frequency-domain resource corresponding to the first time-domain resource does not overlap in a frequency domain with the DL frequency-domain resource corresponding to the first time-domain resource.

Optionally, the processing unit 1602 is configured to determine the frequency-domain resource for channel transmission in the frequency-domain resources corresponding to the at least two time-domain resources.

In a possible implementation, the FH offset information indicates at least one of a first FH offset, a second FH offset, a third FH offset, or a fourth FH offset. The first FH offset is an FH offset of a frequency-domain resource for channel transmission between a first time-domain resource and a first time-domain resource. The second FH offset is an FH offset of a frequency-domain resource for channel transmission between a first time-domain resource and a second time-domain resource. The third FH offset is an FH offset of a frequency-domain resource for channel transmission between a second time-domain resource and a first time-domain resource. The fourth FH offset is an FH offset of a frequency-domain resource for channel transmission between a second time-domain resource and a second time-domain resource. A frequency-domain resource corresponding to the second time-domain resource is a UL frequency-domain resource, and a channel is used for a UL transmission, or the frequency-domain resource corresponding to the second time-domain resource is a DL frequency-domain resource, and the channel is used for a DL transmission.

In a possible implementation, the at least two time-domain resources include at least one second time-domain resource.

Reference can be made to FIG. 17. FIG. 17 is a schematic structural diagram of a communication apparatus 170 provided in embodiments of the present disclosure. The communication apparatus 170 illustrated in FIG. 17 may be the first communication apparatus, or may be the second communication apparatus.

As illustrated in FIG. 17, the communication apparatus 170 includes at least one processor 1702. The at least one processor 1702 is configured to implement the functions of the communication apparatus, such as a terminal device, a chip system, a chip, etc., in the method provided in embodiments of the present disclosure. The chip system may be composed of a chip, or may include a chip and other devices, etc. The communication apparatus 170 can further include a transceiver 1701. The transceiver 1701 is configured to communicate with other devices or apparatuses via a transmission medium. The processor 1702 uses the transceiver 1701 to send and receive data and/or signaling, and is configured to implement the method in the method embodiment.

Optionally, the communication apparatus 170 can further include at least one memory 1703. The memory 1703 is configured to store program instructions and/or data. The memory 1703 is coupled to the processor 1702. The coupling in embodiments of the present disclosure is indirect coupling or communication connection between apparatuses, units, or modules, may be electrical, mechanical, or otherwise, and is used for information exchange between the apparatuses, the units, or the modules. The processor 1702 may operate in conjunction with the memory 1703. The processor 1702 may execute the program instructions stored in the memory 1703. At least one of the at least one memory can be included in the processor.

The specific connection medium between the transceiver 1701, the processor 1702, and the memory 1703 is not limited in embodiments of the present disclosure. In embodiments of the present disclosure, in FIG. 17, the memory 1703, the processor 1702, and the transceiver 1701 are connected to one another via a bus 1704. The bus is represented by a thick line in FIG. 17. A connection manner between other components is only for schematic illustration and is not limited thereto. The bus may be classified into an address bus, a data bus, a control bus, and the like. For ease of illustration, only one thick line is used in FIG. 17 for illustration, but does not mean that there is only one bus or one type of bus.

In embodiments of the present disclosure, the processor 1702 may be a general-purpose processor, a digital signal processor (DSP), an application-specific integrated circuit (ASIC), a field programmable gate array (FPGA), or other programmable logic devices, discrete gates or transistor logic devices, discrete hardware components, etc. The processor 1702 can be configured to implement or perform the methods, steps, and logic blocks disclosed in embodiments of the present disclosure. The general-purpose processor may be a microprocessor or any conventional processor. The steps of the methods disclosed in embodiments of the present disclosure may be directly implemented by a hardware processor or implemented by a combination of hardware and software modules of the processor.

It can be understood that when the communication apparatus 170 is the communication apparatus 160, the operations performed by the communication unit 1601 can be performed by the transceiver 1701, and the operations performed by the processing unit 1602 can be performed by the processor 1702.

Embodiments of the present disclosure further provide a chip. The chip includes a processor and a memory. The processor may be one or more, and the memory may be one or more. The processor can perform the method and the operations in related implementations by reading instructions and data stored in the memory. Certainly, the chip may have no memory.

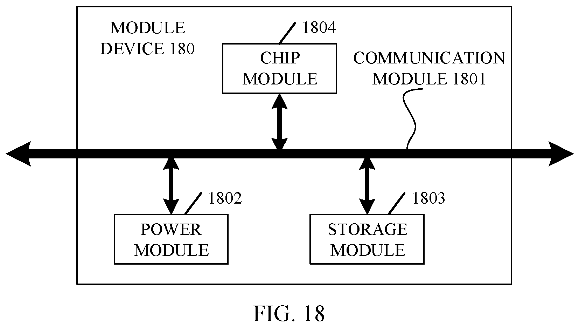

Exemplarily, reference can be made to FIG. 18. FIG. 18 is a schematic structural diagram of a module device provided in embodiments of the present disclosure. The module device 1800 can perform related operations implemented by the communication apparatus in the method embodiments. The module device 1800 includes a communication module 1801, a power module 1802, a storage module 1803, and a chip 1804. The power module 1802 is configured to power the module device. The storage module 1803 is configured to store data and instructions. The communication module 1801 is configured to perform internal communication within the module device or perform communication between the module device and an external device. The chip 1804 is configured to perform the method and the operations in related implementations.

The present disclosure further provides a computer-readable storage medium. The computer-readable storage medium is configured to store computer codes which, when executed on a computer, cause the computer to perform the method in the embodiments.

The present disclosure further provides a computer program product. The computer program product includes computer codes or computer programs which, when executed on a computer, cause the computer to perform the method in the embodiments.

The above are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A communication method, comprising:
receiving time-domain resource indication information, wherein the time-domain resource indication information indicates a time-domain resource location for channel transmission;
determining a time-domain resource for channel transmission in at least one time-domain resource according to the time-domain resource location for channel transmission, wherein the at least one time-domain resource comprises at least one first time-domain resource, a frequency-domain resource corresponding to the first time-domain resource comprises a downlink (DL) frequency-domain resource and an uplink (UL) frequency-domain resource, and the UL frequency-domain resource corresponding to the first time-domain resource does not overlap in a frequency domain with the DL frequency-domain resource corresponding to the first time-domain resource; and
performing at least one channel transmission based on the time-domain resource for channel transmission in the at least one time-domain resource.

2. The method of claim 1, wherein the time-domain resource indication information indicating the time-domain resource location for channel transmission comprises:
the time-domain resource indication information indicating a location of a time-domain resource for channel transmission in the first time-domain resource and/or a location of a time-domain resource for channel transmission in a second time-domain resource, wherein
a frequency-domain resource corresponding to the second time-domain resource is a UL frequency-domain resource, and a channel is used for a UL transmission; or
the frequency-domain resource corresponding to the second time-domain resource is a DL frequency-domain resource, and the channel is used for a DL transmission.

3. The method of claim 2, wherein
the time-domain resource indication information contains first time-domain resource location indication and a first time length; or
the time-domain resource indication information contains second time-domain resource location indication and a second time length; or
the time-domain resource indication information contains the first time-domain resource location indication, the first time length, the second time-domain resource location indication, and the second time length, wherein
the first time-domain resource location indication indicates a start time-domain resource of the time-domain resource for channel transmission in the first time-domain resource, the second time-domain resource location indication indicates a start time-domain resource of the time-domain resource for channel transmission in the second time-domain resource, the first time length is a length of the time-domain resource for channel transmission in the first time-domain resource, and the second time length is a length of the time-domain resource for channel transmission in the second time-domain resource.

4. The method of claim 3, wherein determining the time-domain resource for channel transmission in the at least one time-domain resource according to the time-domain resource location for channel transmission comprises:
determining the time-domain resource for channel transmission in the at least one first time-domain resource according to the start time-domain resource of the time-domain resource for channel transmission in the first time-domain resource and the first time length.

5. The method of claim 4, wherein in a case where the time-domain resource indication information contains the second time-domain resource location indication and the second time length, the method further comprises:
determining the start time-domain resource of the time-domain resource for channel transmission in the first time-domain resource according to the second time-domain resource location indication and a first time location offset; and/or
determining the first time length according to the second time length and a first time length offset.

6. The method of claim 5, further comprising:
receiving first time location offset indication information, wherein the first time location offset indication information indicates the first time location offset; or
receiving first time length offset indication information, wherein the first time length offset indication information indicates the first time length offset.

7. The method of claim 1 or 2, wherein the at least one time-domain resource further comprises at least one second time-domain resource.

8. The method of claim 7, wherein determining the time-domain resource for channel transmission in the at least one time-domain resource according to the time-domain resource location for channel transmission comprises:
determining a time-domain resource for channel transmission in the at least one second time-domain resource according to a start time-domain resource of the time-domain resource for channel transmission in the second time-domain resource and a second time length, wherein
the second time length is a length of the time-domain resource for channel transmission in the second time-domain resource.

9. The method of claim 8, wherein in a case where the time-domain resource indication information contains first time-domain resource location indication and a first time length, the method further comprises:
determining the start time-domain resource of the time-domain resource for channel transmission in the second time-domain resource according to the first time-domain resource location indication and a second time location offset; and/or
determining the second time length according to the first time length and a second time length offset.

10. The method of claim 9, further comprising:
receiving second time location offset indication information, wherein the second time location offset indication information indicates the second time location offset; or
receiving second time length offset indication information, wherein the second time length offset indication information indicates the second time length offset.

11. A communication method, comprising:
receiving frequency-domain resource indication information, wherein the frequency-domain resource indication information indicates a frequency-domain resource location for channel transmission;
determining, according to the frequency-domain resource location for channel transmission, a frequency-domain resource for channel transmission in frequency-domain resources respectively corresponding to at least one time-domain resource, wherein the at least one time-domain resource comprises at least one first time-domain resource, a frequency-domain resource corresponding to the first time-domain resource comprises a downlink (DL) frequency-domain resource and an uplink (UL) frequency-domain resource, and the UL frequency-domain resource corresponding to the first time-domain resource does not overlap in a frequency domain with the DL frequency-domain resource corresponding to the first time-domain resource; and
performing at least one channel transmission based on the frequency-domain resource for channel transmission in the frequency-domain resources respectively corresponding to the at least one time-domain resource.

12. The method of claim 11, wherein the frequency-domain resource indication information indicating the frequency-domain resource location for channel transmission comprises:
the frequency-domain resource indication information indicating a location of a frequency-domain resource for channel transmission in the frequency-domain resource corresponding to the first time-domain resource, and/or a location of a frequency-domain resource for channel transmission in a frequency-domain resource corresponding to a second time-domain resource, wherein
the frequency-domain resource corresponding to the second time-domain resource is a UL frequency-domain resource, and a channel is used for a UL transmission; or
the frequency-domain resource corresponding to the second time-domain resource is a DL frequency-domain resource, and the channel is used for a DL transmission.

13. The method of claim 12, wherein
the frequency-domain resource indication information contains first frequency-domain resource location indication and a first frequency-domain resource bandwidth; or
the frequency-domain resource indication information contains second frequency-domain resource location indication and a second frequency-domain resource bandwidth; or
the frequency-domain resource indication information contains the first frequency-domain resource location indication, the first frequency-domain resource bandwidth, the second frequency-domain resource location indication, and the second frequency-domain resource bandwidth, wherein
the first frequency-domain resource location indication indicates a start frequency-domain resource of the frequency-domain resource for channel transmission in the frequency-domain resource corresponding to the first time-domain resource, the second frequency-domain resource location indication indicates a start frequency-domain resource of the frequency-domain resource for channel transmission in the frequency-domain resource corresponding to the second time-domain resource, the first frequency-domain resource bandwidth is a bandwidth of the frequency-domain resource for channel transmission in the frequency-domain resource corresponding to the first time-domain resource, and the second frequency-domain resource bandwidth is a bandwidth of the frequency-domain resource for channel transmission in the frequency-domain resource corresponding to the second time-domain resource.

14. The method of claim 13, wherein determining, according to the frequency-domain resource location for channel transmission, the frequency-domain resource for channel transmission in the frequency-domain resources respectively corresponding to the at least one time-domain resource comprises:
determining, according to the start frequency-domain resource of the frequency-domain resource for channel transmission in the frequency-domain resource corresponding to the first time-domain resource and the first frequency-domain resource bandwidth, the frequency-domain resource for channel transmission in the frequency-domain resource corresponding to the at least one first time-domain resource.

15. The method of claim 14, wherein in a case where the frequency-domain resource indication information contains the second frequency-domain resource location indication and the second frequency-domain resource bandwidth, the method further comprises:
determining, according to the second frequency-domain resource location indication and a first frequency-domain location offset, the start frequency-domain resource of the frequency-domain resource for channel transmission in the frequency-domain resource corresponding to the first time-domain resource; and/or
determining the first frequency-domain resource bandwidth according to the second frequency-domain resource bandwidth and a first frequency-domain bandwidth offset.

16. The method of claim 15, further comprising:
receiving first frequency-domain location offset indication information, wherein the first frequency-domain location offset indication information indicates the first frequency-domain location offset; or
receiving first frequency-domain bandwidth offset indication information, wherein the first frequency-domain bandwidth offset indication information indicates the first frequency-domain bandwidth offset.

17. The method of claim 11 or 12, wherein the at least one time-domain resource further comprises at least one second time-domain resource.

18. The method of claim 17, wherein determining, according to the frequency-domain resource location for channel transmission, the frequency-domain resource for channel transmission in the frequency-domain resources respectively corresponding to the at least one time-domain resource comprises:
determining, according to a start frequency-domain resource of a frequency-domain resource for channel transmission in a frequency-domain resource corresponding to the second time-domain resource and a second frequency-domain resource bandwidth, the frequency-domain resource for channel transmission in the frequency-domain resource corresponding to the at least one second time-domain resource, wherein
the second frequency-domain resource bandwidth is a bandwidth of the frequency-domain resource for channel transmission in the frequency-domain resource corresponding to the second time-domain resource.

19. The method of claim 18, wherein in a case where the frequency-domain resource indication information contains first frequency-domain resource location indication and a first frequency-domain resource bandwidth, the method further comprises:
determining, according to a first frequency-domain location indication and a second frequency-domain location offset, the start frequency-domain resource of the frequency-domain resource for channel transmission in the frequency-domain resource corresponding to the second time-domain resource; and/or
determining the second frequency-domain resource bandwidth according to the first frequency-domain resource bandwidth and a second frequency-domain bandwidth offset.

20. The method of claim 19, further comprising:
receiving second frequency-domain location offset indication information, wherein the second frequency-domain location offset indication information indicates the second frequency-domain location offset; or
receiving second frequency-domain bandwidth offset indication information, wherein the second frequency-domain bandwidth offset indication information indicates the second frequency-domain bandwidth offset.

21. A communication method, comprising:
receiving frequency hopping (FH) offset information of a frequency-domain resource for channel transmission;
determining, according to the FH offset information, a frequency-domain resource for channel transmission in frequency-domain resources corresponding to at least two time-domain resources, wherein the at least two time-domain resources comprise at least one first time-domain resource, a frequency-domain resource corresponding to the first time-domain resource comprises a downlink (DL) frequency-domain resource and an uplink (UL) frequency-domain resource, and the UL frequency-domain resource corresponding to the first time-domain resource does not overlap in a frequency domain with the DL frequency-domain resource corresponding to the first time-domain resource; and
performing at least one channel transmission based on the frequency-domain resource for channel transmission in the frequency-domain resources corresponding to the at least two time-domain resources.

22. The method of claim 21, wherein the FH offset information indicates at least one of a first FH offset, a second FH offset, a third FH offset, or a fourth FH offset, wherein
the first FH offset is an FH offset of a frequency-domain resource for channel transmission between a first time-domain resource and a first time-domain resource;
the second FH offset is an FH offset of a frequency-domain resource for channel transmission between a first time-domain resource and a second time-domain resource;
the third FH offset is an FH offset of a frequency-domain resource for channel transmission between a second time-domain resource and a first time-domain resource;
the fourth FH offset is an FH offset of a frequency-domain resource for channel transmission between a second time-domain resource and a second time-domain resource; and
a frequency-domain resource corresponding to the second time-domain resource is a UL frequency-domain resource, and a channel is used for a UL transmission; or the frequency-domain resource corresponding to the second time-domain resource is a DL frequency-domain resource, and the channel is used for a DL transmission.

23. The method of claim 22, wherein in a case where the FH offset indicates the first FH offset, the method further comprises:
determining, according to the first FH offset, at least one of the second FH offset, the third FH offset, or the fourth FH offset.

24. The method of claim 21, wherein the at least two time-domain resources comprise at least one second time-domain resource.

25. A communication method, comprising:
send time-domain resource indication information, wherein the time-domain resource indication information indicates a time-domain resource location for channel transmission; and
performing at least one channel transmission based on a time-domain resource for channel transmission in at least one time-domain resource, wherein a location of the time-domain resource for channel transmission in the at least one time-domain resource corresponds to the time-domain resource location for channel transmission, the at least one time-domain resource comprises at least one first time-domain resource, a frequency-domain resource corresponding to the first time-domain resource comprises a downlink (DL) frequency-domain resource and an uplink (UL) frequency-domain resource, and the UL frequency-domain resource corresponding to the first time-domain resource does not overlap in a frequency domain with the DL frequency-domain resource corresponding to the first time-domain resource.

26. The method of claim 25, wherein the time-domain resource indication information indicating the time-domain resource location for channel transmission comprises:
the time-domain resource indication information indicating a location of a time-domain resource for channel transmission in the first time-domain resource and/or a location of a time-domain resource for channel transmission in a second time-domain resource, wherein
a frequency-domain resource corresponding to the second time-domain resource is a UL frequency-domain resource, and a channel is used for a UL transmission; or
the frequency-domain resource corresponding to the second time-domain resource is a DL frequency-domain resource, and the channel is used for a DL transmission.

27. The method of claim 26, wherein
the time-domain resource indication information contains first time-domain resource location indication and a first time length; or
the time-domain resource indication information contains second time-domain resource location indication and a second time length; or
the time-domain resource indication information contains the first time-domain resource location indication, the first time length, the second time-domain resource location indication, and the second time length, wherein
the first time-domain resource location indication indicates a start time-domain resource of the time-domain resource for channel transmission in the first time-domain resource, the second time-domain resource location indication indicates a start time-domain resource of the time-domain resource for channel transmission in the second time-domain resource, the first time length is a length of the time-domain resource for channel transmission in the first time-domain resource, and the second time length is a length of the time-domain resource for channel transmission in the second time-domain resource.

28. The method of claim 27, further comprising:
send first time location offset indication information, wherein the first time location offset indication information indicates a first time location offset, and the first time location offset is a time interval between the start time-domain resource of the time-domain resource for channel transmission in the second time-domain resource and the start time-domain resource of the time-domain resource for channel transmission in the first time-domain resource; or
send first time length offset indication information, wherein the first time length offset indication information indicates a first time length offset, and the first time length offset is a difference between the second time length and the first time length.

29. The method of claim 25 or 26, wherein the at least one time-domain resource further comprises at least one second time-domain resource.

30. The method of claim 29, further comprising:
send second time location offset indication information, wherein the second time location offset indication information indicates a second time location offset, and the second time location offset is a time interval between a start time-domain resource of the time-domain resource for channel transmission in the first time-domain resource and a start time-domain resource of the time-domain resource for channel transmission in the second time-domain resource; or
send second time length offset indication information, wherein the second time length offset indication information indicates a second time length offset, and the second time length offset is a difference between a first time length and a second time length.

31. A communication method, comprising:
send frequency-domain resource indication information, wherein the frequency-domain resource indication information indicates a frequency-domain resource location for channel transmission; and
performing at least one channel transmission based on a frequency-domain resource for channel transmission in frequency-domain resources respectively corresponding to at least one time-domain resource, wherein a location of the frequency-domain resource for channel transmission in the frequency-domain resources respectively corresponding to the at least one time-domain resource corresponds to the frequency-domain resource location for channel transmission, the at least one time-domain resource comprises at least one first time-domain resource, a frequency-domain resource corresponding to the first time-domain resource comprises a downlink (DL) frequency-domain resource and an uplink (UL) frequency-domain resource, and the UL frequency-domain resource corresponding to the first time-domain resource does not overlap in a frequency domain with the DL frequency-domain resource corresponding to the first time-domain resource.

32. The method of claim 31, wherein the frequency-domain resource indication information indicating the frequency-domain resource location for channel transmission comprises:
the frequency-domain resource indication information indicating a location of a frequency-domain resource for channel transmission in the frequency-domain resource corresponding to the first time-domain resource, and/or a location of a frequency-domain resource for channel transmission in a frequency-domain resource corresponding to a second time-domain resource, wherein
the frequency-domain resource corresponding to the second time-domain resource is a UL frequency-domain resource, and a channel is used for a UL transmission; or
the frequency-domain resource corresponding to the second time-domain resource is a DL frequency-domain resource, and the channel is used for a DL transmission.

33. The method of claim 32, wherein
the frequency-domain resource indication information contains first frequency-domain resource location indication and a first frequency-domain resource bandwidth; or
the frequency-domain resource indication information contains second frequency-domain resource location indication and a second frequency-domain resource bandwidth; or
the frequency-domain resource indication information contains the first frequency-domain resource location indication, the first frequency-domain resource bandwidth, the second frequency-domain resource location indication, and the second frequency-domain resource bandwidth, wherein
the first frequency-domain resource location indication indicates a start frequency-domain resource of the frequency-domain resource for channel transmission in the frequency-domain resource corresponding to the first time-domain resource, the second frequency-domain resource location indication indicates a start frequency-domain resource of the frequency-domain resource for channel transmission in the frequency-domain resource corresponding to the second time-domain resource, the first frequency-domain resource bandwidth is a bandwidth of the frequency-domain resource for channel transmission in the frequency-domain resource corresponding to the first time-domain resource, and the second frequency-domain resource bandwidth is a bandwidth of the frequency-domain resource for channel transmission in the frequency-domain resource corresponding to the second time-domain resource.

34. The method of claim 33, further comprising:
send first frequency-domain location offset indication information, wherein the first frequency-domain location offset indication information indicates a first frequency-domain location offset, and the first frequency-domain location offset is a bandwidth interval between the start frequency-domain resource of the frequency-domain resource for channel transmission in the frequency-domain resource corresponding to the second time-domain resource and the start frequency-domain resource of the frequency-domain resource for channel transmission in the frequency-domain resource corresponding to the first time-domain resource; or
send first frequency-domain bandwidth offset indication information, wherein the first frequency-domain bandwidth offset indication information indicates a first frequency-domain bandwidth offset, and the first frequency-domain bandwidth offset is a difference between the second frequency-domain resource bandwidth and the first frequency-domain resource bandwidth.

35. The method of claim 31 or 32, wherein the at least one time-domain resource further comprises at least one second time-domain resource.

36. The method of claim 35, further comprising:
send second frequency-domain location offset indication information, wherein the second frequency-domain location offset indication information indicates a second frequency-domain location offset, and the second frequency-domain location offset is a bandwidth interval between a start frequency-domain resource of the frequency-domain resource for channel transmission in the frequency-domain resource corresponding to the first time-domain resource and a start frequency-domain resource of the frequency-domain resource for channel transmission in the frequency-domain resource corresponding to the second time-domain resource; or
send second frequency-domain bandwidth offset indication information, wherein the second frequency-domain bandwidth offset indication information indicates a second frequency-domain bandwidth offset, and the second frequency-domain bandwidth offset is a difference between a second frequency-domain resource bandwidth and a first frequency-domain resource bandwidth.

37. A communication method, comprising:
send frequency hopping (FH) offset information of a frequency-domain resource for channel transmission; and
performing at least one channel transmission based on a frequency-domain resource for channel transmission in frequency-domain resources corresponding to at least two time-domain resources, wherein a location of the frequency-domain resource for channel transmission in the frequency-domain resources corresponding to the at least two time-domain resources corresponds to the FH offset information of the frequency-domain resource for channel transmission, the at least two time-domain resources comprise at least one first time-domain resource, a frequency-domain resource corresponding to the first time-domain resource comprises a downlink (DL) frequency-domain resource and an uplink (UL) frequency-domain resource, and the UL frequency-domain resource corresponding to the first time-domain resource does not overlap in a frequency domain with the DL frequency-domain resource corresponding to the first time-domain resource.

38. The method of claim 37, wherein the FH offset information indicates at least one of a first FH offset, a second FH offset, a third FH offset, or a fourth FH offset, wherein
the first FH offset is an FH offset of a frequency-domain resource for channel transmission between a first time-domain resource and a first time-domain resource;
the second FH offset is an FH offset of a frequency-domain resource for channel transmission between a first time-domain resource and a second time-domain resource;
the third FH offset is an FH offset of a frequency-domain resource for channel transmission between a second time-domain resource and a first time-domain resource;
the fourth FH offset is an FH offset of a frequency-domain resource for channel transmission between a second time-domain resource and a second time-domain resource; and
a frequency-domain resource corresponding to the second time-domain resource is a UL frequency-domain resource, and a channel is used for a UL transmission; or the frequency-domain resource corresponding to the second time-domain resource is a DL frequency-domain resource, and the channel is used for a DL transmission.

39. The method of claim 38, wherein the at least two time-domain resources comprise at least one second time-domain resource.

40. A communication apparatus, comprising:
a unit configured to perform the method of any one of claims 1 to 10; or
a unit configured to perform the method of any one of claims 11 to 20; or
a unit configured to perform the method of any one of claims 21 to 24; or
a unit configured to perform the method of any one of claims 25 to 30; or
a unit configured to perform the method of any one of claims 31 to 36; or
a unit configured to perform the method of any one of claims 37 to 39.

41. A communication apparatus, comprising:
a transceiver configured to receive or sent a signal; and
a processor configured to execute computer-executable instructions stored in a memory, to perform the method of any one of claims 1 to 39.

42. A communication system, comprising a first communication apparatus and a second communication apparatus, wherein
the first communication apparatus is configured to perform the method of any one of claims 1 to 10, and the second communication apparatus is configured to perform the method of any one of claims 25 to 30; or
the first communication apparatus is configured to perform the method of any one of claims 11 to 20, and the second communication apparatus is configured to perform the method of any one of claims 31 to 36; or
the first communication apparatus is configured to perform the method of any one of claims 21 to 24, and the second communication apparatus is configured to perform the method of any one of claims 37 to 39.

43. A chip, comprising a logic circuit and an interface, wherein the logic circuit and the interface are coupled to each other, the interface is configured to input and/or output code instructions, and the logic circuit is configured to execute the code instructions, to cause the chip to perform the method of any one of claims 1 to 39.

44. A module device, comprising:
a power module configured to power the module device;
a storage module configured to store data and instructions;
a communication module configured to perform internal communication within the module device or perform communication between the module device and an external device; and
a chip module configured to perform the method of any one of claims 1 to 39.

45. A computer-readable storage medium comprising instructions which, when executed on a communication apparatus, cause the communication apparatus to perform the method of any one of claims 1 to 39.
